(19) Europäisches Patentamt
European Patent Office
Office européen des brevets

(11) Veröffentlichungsnummer : **0 437 184 B1**

(12) # EUROPÄISCHE PATENTSCHRIFT

(45) Veröffentlichungstag der Patentschrift :
**20.04.94 Patentblatt 94/16**

(51) Int. Cl.$^5$ : **D06P 1/382,** D06P 3/66, C09B 67/00

(21) Anmeldenummer : **90811025.7**

(22) Anmeldetag : **21.12.90**

(54) **Verfahren zum Trichromiefärben oder -bedrucken von cellulosehaltigen textilen Fasermaterialien.**

(30) Priorität : **09.01.90 CH 57/90**
**21.02.90 CH 567/90**
**09.05.90 CH 1569/90**

(43) Veröffentlichungstag der Anmeldung :
**17.07.91 Patentblatt 91/29**

(45) Bekanntmachung des Hinweises auf die Patenterteilung :
**20.04.94 Patentblatt 94/16**

(84) Benannte Vertragsstaaten :
**BE CH DE DK ES FR GB IT LI**

(56) Entgegenhaltungen :
**EP-A- 0 126 830**
**EP-A- 0 145 655**
**EP-A- 0 360 735**
**PATENT ABSTRACTS OF JAPAN,vol. 013, no. 442 () 01 Oktober 1989 & JP-A-01 170661 (MITSUBISHI KASEI CORP) 05 Juli 1989**

(56) Entgegenhaltungen :
**PATENT ABSTRACTS OF JAPAN,vol. 013, no. 442 () 06 Oktober 1989 & JP-A-01 170665 (MITSUBISHI KASEI CORP) 05 Juli 1989**
**PATENT ABSTRACTS OF JAPAN,vol. 013, no. 442 () 03 Oktober 1989 & JP-A-01 170664 (MITSUBISHI KASEI CORP) 05 Juli 1989**
**PATENT ABSTRACTS OF JAPAN,vol. 013, no. 442 () 03 Oktober 1989 & JP-A-01 170663 (MITSUBISHI KASEI CORP) 05 Juli 1989**

(73) Patentinhaber : **CIBA-GEIGY AG**
**Klybeckstrasse 141**
**CH-4002 Basel (CH)**

(72) Erfinder : **Luttringer, Jean Pierre, Dr.**
**Rue du Jura 6**
**F-68170 Rixheim (FR)**
Erfinder : **Tzikas, Athanassios, Dr**
**Unt. Rütschetenweg 36**
**CH-4133 Pratteln (CH)**
Erfinder : **Galafassi, Pierre, Dr.**
**Rue Phillippe 17**
**F-68220 Hegenheim (FR)**

EP 0 437 184 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Trichromiefärben oder -bedrucken von cellulosehaltigen textilen Fasermaterialien mit mindestens einem rot- oder rotbraunfärbenden Reaktivfarbstoff, mindestens einem gelb- oder orangefärbenden Reaktivfarbstoff und mindestens einem blaufärbenden Reaktivfarbstoff.

Die der vorliegenden Erfindung zugrundeliegende Aufgabe war es, ein Verfahren zum Färben oder Bedrucken von cellulosehaltigen textilen Fasermaterialien mit zur Kombination nach dem Trichromie-Prinzip geeigneten Reaktivfarbstoffen zu finden.

Es wurde nun gefunden, dass man diese Aufgabe erfindungsgemäss durch das nachfolgend beschriebene Verfahren lösen kann. Die so erhaltenen Färbungen und Drucke genügen den gestellten Aufgaben. Insbesondere zeichnen sich die erhaltenen Färbungen durch einen gleichmässigen Farbaufbau bei gleichzeitiger Nuancenkonstanz in verschiedenen Konzentrationen und eine sehr gute Kombinierbarkeit aus, und die erhaltenen Drucke zeichnen sich dadurch aus, dass keine Zweiseitigkeit auftritt, d.h. der erhaltene Druck ist nuancenkonstant.

Gegenstand der vorliegenden Erfindung ist ein Verfahren zum Trichromiefärben oder -bedrucken von cellulosehaltigen textilen Fasermaterialien, welches dadurch gekennzeichnet ist, dass man diese Fasermaterialien aus wässriger Flotte mit mindestens einem rot- oder rotbraunfärbenden Farbstoff der Formel

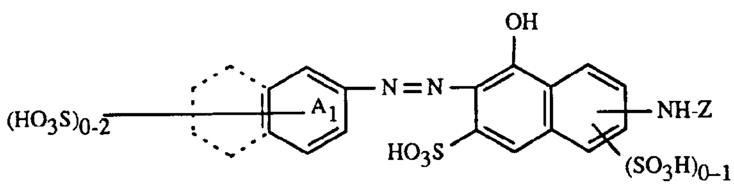

(1)

oder

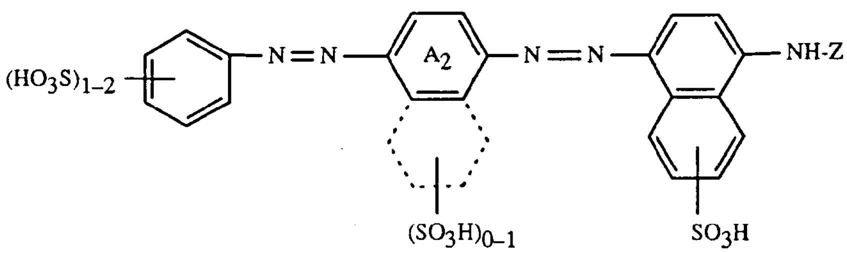

(2)

und mindestens einem gelb- oder orangefärbenden Farbstoff der Formel

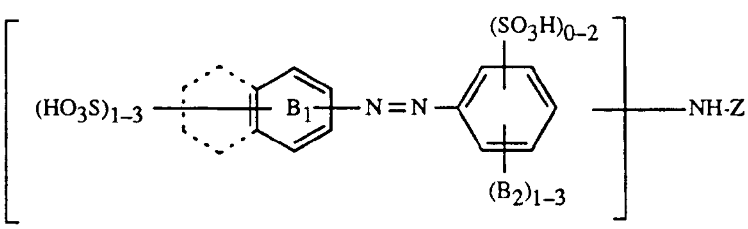

(3)

oder

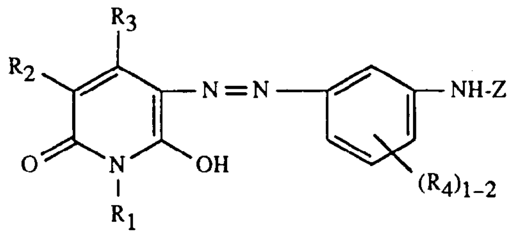

(4)

und mindestens einem blaufärbenden Farbstoff der Formel

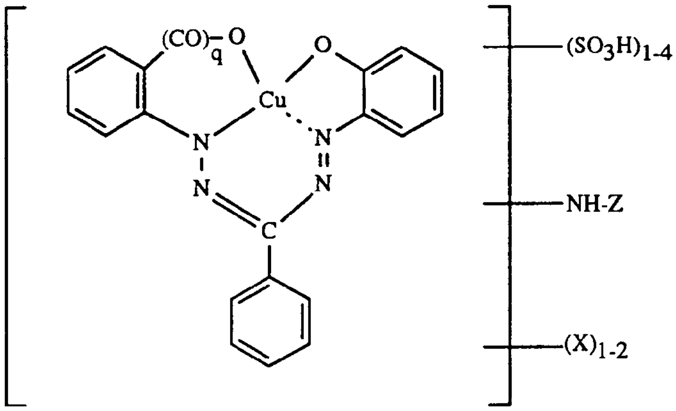

(5),

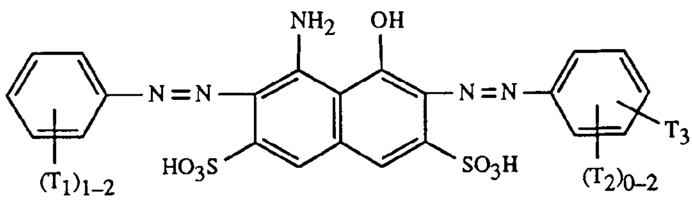

(6)

oder

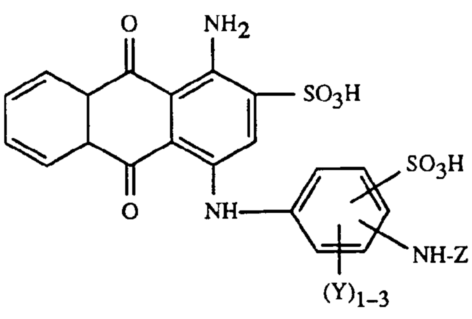

(7)

färbt oder bedruckt, worin in den Formeln (1), (2) und (3) die Benzringe $A_1$, $A_2$ und $B_1$ weitersubstituiert sein können, die Benzringe $A_1$, $A_2$ und $B_1$ zusammen mit den gestrichelt gezeichneten ankondensierten Benzringen für alternativ mögliche Naphthalinringe stehen, $(B_2)_{1-3}$ für 1 bis 3 Substituenten $B_2$ unabhängig voneinander, aus der Gruppe Wasserstoff, $C_1$-$C_4$-Alkyl, $C_1$-$C_4$-Alkoxy, $C_2$-$C_4$-Alkanoylamino, Halogen, Nitro, Cyan, Trifluormethyl, Sulfamoyl, Carbamoyl, Amino, Hydroxy, Carboxy, Sulfomethyl, Sulfo oder Ureido steht, $R_1$ und $R_3$, unabhängig voneinander, Wasserstoff, $C_1$-$C_4$-Alkyl oder Phenyl, und $R_2$ Wasserstoff, Cyan, Carbamoyl oder Sulfomethyl ist, $(R_4)_{1-2}$ für 1 bis 2 Substituenten $R_4$, unabhängig voneinander, aus der Gruppe Wasserstoff und Sulfo steht, $(X)_{1-2}$ für 1 bis 2 Substituenten X, unabhängig voneinander, aus der Gruppe Wasserstoff, $C_1$-$C_4$-

Alkyl, $C_1$-$C_4$-Alkoxy, Halogen, $C_2$-$C_4$-Alkanoylamino, Hydroxy, Carboxy, Sulfo, Cyan oder Nitro steht, q die Zahl 0 oder 1 ist, $(T_1)_{1-2}$ für 1 bis 2 Substituenten $T_1$, unabhängig voneinander, aus der Gruppe Sulfo und -$SO_2$-Z' steht, wobei Z' β-Sulfatoäthyl, β-Halogenäthyl oder Vinyl ist, $(T_2)_{1-2}$ für 1 bis 2 Substituenten $T_2$, unabhängig voneinander, aus der Gruppe Wasserstoff und Sulfo steht, $T_3$ der Rest -NH-Z oder -CONH-$(CH_2)_{2-3}$-$SO_2$-Z' ist, und Z' die angegebene Bedeutung hat, $(Y)_{1-3}$ für 1 bis 3 Substituenten Y, unabhängig voneinander, aus der Gruppe Wasserstoff und $C_1$-$C_4$-Alkyl steht, und Z in den Formeln (1) bis (7) einen 2-Chlor-s-triazin-6-yl-Rest, der in 4-Stellung eine gegebenenfalls substituierte Aminogruppe enthält, oder einen 2,4-Difluor-5-chlor-pyrimidin-6-yl-Rest bedeutet.

Unter Trichromie ist die additive Farbmischung passend gewählter gelb- bzw. orange-, rot- bzw. rotbraun- und blaufärbender Reaktivfarbstoffe zu verstehen, mit denen fast jeder gewünschte Farbton des sichtbaren Farbspektrums durch geeignete Wahl der Mengenverhältnisse der Reaktivfarbstoffe eingestellt werden kann.

Das erfindungsgemässe Verfahren zeichnet sich insbesondere durch eine hervorragende Kombinierbarkeit der Reaktivfarbstoffe in kontinuierlichen Färbeverfahren und Druckverfahren aus, vorzugsweise für die als pad-dry-pad-steam und pad-thermofix bekannten Verfahren sowie für das Kaltverweilverfahren.

Mit dem erfindungsgemässen Verfahren treten weder Endenungleichheit beim Foulardieren noch Migrationsprobleme beim Trocknen auf. Ferner zeichnet sich das erfindungsgemässe Verfahren durch eine ausgezeichnete Konturenschärfe aus, und dadurch dass beim Druck keine Zweiseitigkeit auftritt.

Die Benzinringe $A_1$, $A_2$ und $B_1$ können durch für Azofarbstoffe übliche Substituenten substituiert sein. Als Beispiele seien genannt:

Alkylgruppen mit 1 bis 8, vorzugsweise 1 bis 4 Kohlenstoffatomen, wie z.B. Methyl, Aethyl, Propyl, Isopropyl, Butyl, Isobutyl, sek.-Butyl, tert.-Butyl, Hexyl, Octyl, wobei die Alkylgruppen z.B. durch Sulfo substituiert sein können, Alkoxygruppen mit 1 bis 8 Kohlenstoffatomen, insbesondere 1 bis 4 Kohlenstoffatomen, wie z.B. Methoxy, Aethoxy, Propoxy, Isopropoxy, Butoxy, Acylaminogruppen wie Alkanoylaminogruppen mit 2 bis 8 Kohlenstoffatomen und Alkoxycarbonylaminogruppen mit 2 bis 8 Kohlenstoffatomen, wie z.B. Acetylamino, Propionylamino, Methoxycarbonylamino, Aethoxycarbonylamino, Alkanoylgruppen mit 2 bis 8, vorzugsweise 2 bis 4 Kohlenstoffatomen, wie z.B. Acetyl, Propionyl, Butyryl oder Isobutyryl, $C_5$-$C_7$-Cycloalkylcarbonyl, wie z.B. Cyclohexylcarbonyl, im Cycloalkylring durch $C_1$-$C_4$-Alkyl, wie z.B. Methyl, Aethyl, Propyl, Butyl, oder Halogen, wie z.B. Fluor, Chlor, Brom, Sulfo oder Sulfato, substituiertes $C_5$-$C_7$-Cycloalkylcarbonyl, Benzoyl, im Phenylring durch $C_1$-$C_4$-Alkyl, wie z.B. Methyl, Aethyl, Propyl, Butyl oder Halogen, wie z.B. Fluor, Chlor, Brom, Sulfo oder Sulfato, substituiertes Benzoyl, Benzoylamino, Amino, Mono- oder Dialkylamino mit 1 bis 8 Kohlenstoffatomen im Alkylrest, Phenylamino, Alkoxycarbonyl mit 1 bis 8 Kohlenstoffatomen im Alkoxyrest, $C_5$-$C_7$-Cycloalkylaminosulfonyl, Nitro, Cyan, Trifluormethyl, Halogen, wie Fluor, Brom oder insbesondere Chlor, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, $C_1$-$C_8$-Alkylaminosulfonyl, gegebenenfalls im Phenylring durch $C_1$-$C_4$-Alkyl, Halogen wie z.B. Fluor, Chlor, Brom, Sulfo oder Sulfato substituiertes Phenylsulfonyl, Carboxy, Sulfomethyl, Sulfo, Sulfato, Thiosulfato sowie Phenyl, Naphthyl, Phenoxy, Phenoxysulfonyl, Phenylaminosulfonyl, wobei die angegebenen Phenyl- oder Naphthylreste durch die oben angegebenen Substituenten weitersubstituiert sein können. Gegebenenfalls können je zwei benachbarte Substituenten der genannten Ringsysteme einen weiteren ankondensierte Phenylring bilden, wobei ein solcher möglicher ankondensierter Phenylring in den Formeln (1), (2) und (3) gestrichelt gezeichnet ist.

Als $C_1$-$C_4$-Alkyl kommt für $B_2$, $R_1$, $R_3$, X und Y in den Formeln (3), (4), (5) und (7) z.B. in Betracht:

Methyl, Aethyl, Propyl, Isopropyl, Butyl, Isobutyl, sek.-Butyl oder tert.-Butyl, sowie die entsprechenden Reste, die z.B. durch Hydroxy, Alkoxy mit 1 bis 4 Kohlenstoffatomen, wie z.B. Methoxy, Aethoxy, Propoxy, Isopropoxy oder Butoxy, Sulfo, Sulfato, Thiosulfato, Cyan oder Halogen, wie z.B. Fluor, Chlor oder Brom, und Phenyl substituiert sind, wobei der Phenylrest durch die oben für $B_1$ angegebenen Substituenten weitersubstituiert sein kann. Vorzugsweise sind die Alkylreste $B_2$, $R_1$, $R_3$, X und Y unsubstituiert.

Als Halogen kommt für $B_2$ und X in den Formeln (3) und (5) Fluor oder Brom und insbesondere Chlor in Betracht.

Als $C_{2-4}$-Alkanoylamino kommt für $B_2$ und X in den Formeln (3) und (5) beispielsweise Acetylamino-, Propionylamino- oder Butyrylaminorest in Betracht.

Als Alkoxyreste kommen für $B_2$ und X in den Formeln (3) und (5) beispielsweise der Methoxy-, Aethoxy-, Propoxy-, Isopropoxy-, Butoxy-, sek.-Butoxy-, Isobutoxy- oder tert.-Butoxyrest in Betracht.

Als Aminoreste in 4-Stellung des 2-Chlor-s-triazin-6-yl-Restes Z in den Formeln (1) bis (7) kommen z.B. in Betracht:

-$NH_2$, Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino-und N-Alkyl-N-arylaminogruppen, ferner Aminogruppen, die heterocyclische Reste enthalten, welche weitere ankondensierte

carbocyclische Ringe aufweisen können, und Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Rest sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechsgliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Resten sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, $C_1$-$C_4$-Alkyl, $C_1$-$C_4$-Alkoxy, Hydroxy-$C_1$-$C_4$-alkoxy, $C_1$-$C_4$-Alkanoylaminogruppen, wie Acetylamino, Benzoylamino, Ureido, Hydroxy, Carboxy, Sulfomethyl, Sulfo oder weitere faserreaktive Reste. Als Beispiele für derartige Aminogruppen seinen genannt: $-NH_2$, Methylamino, Aethylamino, Propylamino, Isopropylamino, Butylamino, Hexylamino, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylamino, N-Aethyl-N-phenylamino, N-β-Hydroxyäthyl-N-phenylamino, 2-,3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino und Piperazino.

Als weitere faserreaktive Reste die an die in 4-Stellung des s-Triazins gebundene Aminogruppe gebunden sind, kommen z.B. in Betracht: ein Rest der Formel

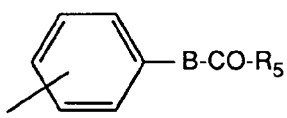

(8a)

worin B die direkte Bindung oder eine Rest $-(CH_2)_{n'}-$ oder $-O-(CH_2)_{n'}-$ ; n'=1, 2,3,4,5 oder 6; $R_5$ ein Rest der Formel

$-N(V)-(alk)-CH_2-SO_2-Z'$ (8b)

$-N(R')-(alk)(T)-CH_2-SO_2-Z'$ (8c)

$-N(R')-(CH_2)_p-O-(CH_2)_q-SO_2-Z'$ (8d)

$-N(R')-(alk')-NH-(alk')-SO_2-Z'$ (8e)

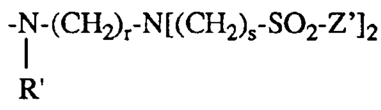

(8f)

oder

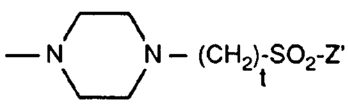

(8g)

worin R' Wasserstoff oder $C_1$-$C_6$-Alkyl ist, alk einen Alkylenrest mit 1 bis 7 Kohlenstoffatomen darstellt, T Wasserstoff, Halogen, Hydroxy, Sulfato, Carboxy, Cyano, $C_1$-$C_4$-Alkanoyloxy, $C_1$-$C_4$-Alkoxycarbonyl, Carbamoyl oder einen Rest $-SO_2-Z'$ bedeutet, V Wasserstoff, gegebenenfalls substituiertes $C_1$-$C_4$-Alkyl oder einen Rest der Formel

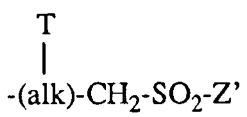

(8h)

worin (alk) die zuvor angegebene Bedeutung hat, alk' unabhängig voneinander Polymethylenreste mit 2 bis 6 C-Atomen, Z' die angegebene Bedeutung hat, p, q, r und t unabhängig voneinander je die Zahl 1,2,3,4,5 oder 6 bedeuten und s die Zahl 2,3,4,5 oder 6 ist;
oder ein Rest der Formel

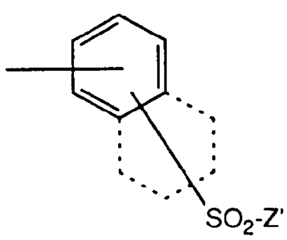

(9)

worin der Benzol- oder Naphthalinring weitere Substituenten enthalten kann, z.B die für die Benzringe $A_1$, $A_2$ und $B_1$ angegebenen Substituenten, und worin Z' die angegebene Bedeutung hat; oder worin die in 4-Stellung gebundene Aminogruppe zusammen mit einem faserreaktiven Rest ein Rest der Formel (8b) bis (8g) ist.

Der Rest B enthält 1 bis 6, vorzugsweise 1 bis 4 Kohlenstoffatome; Beispiele für B sind: Methylen, Aethylen, Propylen, Butylen, Methylenoxy, Aethylenoxy, Propylenoxy und Butylenoxy. Falls B einen Rest $-O-(CH_2)_{n'}$ darstellt, ist B durch das Sauerstoffatom an den Benzolring gebunden. Vorzugsweise ist B die direkte Bindung.

Falls T ein Rest $-SO_2-Z'$ und R' Wasserstoff ist, hat der Rest der Formel (8c) vorzugsweise die Formel

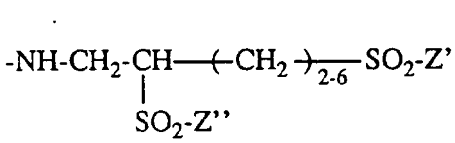

(8i)

worin Z' und Z'' unabhängig voneinander β-Sulfatoäthyl, β-Halogenäthyl oder Vinyl ist. Eine wichtige Formelvariante dieses Restes ist:

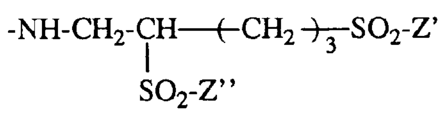

(8j)

worin Z' = Z" ist, wobei Z' bzw. Z" die oben angegebene Bedeutung hat; insbesonere ist Z' bzw. Z" β-Sulfatoäthyl, β-Chloräthyl oder Vinyl.

Als β-Halogenäthyl kommt für Z' bzw. Z" insbesondere β-Chloräthyl in Betracht.

Ein bevorzugter Rest der Formel (8a) entspricht der Formel

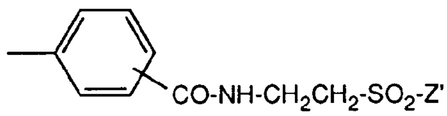

Ein bevorzugter Rest der Formeln (8b) bis (8g) entspricht den Formeln

$$-NH(CH_2)_{m_2}SO_2\text{-}Z'$$

$$-NH(CH_2)_2O(CH_2)_2SO_2\text{-}Z'$$

oder

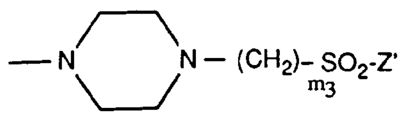

worin $m_2$ und $m_3$ = 2,3,4,5 oder 6, insbesondere 2 oder 3 ist und Z' Vinyl, β-Chloräthyl oder β-Sulfatoäthyl ist.

Bevorzugte Ausführungsformen des erfindungsgemässen Verfahrens sind dadurch gekennzeichnet, dass man

a) als Farbstoff der Formel (1) einen Farbstoff der Formel

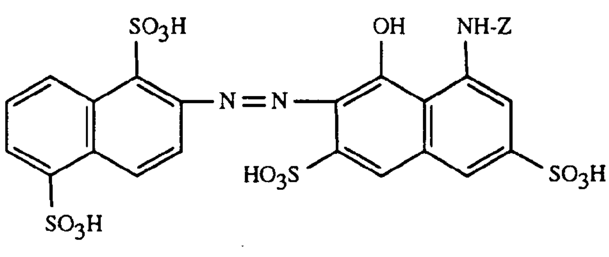

(10)

oder

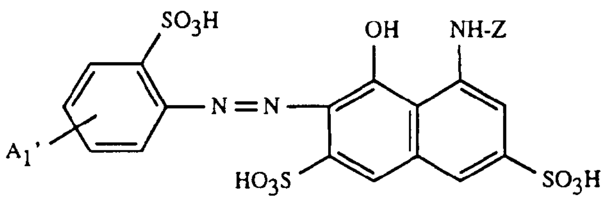

(11),

worin Z die oben angegebene Bedeutung hat, und $A_1'$ Wasserstoff, $C_1$-$C_4$-Alkyl, $C_1$-$C_4$-Alkoxy, Halogen oder $C_2$-$C_4$-Alkanoylamino ist, zusammen mit einem Farbstoff der Formeln (3) oder (4) und (5), (6) oder

(7) verwendet; oder

b) als Farbstoff der Formel (2) einen Farbstoff der Formel

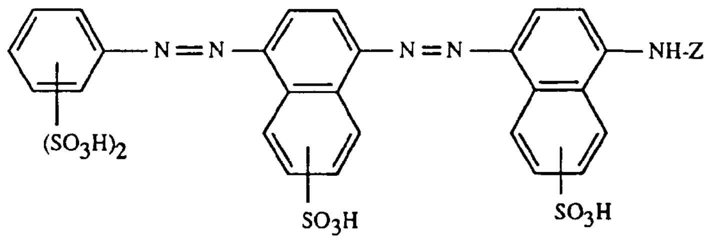

(12),

worin Z die oben angegebene Bedeutung hat, zusammen mit einem Farbstoff der Formeln (3) oder (4) und (5), (6) oder (7) verwendet; oder

c) als Farbstoff der Formel (3) einen Farbstoff der Formel

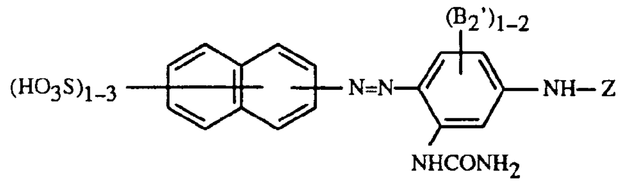

(13),

worin $(B_2')_{1-2}$ für 1 bis 2 Substituenten $B_2'$ aus der Gruppe Wasserstoff, Halogen, Nitro, Cyan, Trifluormethyl, Sulfamoyl, Carbamoyl, $C_{1-4}$-Alkyl, $C_{1-4}$-Alkoxy, Amino, Acetylamino, Ureido, Hydroxy, Carboxy, Sulfomethyl und Sulfo unabhäbgig voneinander steht, und Z die oben angegebene Bedeutung hat, zusammen mit einem Farbstoff der Formel (1) oder (2) und (5), (6) oder (7) verwendet; oder

d) als Farbstoff der Formel (5) einen Farbstoff der Formel

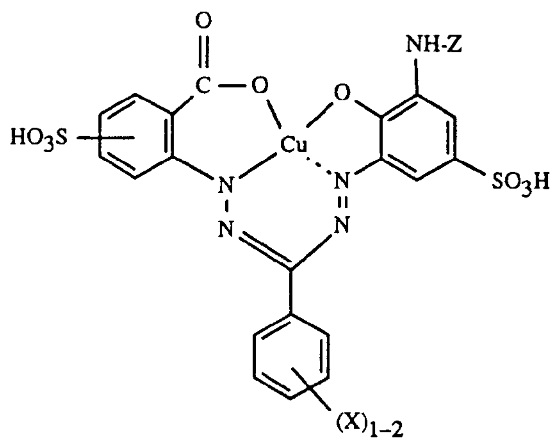

(14),

worin $(X)_{1-2}$ für 1 bis 2 Substituenten X, unabhängig voneinander, aus der Gruppe Wasserstoff, Halogen, $C_1$-$C_4$-Alkyl, $C_1$-$C_4$-Alkoxy, $C_2$-$C_4$-Alkanoylamino, Hydroxy, Carboxy und Sulfo steht, und Z die oben angegebene Bedeutung hat, oder einen Farbstoff der Formel

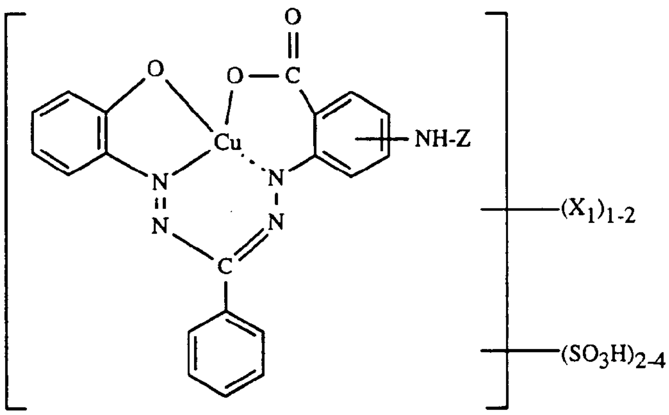

(15),

worin $(X_1)_{1-2}$ für 1 bis 2 Substituenten $X_1$, unabhängig voneinander, aus der Gruppe Wasserstoff, Halogen, $C_1$-$C_4$-Alkyl, $C_1$-$C_4$-Alkoxy, $C_2$-$C_4$-Alkanoylamino, Hydroxy und Carboxy steht, und Z die oben angegebene Bedeutung hat zusammen mit einem Farbstoff der Formel (1) oder (2) und (3) oder (4) verwendet; oder

e) als Farbstoff der Formel (6) einen Farbstoff der Formel

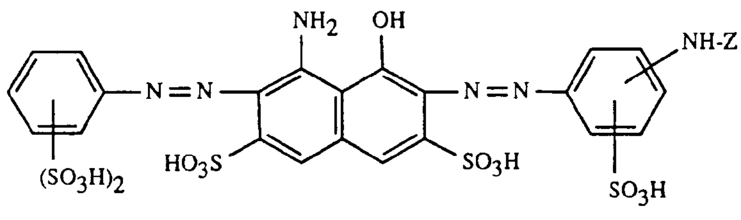

(16)

oder

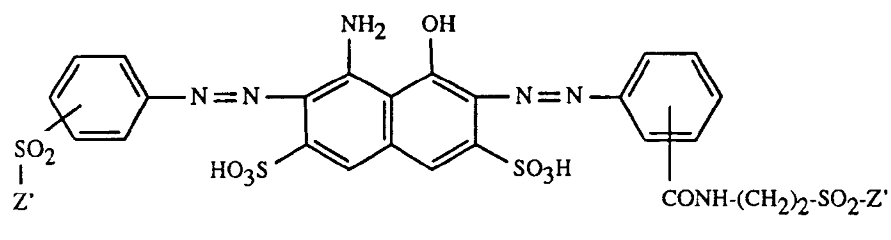

(17)

zusammen mit einem Farbstoff der Formel (1) oder (2) und (3) oder (4) verwendet, worin Z und Z' die angegebenen Bedeutungen haben; oder

f) als Farbstoff der Formel (7) einen Farbstoff der Formel

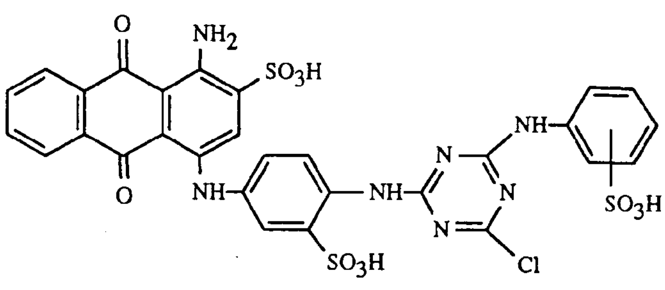

(18)

oder

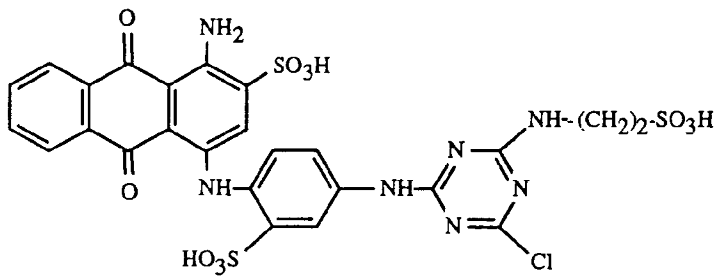

(19),

worin die Sulfogruppe in Formel (18) in ortho-, meta- oder para-Stellung zur -NH-Gruppe stehen kann.

Eine besonders bevorzugte Ausführungsform des erfindungsgemässen Verfahrens ist dadurch gekennzeichnet, dass man Farbstoffe der Formeln (1) bis (7) und (10) bis (16) verwendet, worin Z ein Rest der Formel

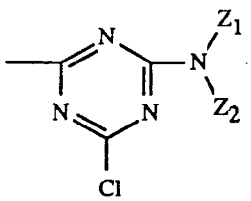

(20)

ist, und $Z_1$ und $Z_2$ unabhängig voneinander Wasserstoff, gegebenenfalls substituiertes $C_1$-$C_6$-Alkyl, gegebenenfalls substituiertes $C_5$-$C_7$-Cycloalkyl oder gegebenenfalls substituiertes Phenyl oder Naphthyl bedeuten, insbesondere worin $Z_1$ und $Z_2$ unabhängig voneinander Wasserstoff, $C_1$-$C_6$-Alkyl, das durch Hydroxy, $C_1$-$C_4$-Alkoxy, Hydroxy-$C_1$-$C_4$-alkoxy, Halogen, Sulfo, Sulfato oder einem faserreaktiven Rest, wie z.B. die unter Formel (8a) und (9)angegebenen Reste, substituiert sein kann, $C_5$-$C_7$-Cycloalkyl, das durch $C_1$-$C_4$-Alkyl substituiert sein kann, Phenyl oder Naphthyl, das durch $C_1$-$C_4$-Alkyl, $C_1$-$C_4$-Hydroxyalkyl, $C_1$-$C_4$-Alkoxy, Halogen, $C_2$-$C_4$-Alkanoylamino, Sulfo oder einen weiteren faserreaktiven Rest, wie z.B. die in Formel (8a) und (9) angegebenen Reste substituiert sein kann, oder worin -$N(Z_1)Z_2$ einen Rest der Formel (8b) bis (8g) bedeuten, oder Morpholino, Piperidino oder Piperazino ist.

Eine ganz besonders bevorzugte Ausführungsform des erfindungsgemässen Verfahrens ist dadurch gekennzeichnet, dass an als rot- oder rotbraunfärbenden Farbstoff einen Farbstoff der Formeln (10), (11) oder (12), als gelb- oder orangefärbenden Farbstoff einen Farbstoff der Formel (13) und als blaufärbenden Farbstoff einen Farbstoff der Formeln (14), (15), (16) oder (17) verwendet.

Wichtige Ausführungsformen des erfindungsgemässen Verfahrens sind dadurch gekennzeichnet, dass man

f) als Farbstoff der Formel (10) einen Farbstoff der Formel

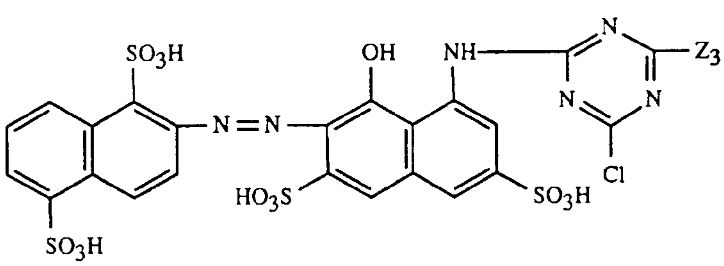

(21),

worin $Z_3$ Morpholino, N-Methylanilino, N-Aethylanilino oder -NH-$(CH_2)_2$-O-$(CH_2)_2$-$SO_2$-Z', wobei Z' β-Sulfatoäthyl, β-Chloräthyl oder Vinyl ist, verwendet; oder

g) als Farbstoff der Formel (11) den Farbstoff der Formel

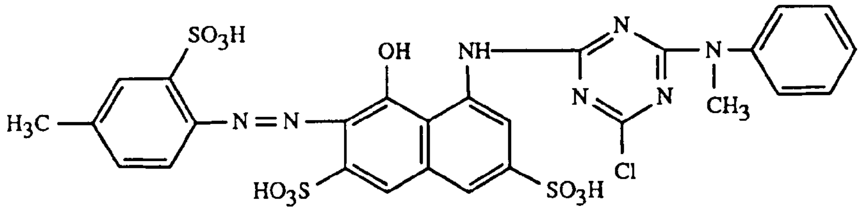

(22)

verwendet; oder

h) als Farbstoff der Formel (12) einen Farbstoff der Formel

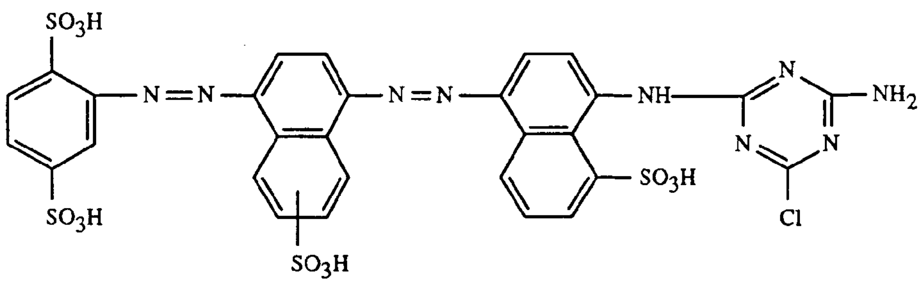

(23)

verwendet; oder

i) als Farbstoff der Formel (13) einen Farbstoff der Formel

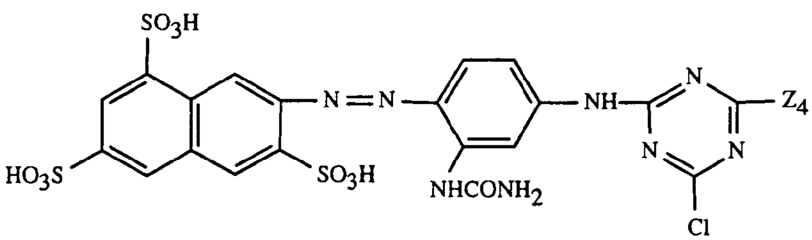

(24)

worin $Z_4$ β-Sulfoäthylamino, β-Sulfatoäthylamino, Morpholino oder $-NH-(CH_2)_2-O-(CH_2)_2-OH$ ist, verwendet; oder

j) als Farbstoff der Formel (14) den Farbstoff der Formel

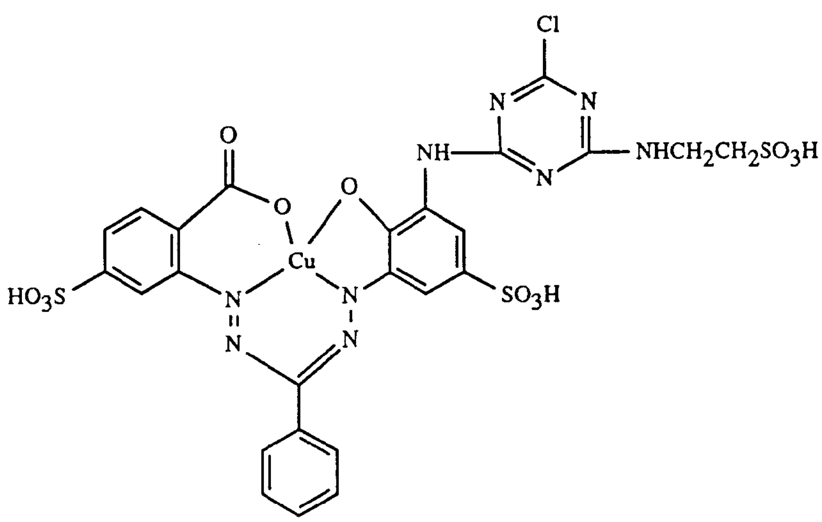

(25),

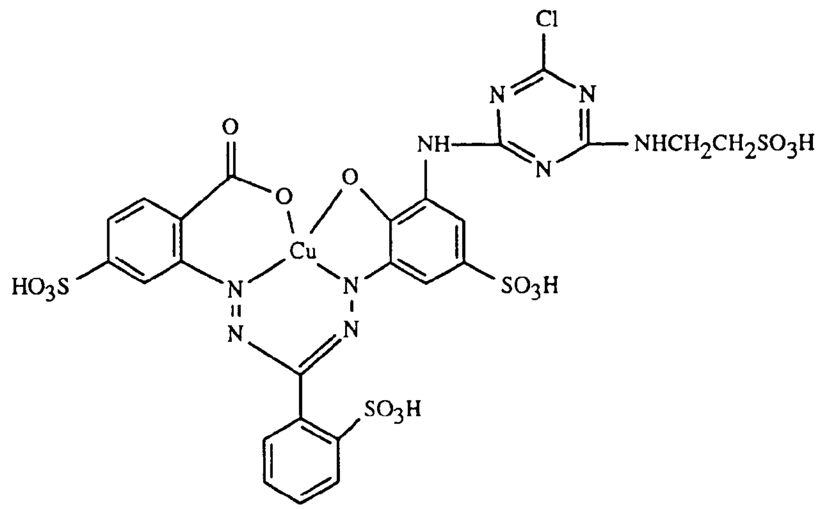

(26),

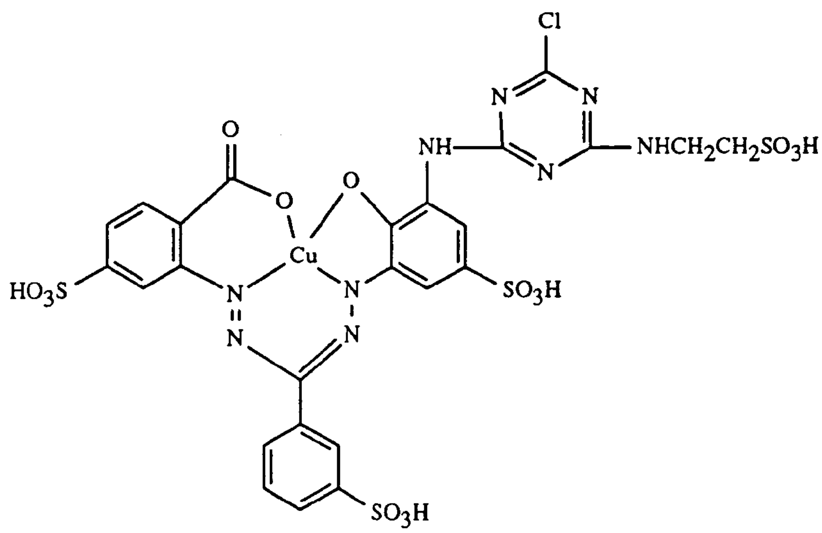

(27),

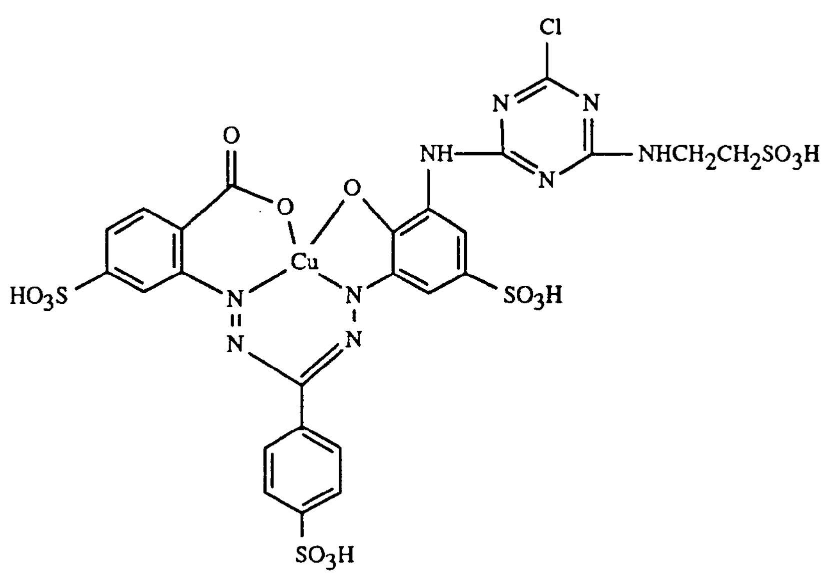

(28),

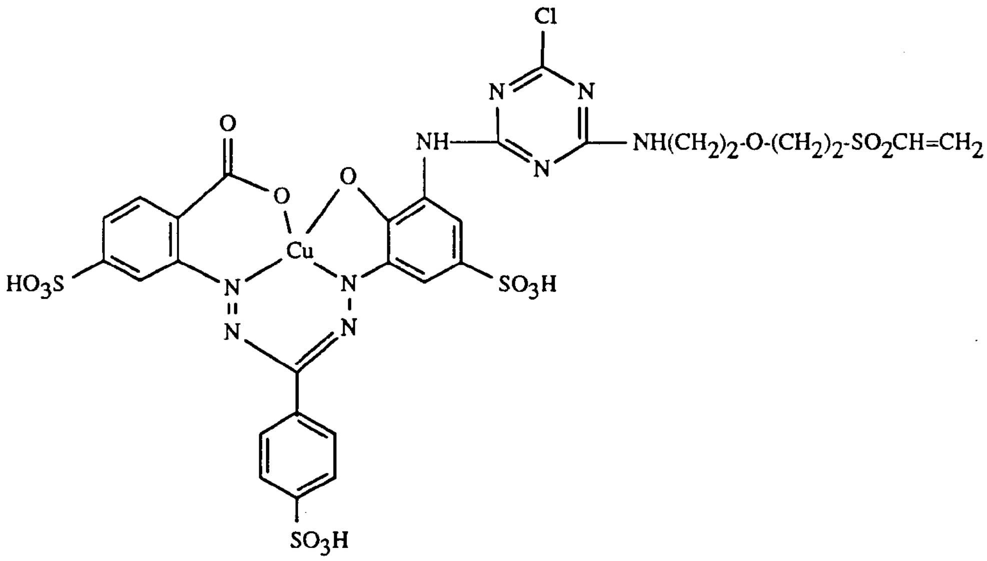

(29),

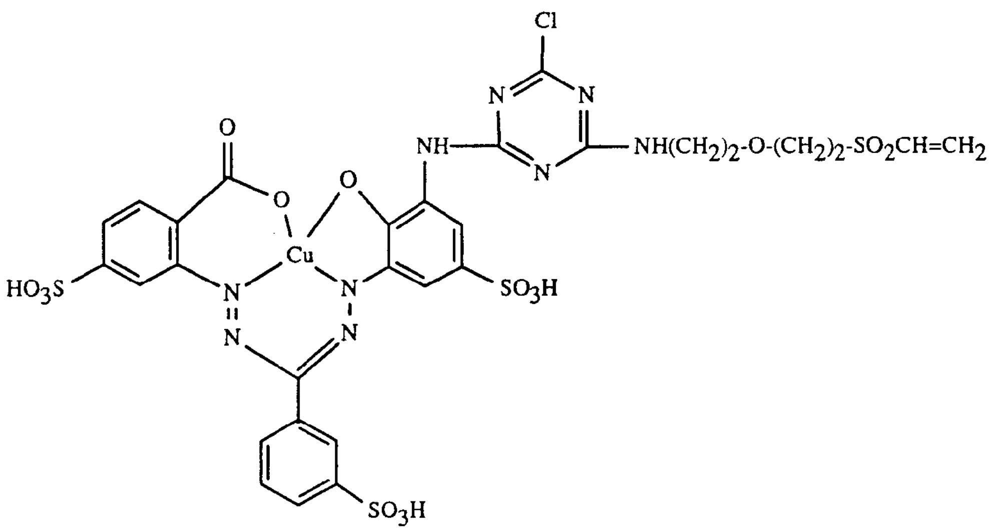

(30)

oder

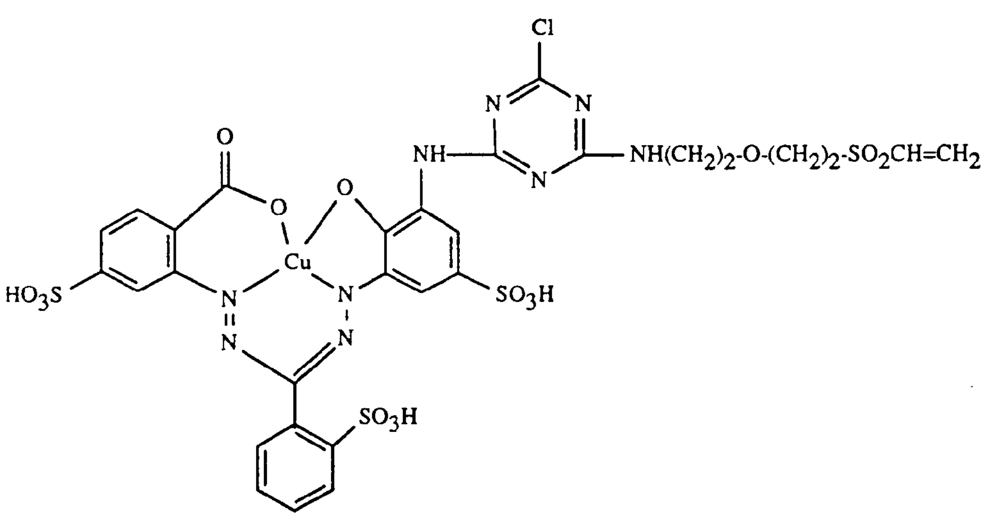

(31)

verwendet; oder

k) als Farbstoff der Formel (15) den Farbstoff der Formel

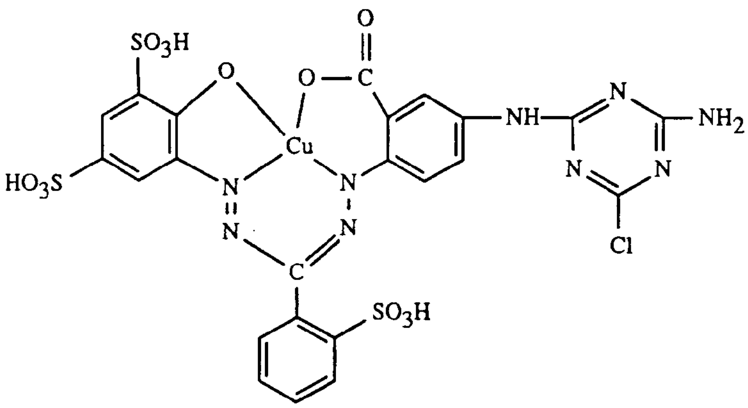

(32)

verwendet; oder

l) als Farbstoff der Formel (16) den Farbstoff der Formel

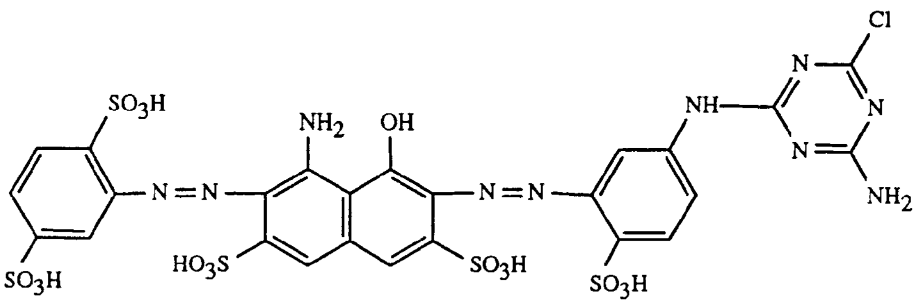

(33)

verwendet; oder

m) als Farbstoff der Formel (17) einen Farbstoff der Formel

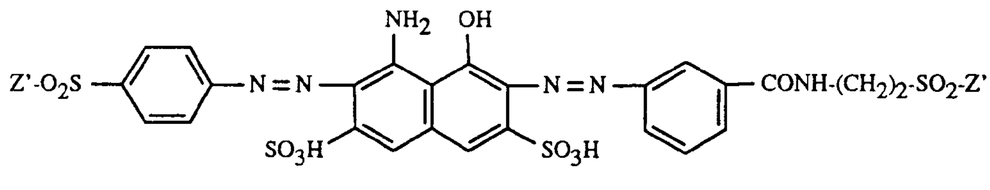

(34)

verwendet, worin Z' β-Sulfatoäthyl, β-Chloräthyl oder Vinyl ist.

Eine besonders wichtige Ausführungsform des erfindungsgemässen Verfahrens ist dadurch gekennzeichnet, dass man einen rot- oder rotbraunfärbenden Farbstoff der Formeln (21), (22) oder (23) zusammen mit einem gelb- oder orangefärbenden Farbstoff der Formel (24) und einem blaufärbenden Farbstoff der Formel (25), (26), (27),(28), (29), (30), (31), (32), (33) oder (34) verwendet.

Eine ganz besonders wichtige Ausführungsform des erfindungsgemässen Verfahrens ist dadurch gekennzeichnet, dass man einen der gelbfärbenden Farbstoffe der Formeln

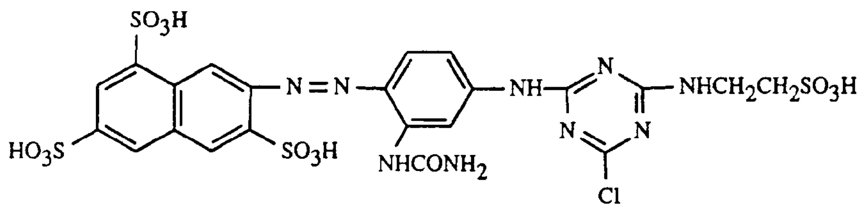

(35),

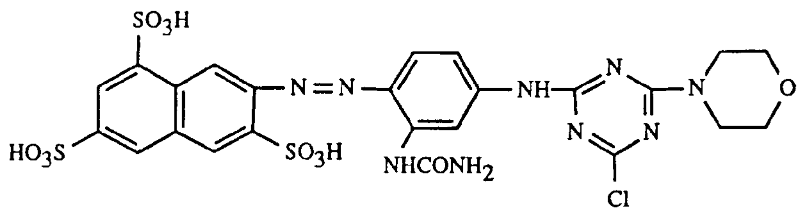

(36),

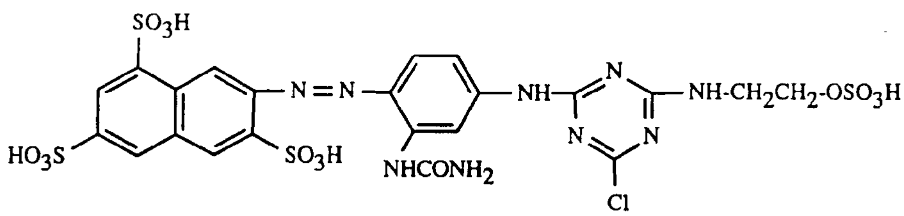

(37)

oder

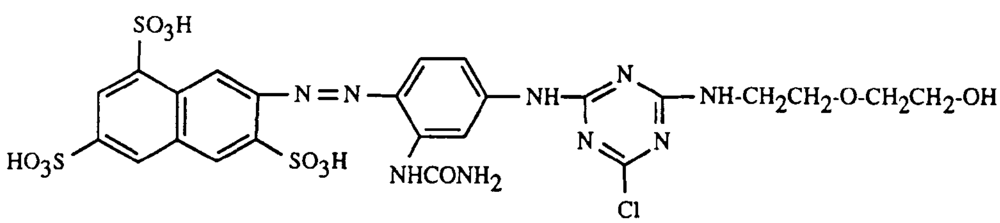

(38)

zusammen mit einem der rotfärbenden Farbstoffe der Formeln

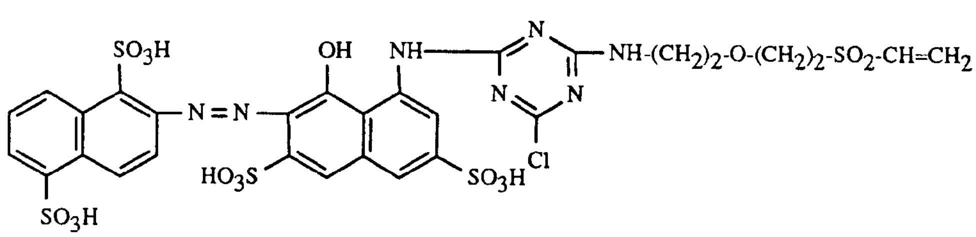

(39),

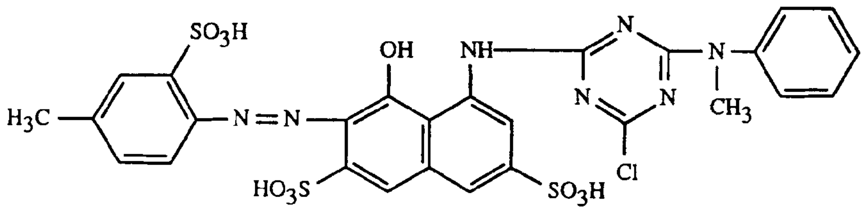

(22),

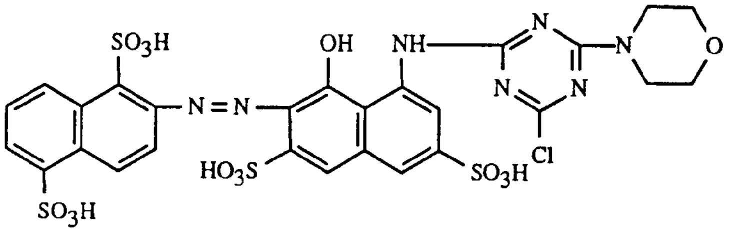

(40),

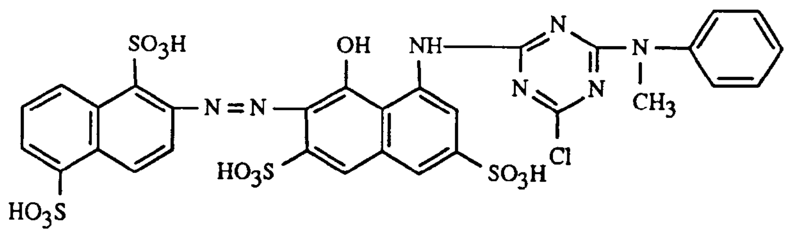

(41),

oder

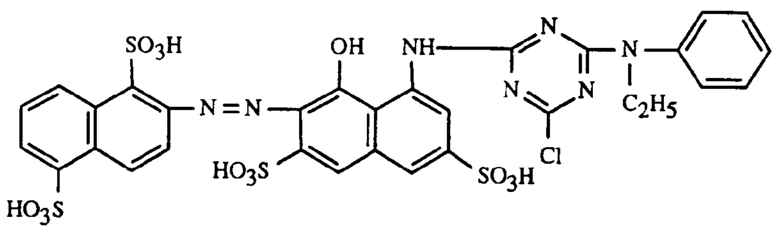

(42)

und dem blaufärbenden Farbstoff der Formel

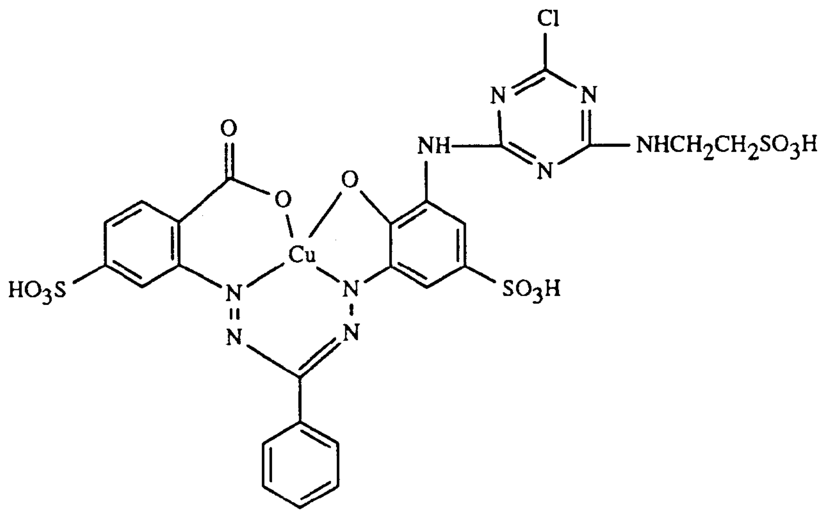

(25)

oder

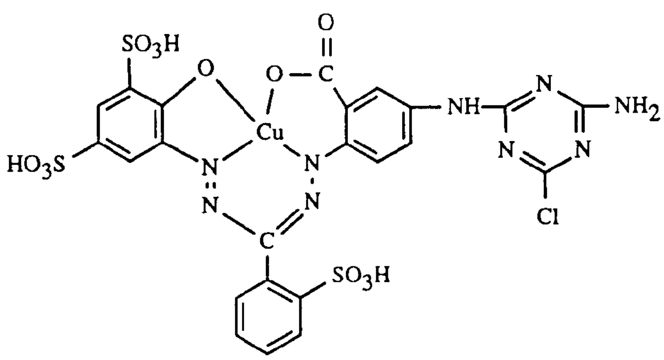

(32)

verwendet.

Die allerwichtigsten Ausführungsformen des erfindungsgemässen Verfahrens sind dadurch gekennzeichnet, dass man

n) eine Trichromie-Mischung der Farbstoffe der Formeln

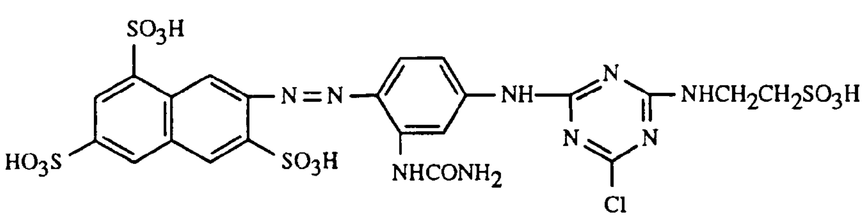

(35)

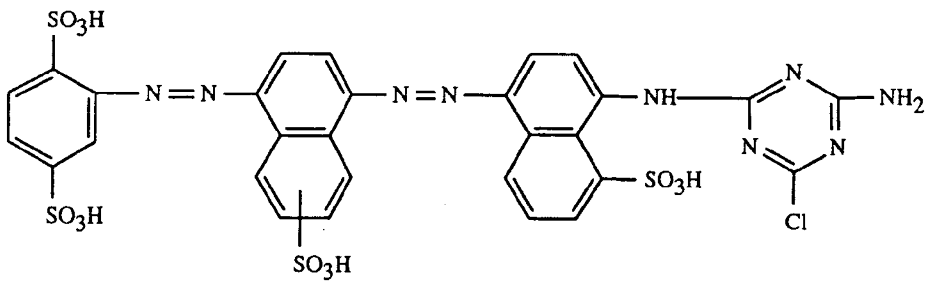

(23)

und

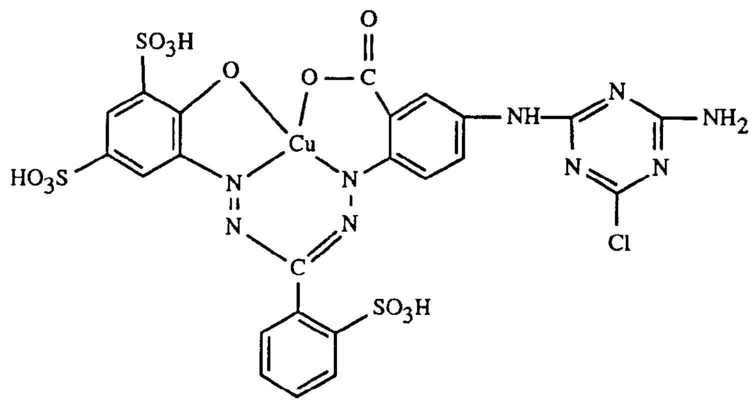

(32)

verwendet; oder

o) eine Trichromie-Mischung der Farbstoffe der Formeln

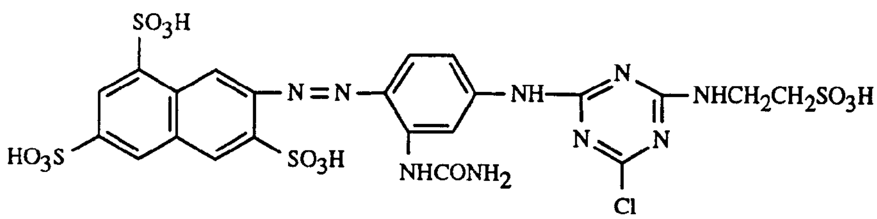

(35)

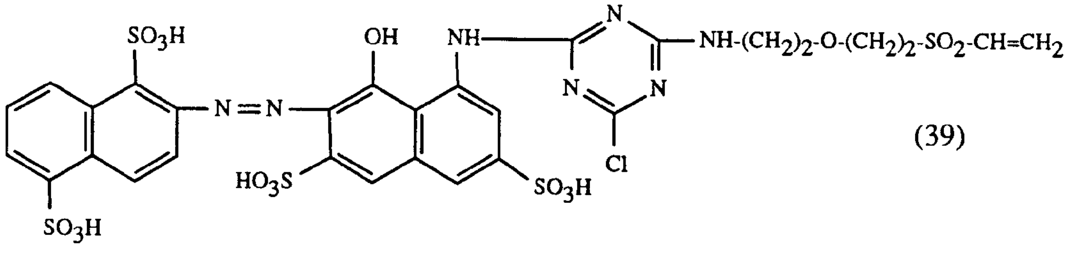

(39)

oder

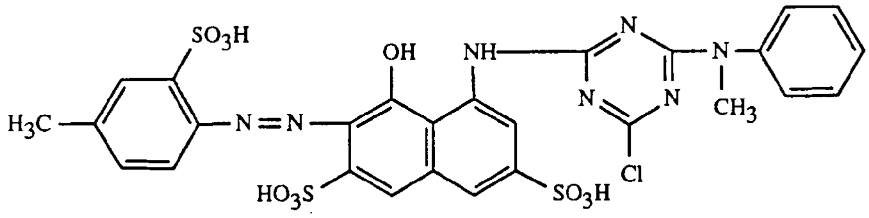

(22)

und

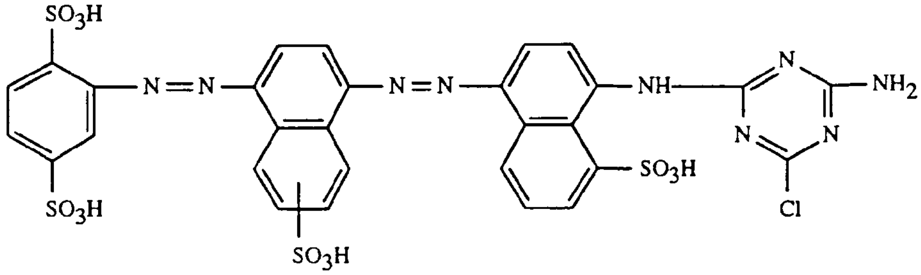

(23)

oder

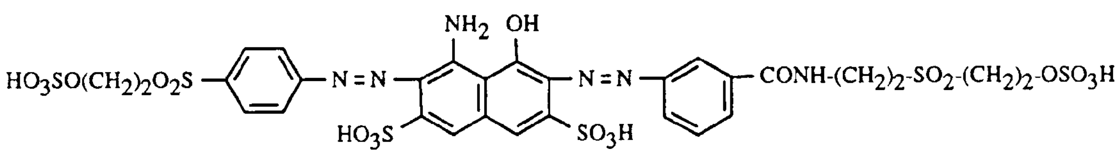

(43)

verwendet.

Nach dem erfindungsgemässen Verfahren wird das Färben in wässrigem Medium vorgenommen. Die Ausführung gestaltet sich so, dass die Reaktivfarbstoffe der angegebenen Formeln bei einer Temperatur zwischen 15 und 100°C, insbesondere zwischen 20 und 80°C, aufgetragen werden und in Gegenwart alkalisch wirkender Mittel auf dem Fasermaterial mittels Dämpfen fixiert werden, oder thermofixiert werden oder dass die Reaktivfarbstoffe der angegebenen Formeln bei einer Temperatur zwischen 15 und 100°C, insbesondere zwischen 20 und 80°C, in Gegenwart alkalisch wirkender Mittel aufgetragen werden und dann bei einer Temperatur zwischen 10 und 40°C, insbesondere zwischen 20 und 30°C, während 4 bis 80 Stunden, insbesondere während 8 bis 48 Stunden gelagert werden.

Nach dem erfindungsgemässen Verfahren wird das Bedrucken mit einer wässrigen Druckpaste vorgenommen. Die Ausführung gestaltet sich beispielsweise so, dass eine Druckpaste enthaltend ausser einem oder mehreren der genannten Reaktivfarbstoffe mindestens ein alkalisch wirkendes Mittel, wie z.B. $Na_2CO_3$, $NaHCO_3$, $CH_3COONa$, gegebenenfalls einen Lösungsvermittler, wie z.B. Harnstoff, ε-Caprolactam, Dicyandiamid, ein Verdickungsmittel, insbesondere Alginate, wie z.B. Natriumalginat, und Emulsionen bzw. Halbemulsionen und gegebenenfalls ein Oxydationsmittel wie z.B. das Natriumsalz der m-Nitrobenzolsulfonsäure. Die Menge Fixiersalz richtet sich z.B. nach Art und Anzahl der faserreaktiven Reste. Eine Menge von 30 bis 90 g, insbesondere 50-70 g Fixieralkali pro kg Druckpaste hat sich als günstig erwiesen. Als Lösungvermittler wird z.B. eine Menge von 0 bis 200 g pro kg Druckpaste verwendet. Als Verdickungsmittel hat sich eine z.B. 5%-ige Alginatverdickung mit ca. 500 g pro kg Durckpaste als günstig erwiesen. Die Menge des Oxidationsmittels liegt im Bereich zwischen 10 und 20 g pro kg Druckpaste. Nach dem Bedrucken wird die Ware gegebenenfalls nach Trocknung zur Fixierung der Farbstoffe auf der Faser gedämpft oder thermofixiert.

Die Farbstoff-Fixierung auf reinen Cellulosefasern erfolgt nach üblichen Verfahren, wobei Fixierzeit und Fixiertemperatur vom Fasermaterial und der Reaktivität der eingesetzten Reaktivfarbstoffe abhängen. Zur Er-

zielung einer gleichmässigen und optimalen Farbstoff-Fixierung genügen im allgemeinen Dämpfzeiten im Sattdampf zwischen 3 und 15 Minuten bei 100 bis 105°C. Durch Hochtemperatur-Dämpfen bzw. Trockenhitze-Dämpfen wird während 20 Sekunden bis 8 Minuten bei 105-190°C fixiert. Insbesondere werden die Reaktivfarbstoffe mit Dampf bei einer Temperatur von 100°C bis 150°C während 30 Sekunden bis 12 Minuten, insbesondere während 2 bis 10 Minuten, fixiert.

Die Fertigstellung der Drucke erfolgt durch Spülung in heissem und/oder kaltem Wasser und gegebenenfalls anschliessendem Waschen in Gegenwart eines handelsüblichen Waschmittels, nachfolgendem Spülen in Wasser und Trocknen.

Das erfindungsgemässe Verfahren dient zur Herstellung von Färbungen oder Drucken von cellulosehaltigen Fasermaterialien. Als cellulosehaltige Fasermaterialien kommen beispielsweise natürliche Cellulosefaser, wie Baumwolle, Leinen und Hanf, sowie Zellstoff und regenerierte Cellulose in Betracht.

Das erfindungsgemässe Verfahren zum Färben zeichnet sich dadurch aus, dass das Fasermaterial mit einer Farbstofflösung oder -suspension imprägniert wird, oder foulardiert wird, wobei die Flottenaufnahme zwischen 50 und 120 Gewichtsprozent, insbesondere zwischen 50 und 80 Gewichtsprozent liegt. Die Foulardflotte kann ausser der Farbstoffkomponente bereits die nötige Menge Fixieralkali enthalten. Vorzugsweise enthält die Foulardflotte bei pad-dry-pad-steam und pad-thermofix Verfahren kein Fixieralkali. Im Anschluss an das Auftragen der farbgebenden Komponente kann das Material als Nachbehandlung z.B. getrocknet werden bis zu einer Restfeuchte von ca. 5 bis 20, insbesondere 5 bis 15 Gewichtsprozent und anschliessend kann mit einer Flotte die das Fixieralkali enthält erneut imprägniert werden und daran schliesst sich die Fixierung durch Dämpfen der Ware an.

Eine weitere Ausführungsform des erfindungsgemässen Verfahrens zum Färben ist dadurch gekennzeichnet, dass man das Fasermaterial mit einer Farbstofflösung oder -suspension, die bereits das Fixieralkali sowie gegebenenfalls weitere Zusätze enthält, imprägniert, dann die Ware trocknet und anschliessend bei einer Temperatur von 110° bis 220°C thermofixiert. Die Dauer der Thermofixierung richtet sich nach der Thermofixiertemperatur, d.h. je höher die Temperatur ist, desto kürzer kann die Dauer sein. Für die Thermofixierung bei 110 bis 140°C hat sich eine Dauer von 2 bis 4 Minuten als günstig erwiesen. Für die Thermofixierung bei 160 bis 220°C hat sich eine Dauer von 20 bis 90 Sekunden als günstig erwiesen.

Eine weitere Ausführungsform des erfindungsgemässen Verfahrens zum Färben ist dadurch gekennzeichnet, dass man das Fasermaterial mit einer Farbstofflösung oder -suspension, die bereits das Fixieralkali sowie gegebenenfalls weitere Zusätze enthält, imprägniert, dann die Ware luftdicht, z.B. in Plastikhüllen, verpackt und bei einer Temperatur zwischen 10 und 40°C, insbesondere zwischen 20 und 30°C, während 4 bis 80 Stunden, insbesondere während 8 bis 48 Stunden, lagert. Dabei hängt es vom Material, der Art des Reaktivfarbstoffes und der gewünschten Farbstärke ab, in welchem Temperaturintervall man am vorteilhaftesten arbeitet.

Bevorzugte Auführungsformen des erfindungsgemässen Verfahrens zum Färben sind dadurch gekennzeichnet, dass man

- das Fasermaterial mit einer Farbstofflösung oder -suspension imprägniert, anschliessend das Fasermaterial mit einer Lösung des Fixieralkalis imprägniert und dann die Ware dämpft; oder
- das Fasermaterial mit einer Flotte, welche die Farbstofflösung oder -suspension und das Fixieralkali enthält, imprägniert und dann die Ware dämpft oder thermofixiert; oder
- das Fasermaterial mit einer Farbstofflösung oder -suspension imprägniert, trocknet, mit einer Lösung, welche das Fixieralkali enthält, erneut imprägniert und anschliessend dämpft; oder
- das Fasermaterial in Gegenwart eines Fixieralkalis mit einer Farbstofflösung oder -suspension imprägniert und dann die Ware luftdicht verpackt lagert.

Eine besonders bevorzugte Ausführungsform des erfindungsgemässen Verfahrens zum Färben ist dadurch gekennzeichnet, dass man die Ware mit einer Flotte, welche die Farbstofflösung oder -suspension enthält, imprägniert, so dass die Flottenaufnahme 50 bis 80 Gewichtsprozent beträgt, dann die Ware bis zu einer Restfeuchte von 5 bis 15 Gewichtsprozent trocknet z.B. zwischen 70 und 150°C, anschliessend die Ware mit einer Flotte, welche das Fixieralkali enthält, imprägniert, so dass die Flottenaufnahme 50 bis 80 Gewichtsprozent beträgt, und dann die Ware dämpft.

Das Flottenverhältnis der Foulardflotte mit welcher die Reaktivfarbstoffe der angegebenen Formeln auf das Fasermaterial aufgetragen werden, beträgt vorzugsweise 1:0,5 bis 1:1,2, insbesondere 1:0,5 bis 1:0,8. Der Auftrag der Flotte erfolgt bei einer Temperatur zwischen 15 und 100°C, insbesondere zwischen 20 und 80°C und ganz besonders bevorzugt zwischen 20 und 30°C.

Als Fixieralkali, welches in dem erfindungsgemässen Verfahren zum Färben oder Bedrucken verwendet werden kann, haben sich Alkalihydroxide, wie z.B. NaOH, KOH und LiOH, Alkalicarbonate, wie z.B. Natriumcarbonat und Kaliumcarbonat und Alkalihydrogencarbonate, wie z.B. Natriumhydrogencarbonat und Kaliumhydrogencarbonat, sowie Alkaliphosphate, wie z.B. Trinatriumphosphat und Dinatriumphosphat, gegebenenfalls zusammen mit neutralen Salzen, wie z.B. Natriumchlorid, als geeignet erwiesen.

Als Fasermaterial hat sich insbesondere Baumwolle als besonders geeignet erwiesen.

Falls das Fixieralkali zusammen mit der farbgebenden Komponente auf die Ware aufgetragen wird, liegt der pH-Wert der Flotte zwischen 8,5 und 14.

Falls das Fixieralkali mit separater Flotte auf die Ware aufgetragen wird, liegt der pH-Wert dieser Flotte zwischen 8,5 und 14.

In dem erfindungsgemässen Verfahren hat sich für die Fixierung in einer Heiss-Wasserdampfatmosphäre eine Temperatur zwischen 100° und 220°C, insbesondere 100° bis 105°C oder 150° bis 190°C, bezogen auf einen Druck von 1 bar, als besonders vorteilhaft erwiesen.

In dem erfindungsgemässen Verfahren hat sich für die Ausführungsform des Kaltverweilverfahrens eine Temperatur zwischen 10 und 40°C, insbesondere zwischen 20 und 30°C, während 4 bis 80 Stunden, insbesondere während 8 bis 48 Stunden als besonders vorteilhaft erwiesen.

Ganz besonders bevorzugt erfolgt die Fixierung gemäss der Ausführungsform als pad-dry-pad-steam Verfahren mit Sattdampf bei 100 bis 105°C.

Die Dämpfzeit beträgt 30 Sekunden bis 20 Minuten, insbesondere 60 Sekunden bis 3 Minuten.

Die Farbstoffe werden, je nach der gewünschten Farbtiefe der Färbung in Mengen von etwa 0,1 bis 10 % angewandt.

Nach dem Fixieren werden die Färbungen mit kaltem und heissem Wasser, gegebenenfalls unter Zusatz eines dispergierend wirkenden und die Diffusion der nicht fixierten Anteile fördernden Mittels gründlich gespült.

Eine bevorzugte Ausführungsform ist dadurch gekennzeichnet, dass man die gefärbte Ware in einer wässrigen Waschflotte bei einem pH von 8,5 bis 9 und erhöhter Temperatur, vorzugsweise 70 bis 85°C, gegebenenfalls in Gegenwart eines nichtionischen Waschmittels, auswäscht.

Die mit den erfindungsgemäss zur Anwendung gelangenden Reaktivfarbstoffen hergestellten Färbungen zeichnen sich durch sehr gute Kombinierbarkeit auf der Ware aus. Es werden hohe Fixierraten und ein sehr guter Aufbau erzielt, und die Färbungen besitzen gute Allgemeinechtheiten, insbesondere gute Lichtechtheiten und sehr gute Nassechtheiten. Mit dem erfindungsgemässen Verfahren treten weder Endenungleichheit noch Migrationsprobleme auf. Die mit den erfindungsgemäss zur Anwendung gelangenden Reaktivfarbstoffen hergestellten Drucke zeichnen sich durch hervorragende Konturenschärfe aus. Ferner tritt keine Zweiseitigkeit auf.

Die Färbeflotten können die allgemein üblichen Zusätze enthalten, beispielsweise die wässrigen Lösungen anorganischen Salzen, wie z.B. von Alkalichloriden oder Alkalisulfaten, Harnstoff, Verdickungen, wie z.B. Alginatverdickungen, wasserlösliche Cellulosealkyläther sowie Dispergierhilfsmittel, Egalisierhilfsmittel und Migrationsinhibitoren, ferner Natrium-m-nitrobenzolsulfonat und als weitere Verdickungsmittel, z.B. Methylcellulose, Stärkeäther, Emulsionsverdickungen, vorzugsweise ein Alginat, z.B. Natriumalginat, sowie Netzmittel.

Die in dem erfindungsgemässen Verfahren verwendeten Farbstoffe liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter. Die angegebenen Farbstoffmengen beziehen sich auf handelsüblichen Farbstoff.

Beispiel 1: Ein gebleichtes Baumwoll-Cretonne Gewebe wird auf dem Foulard mit einem Abquetscheffekt von 70 % Flottenaufnahme imprägniert mit einer Klotzflotte nachstehender Zusammensetzung:

1,0 g/l des gelbfärbenden Farbstoffes der Formel

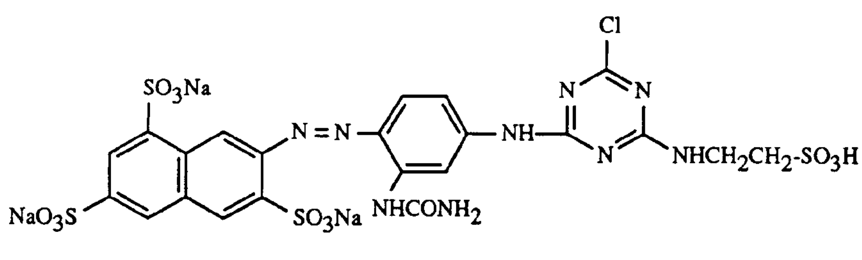

(101)

0,2 g/l des rotfärbenden Farbstoffes der Formel

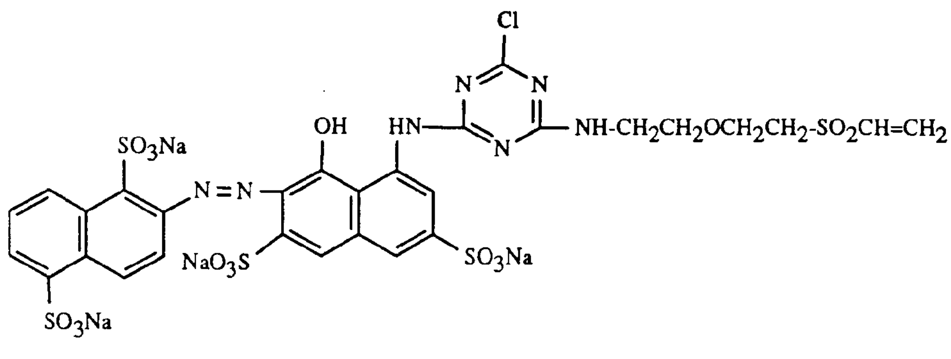

(102)

0,5 g/l des blaufärbenden Farbstoffes der Formel

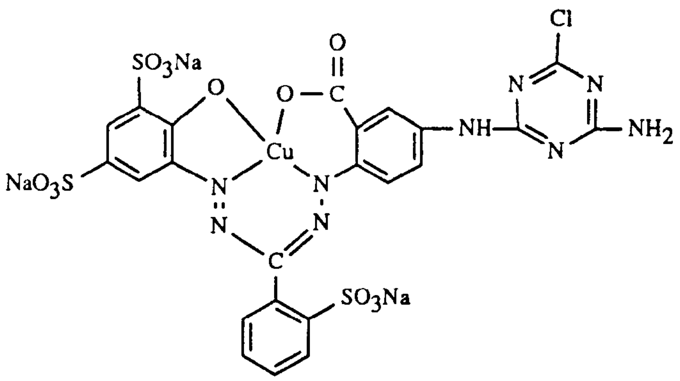

(103)

10 g/l Natriumsulfat, kalziniert, und
1 g/l eines Netzmittels.

Die Tauchzeit beträgt 2 Sekunden.

Nach dem Foulardieren wird das Baumwoll-Cretonne-Gewebe während einer Minute bei 100° getrocknet, foulardiert mit einer Flotte enthaltend 250 g/l NaCl und 40 ml/l 30%ige NaOH mit einem Abquetscheffekt von ca. 80 % und dann während einer Minute im Sattdampf bei 101 bis 103° fixiert.

Danach wird das Baumwoll-Cretonne-Gewebe zunächst mit kaltem Wasser und dann mit heissem bis kochendem Wasser gespült, kochend mit 1 bis 2 g/l eines Waschmittels geseift, erneut mit heissem und dann mit kaltem Wasser gespült und danach getrocknet.

Man erhält eine egale, endengleiche olive Färbung mit guten Echtheiten.

Beispiel 2: Ein gebleichtes, mercerisiertes Baumwoll-Cretonne-Gewebe wird auf dem Foulard mit einem Abquetscheffekt von 70 % Flottenaufnahme imprägniert mit einer Klotzflotte nachstehender Zusammensetzung:

1,0 g/l des gelbfärbenden Farbstoffes der Formel

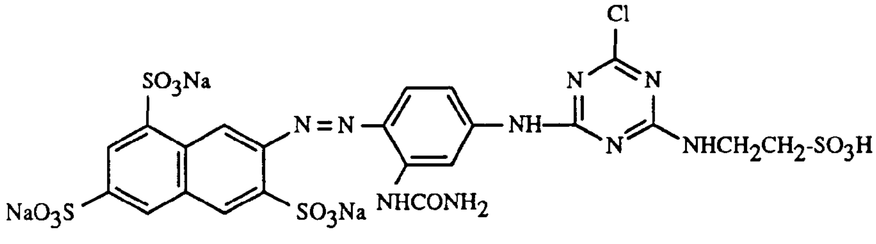

(101)

0,5 g/l des rotfärbenden Farbstoffes der Formel

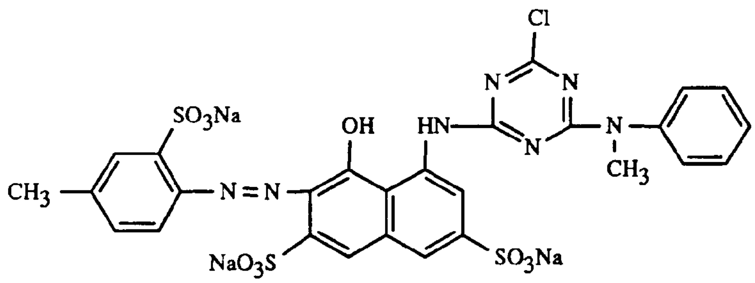

(104)

0,5 g/l des blaufärbenden Farbstoffes der Formel

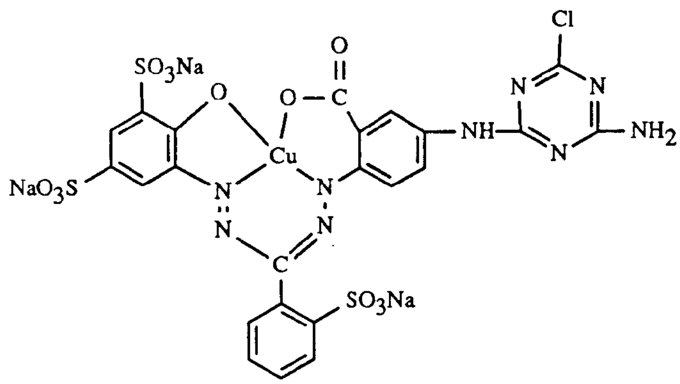

(103)

50 g/l Harnstoff,
20 g/l Natriumkarbonat, kalziniert und
1 g/l eines Netzmittels.

Die Tauchzeit beträgt 2 Sekunden.

Anschliessend wird das foulardierte Gewebe 1 Minute bei 100° auf der Hotflue getrocknet und dann 1 Minute bei 180° auf der Hotflue thermofixiert.

Nach Spülen, Seifen, Spülen und Trocknen gemäss den Angaben in Beispiel 1 erhält man ein endengleich in beigem Farbton gefärbtes Baumwoll-Cretonne-Gewebe mit guten Echtheiten.

Wenn man in obigen Beispielen anstelle des gelbfärbenden Farbstoffes der Formel (101) eine äquivalente Menge eines der nachfolgenden Farbstoffe der Formeln (105) bis (107) verwendet und anstelle der rotfärbenden Farbstoffe der Formeln (102) bis (104) eine äquivalente Menge eines Farbstoffes der Formel (108) bis (111) und anstelle des blaufärbenden Farbstoffes der Formel (103) eine äquivalente Menge eines Farbstoffes der Formel (112) bis (120) verwendet, so erhält man ebenfalls endengleiche, egale Färbungen mit guten Echtheiten.

Tabelle

gelb- oder orangefärbende Farbstoffe

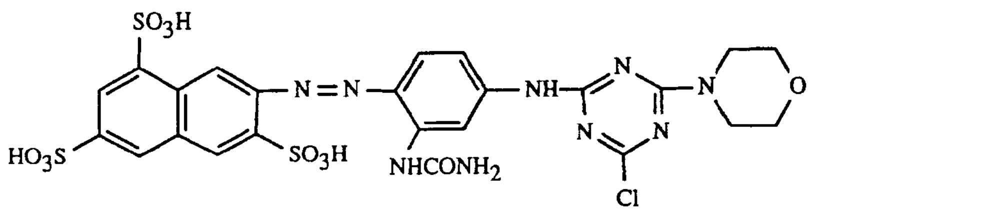

(105)

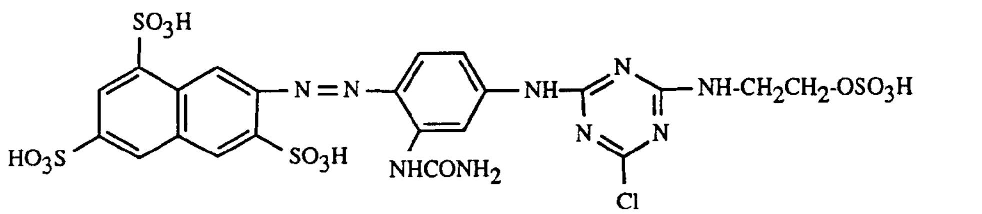

(106)

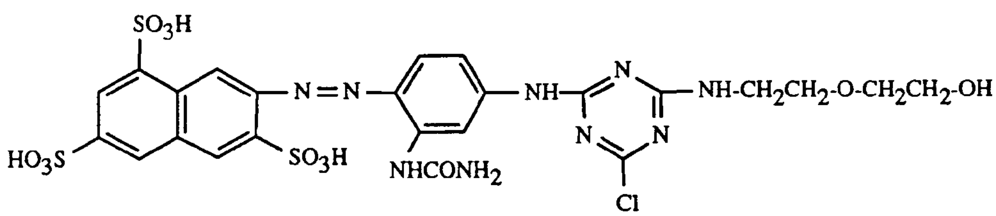

(107)

rot- oder rotbraunfärbende Farbstoffe

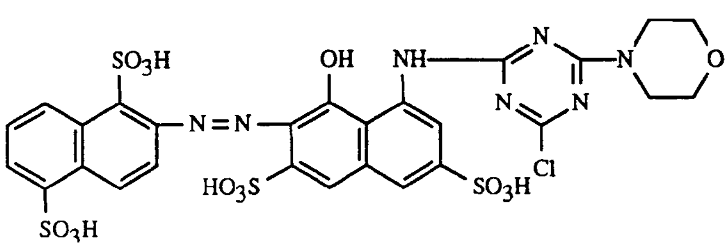

(108)

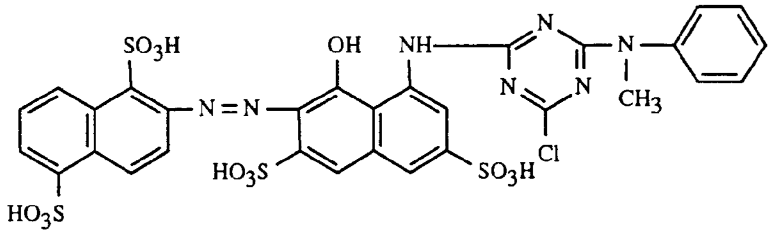

(109)

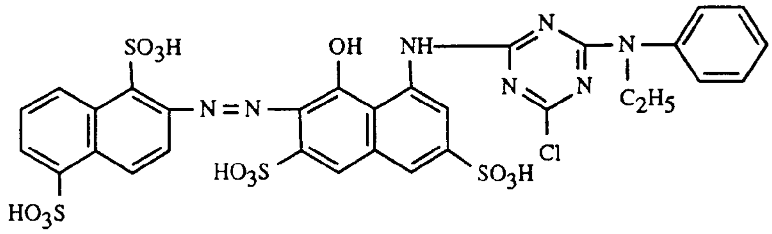

(110)

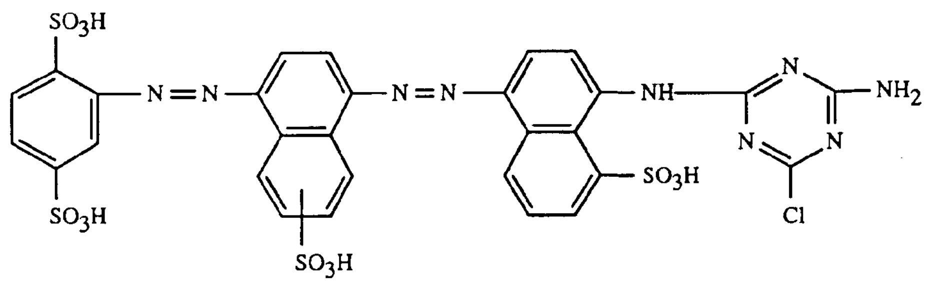

(111)

blaufärbende Farbstoffe

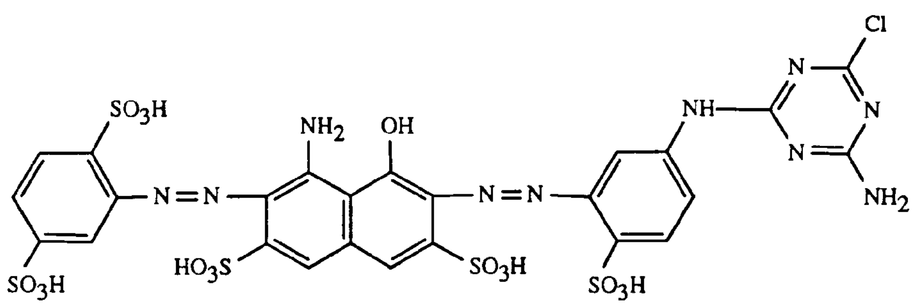

(112)

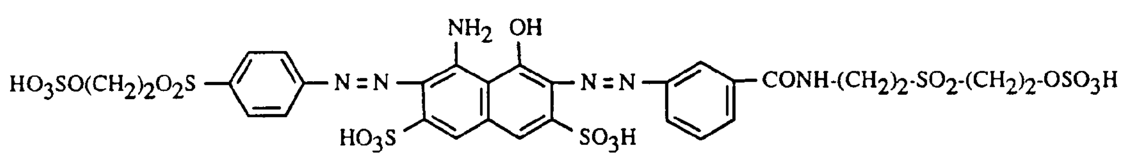

(113)

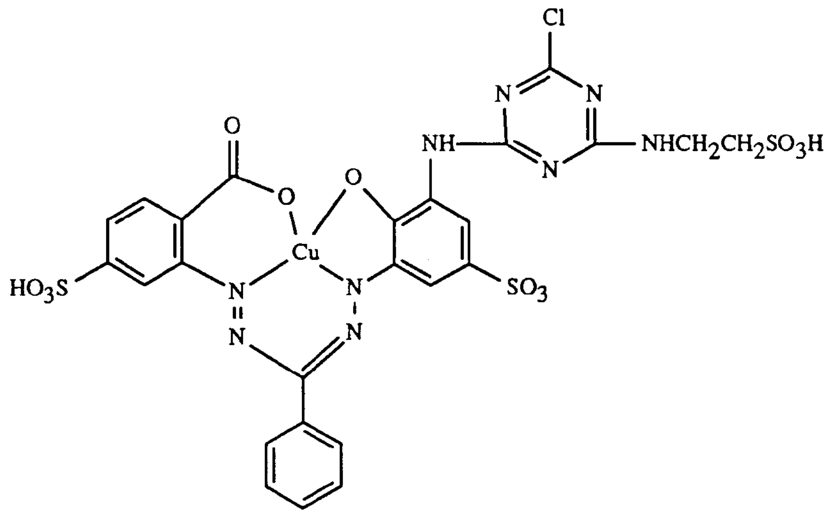

(114)

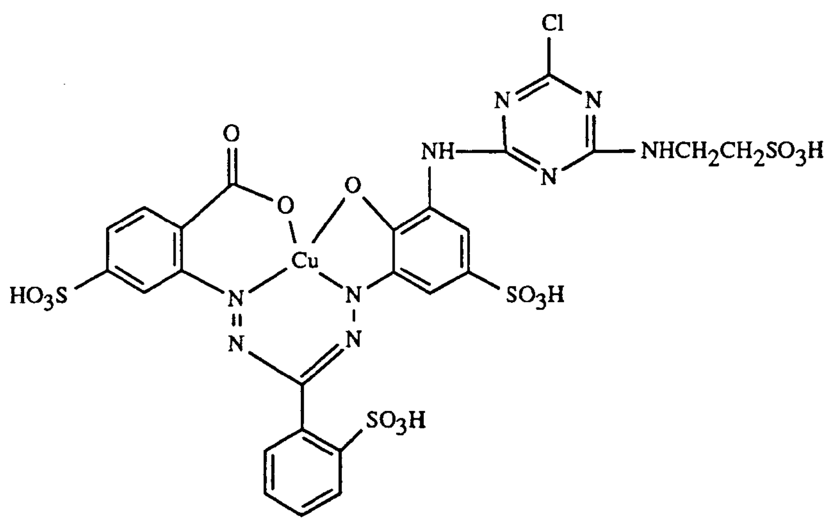

(115),

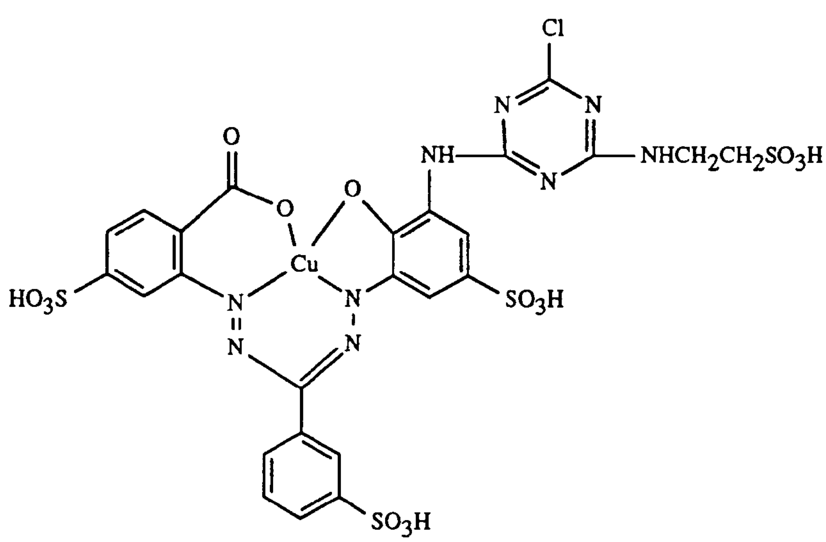

(116),

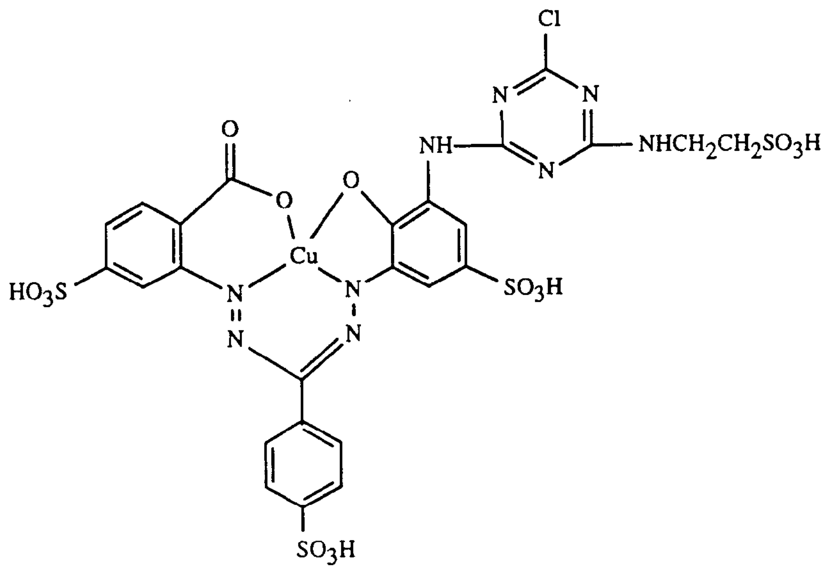

(117),

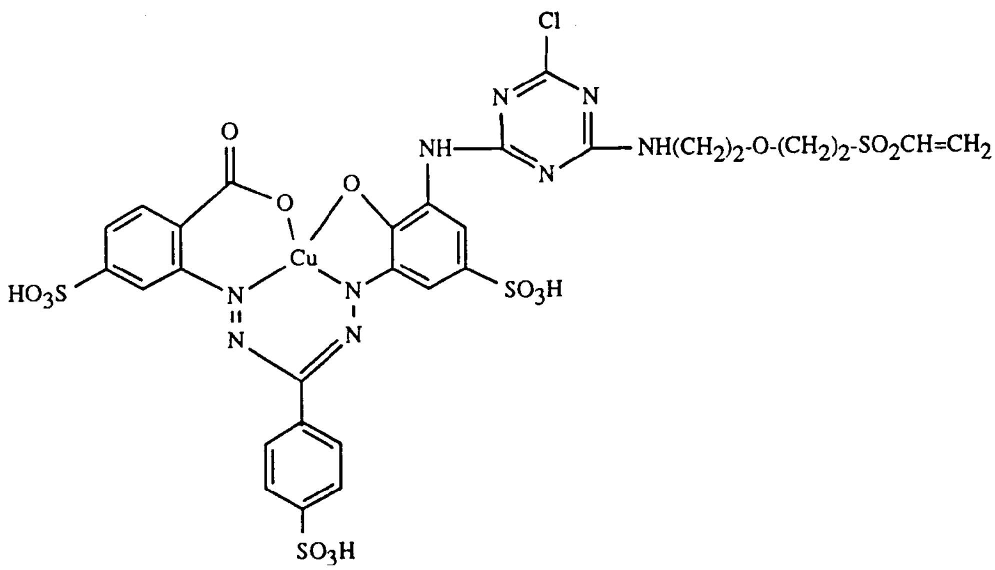

(118),

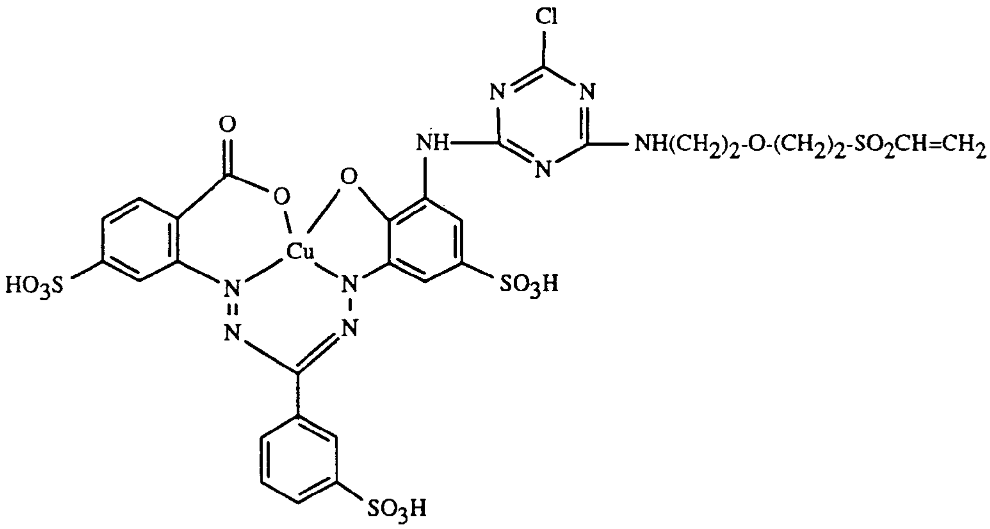

(119) oder

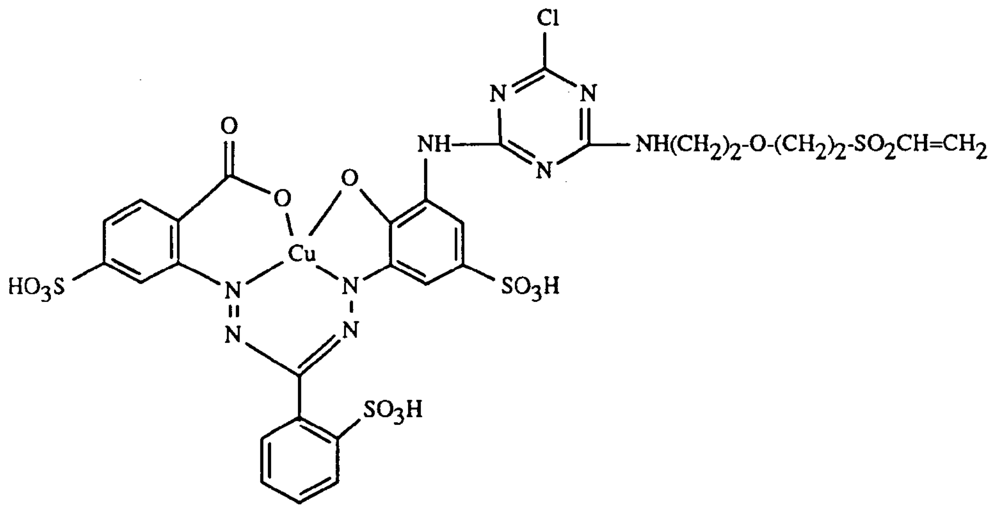

(120)

Beispiel 3: Ein gebleichtes, mercerisiertes Baumwoll-Cretonne-Gewebe wird auf dem Foulard mit einem Abquetscheffekt von 70 % Flottenaufnahme imprägniert mit einer Klotzflotte nachstehender Zusammensetzung:

1,0 g/l des gelbfärbenden Farbstoffes der Formel

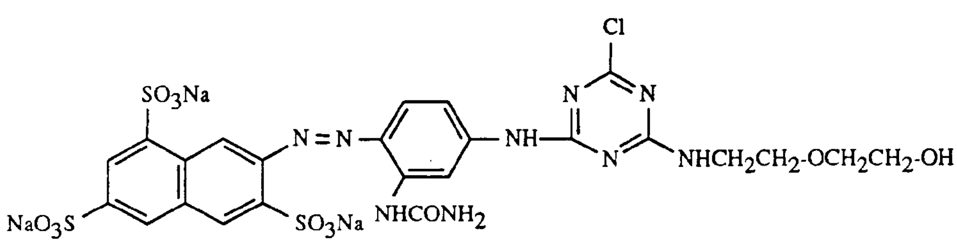

(107)

0,5 g/l des rotfärbenden Farbstoffes der Formel

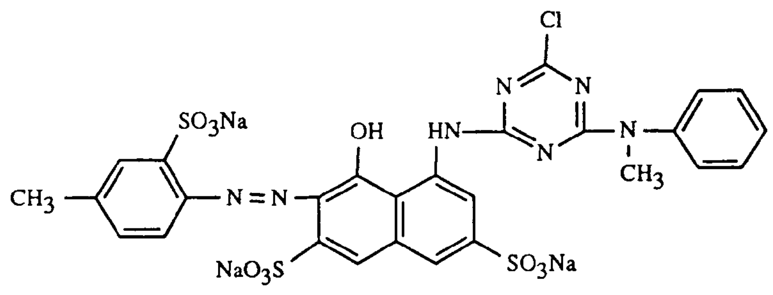

(104)

0,5 g/l des blaufärbenden Farbstoffes der Formel

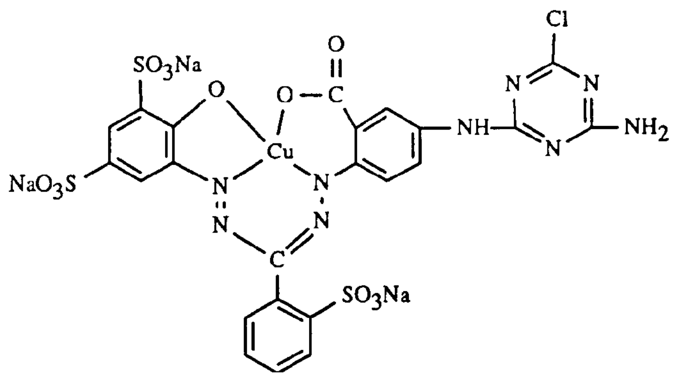

(103)

30 g/l Natronlauge (30 %) und
1 g/l eines Netzmittels.

Die Tauchzeit beträgt 2 Sekunden.

Anschliessend wird das foulardierte Gewebe in einem Plastiksäckchen luftdicht verpackt und 24 Stunden bei 25° gelagert.

Danach wird das Baumwoll-Cretonne-Gewebe zunächst mit kaltem Wasser und dann mit heissem kochendem Wasser gespült, kochend mit 1 bis 2 g/l eines Waschmittels geseift, erneut mit heissem und dann mit kaltem Wasser gespült und danach getrocknet.

Man erhält eine egale, endengleiche beige Färbung mit guten Echtheiten.

Wenn man in obigem Beispiel anstelle des gelbfärbenden Farbstoffes der Formel (107) eine äquivalente Menge eines der nachfolgenden Farbstoffe der Formeln (101), (105) oder (106) verwendet und anstelle des rotfärbenden Farbstoffes der Formel (104) eine äquivalente Menge eines Farbstoffes der Formel (108) bis (111) und anstelle des blaufärbenden Farbstoffes der Formel (103) eine äquivalente Menge eines Farbstoffes der Formel (112) bis (122) verwendet, so erhält man ebenfalls endengleiche, egale Färbungen mit guten Echtheiten.

Tabelle

gelb- oder orangefärbende Farbstoffe

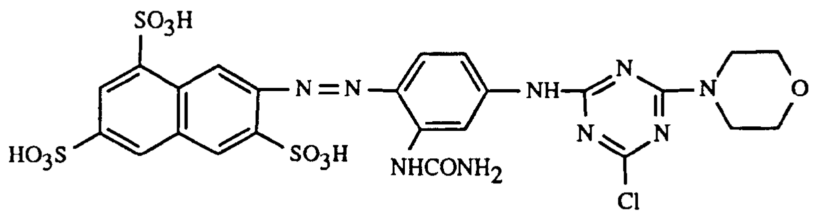

(105)

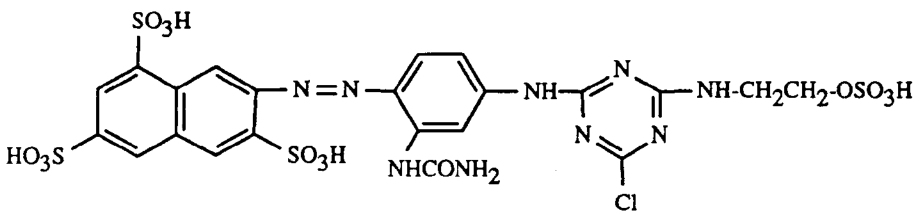

(106)

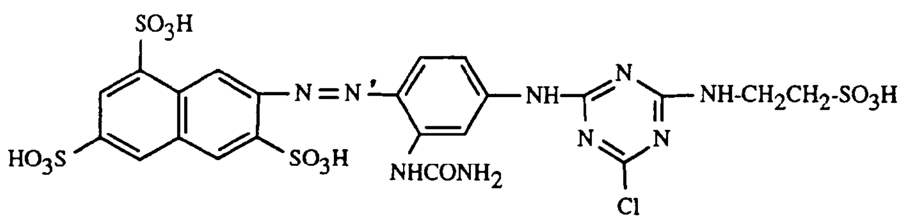

(101)

rot- oder rotbraunfärbende Farbstoffe

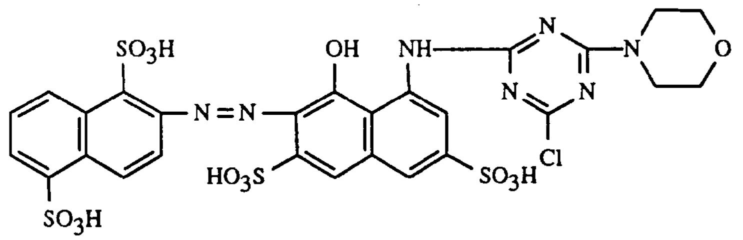

(108)

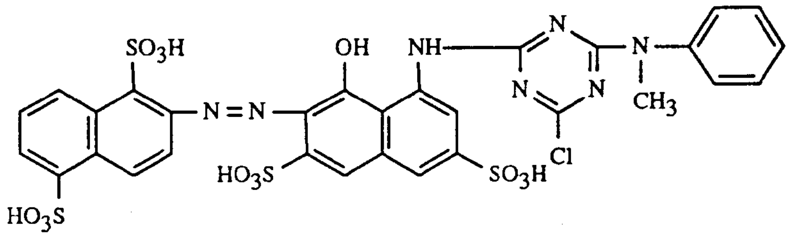

(109)

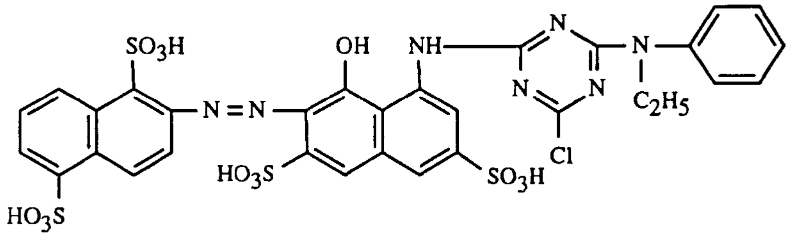

(110)

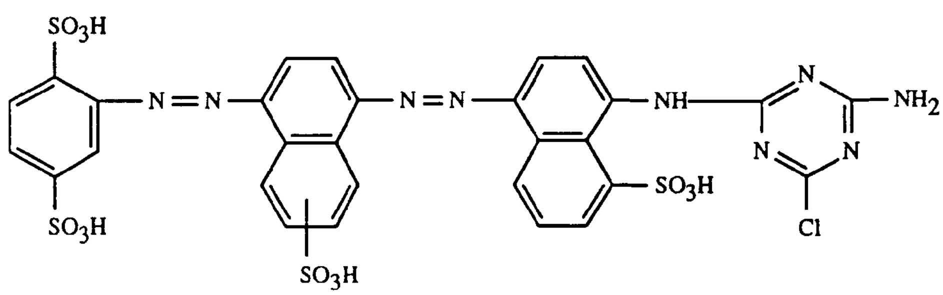

(111)

blaufärbende Farbstoffe

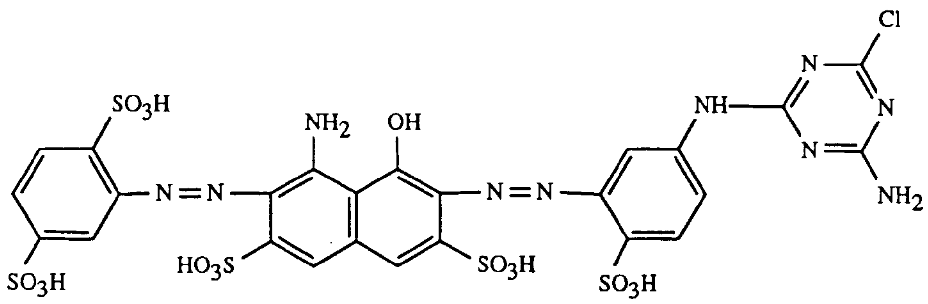

(112)

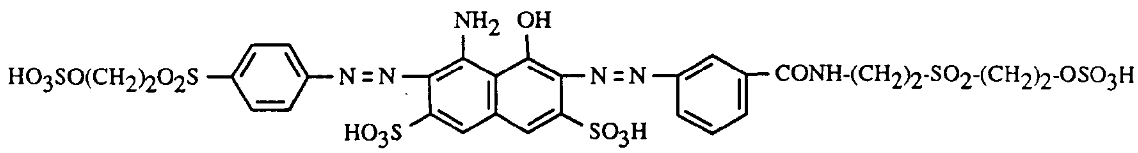

(113)

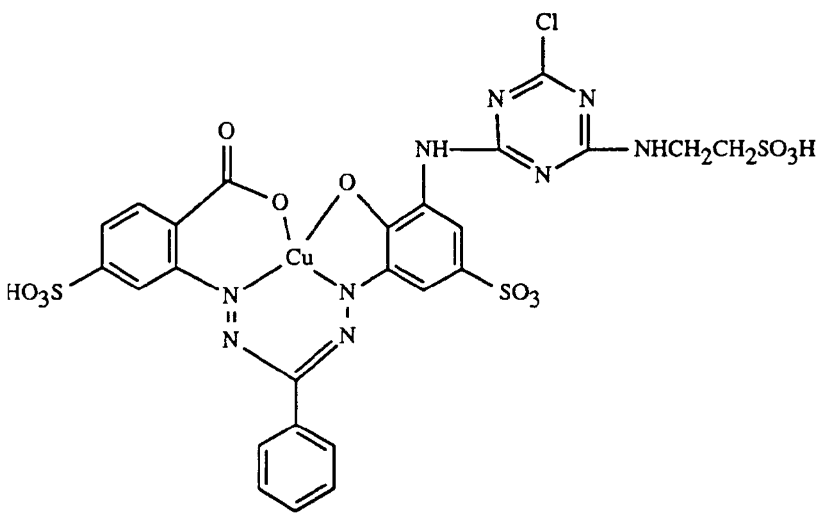

(114)

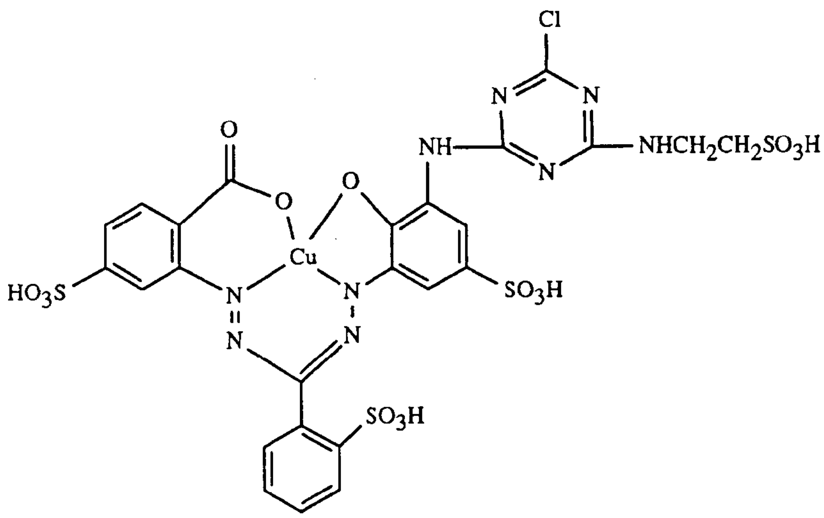

(115),

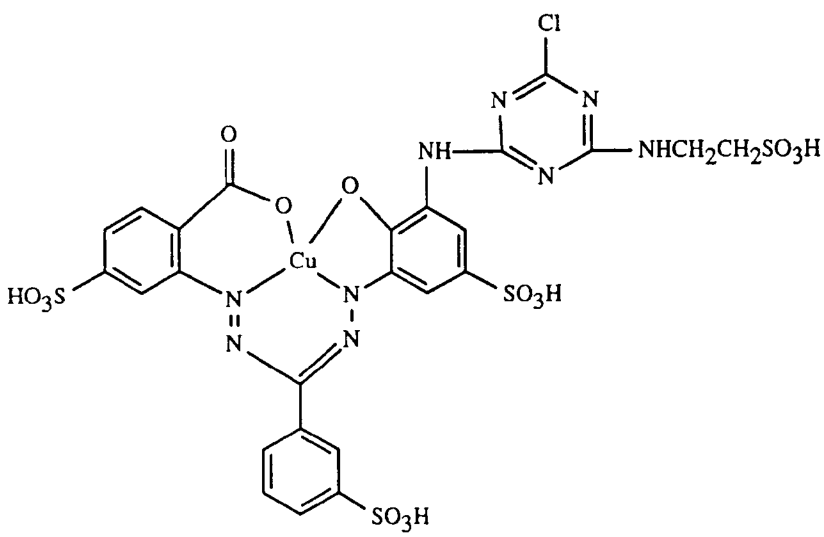

(116),

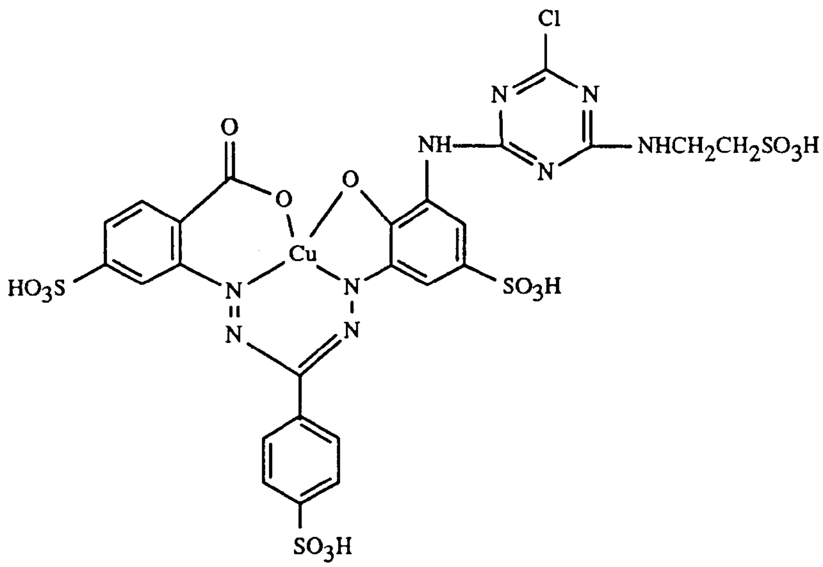

(117),

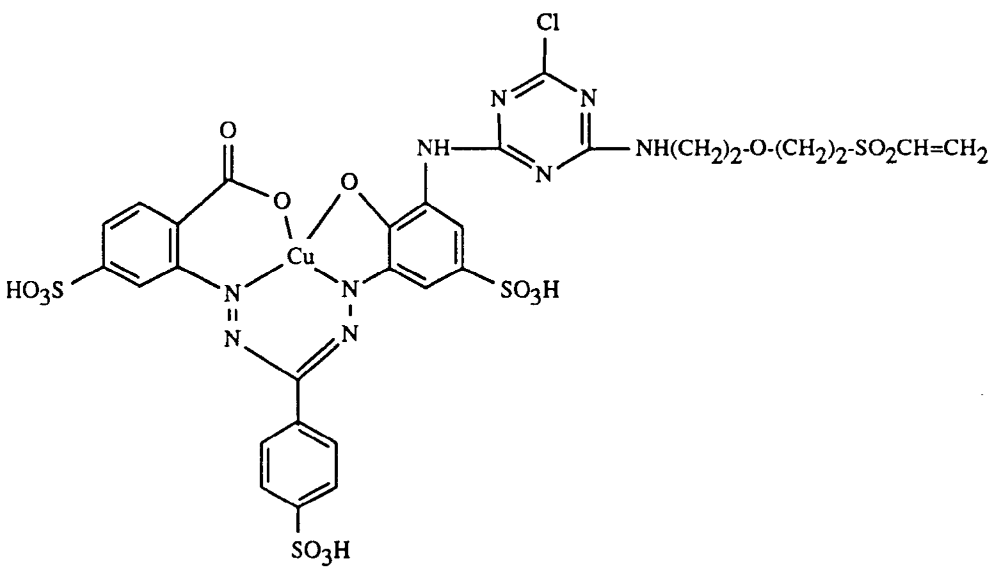

(118),

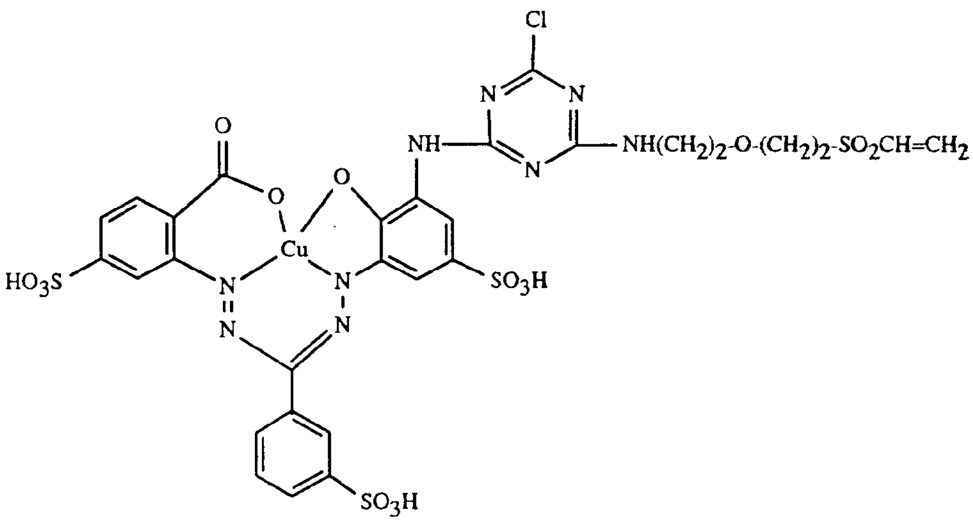

(119) oder

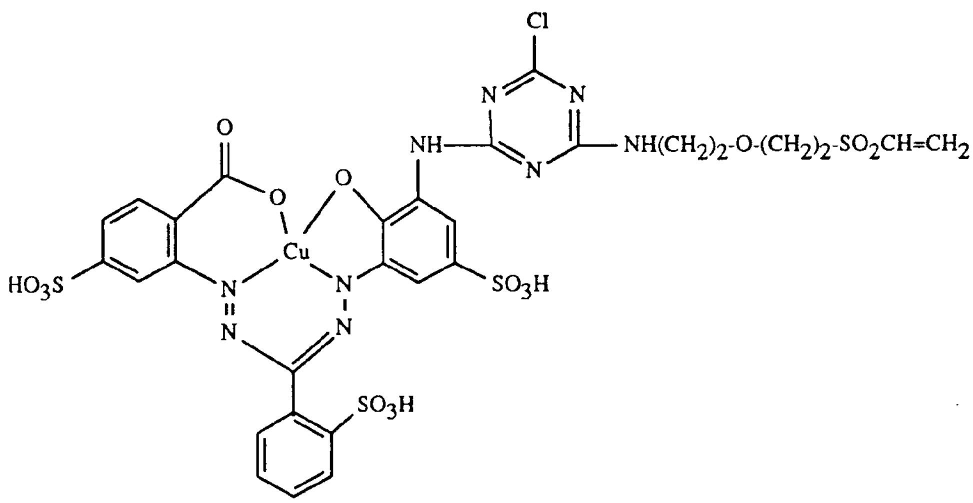

(120)

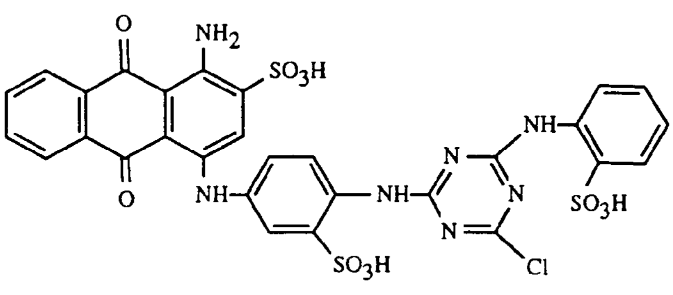

(121)

oder

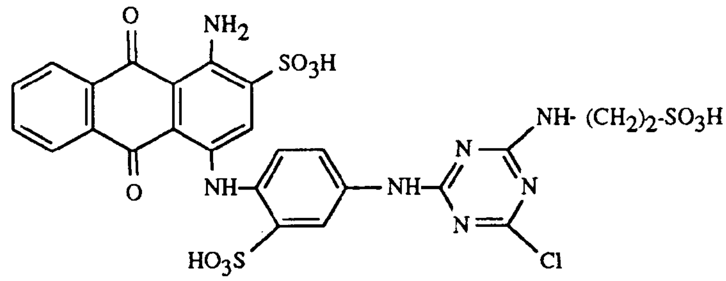

(122).

Beispiel 4: Ein gebleichtes mercerisiertes Baumwoll-Satin-Gewebe wird unter normalen Flachfilmdruckbedingungen mit einer Druckpaste nachstehender Zusammensetzung bedruckt:

10 g des gelbfärbenden Farbstoffes der Formel (107)
5 g des rotfärbenden Farbstoffes der Formel (104)
5 g des blaufärbenden Farbstoffes der Formel (103)

340 g Wasser
100 g Harnstoff
20 g $Na_2CO_3$
1 g Natriumsalz der m-Nitrobenzolsulfonsäure
500 g Alginalverdickung (5 %)

1000 g Druckpaste

Anschliessend wird 5 Minuten bei 90° getrocknet und 8 Minuten bei 102° mit Sattdampf fixiert.

Danach wird wie in Beispiel 3 angegeben gewaschen. Man erhält einen egalen nicht zweiseitigen braunbeigen Druck mit guten Echtheiten.

Wenn man anstelle des gelbfärbenden Farbstoffes der Formel (107) eine äquivalente Menge eines der Farbstoffe der Formeln (101), (105) oder (106) verwendet und anstelle des rotfärbenden Farbstoffes der Formel (104) eine äquivalente Menge eines Farbstoffes der Formel (108) bis (111) und anstelle des blaufärbenden Farbstoffes der Formel (103) eine äquivalente Menge eines Farbstoffes der Formel (112) bis (122) verwendet, so erhält man ebenfalls endengleiche, egale, nicht zweiseitige Drucke mit guten Echtheiten.

## Patentansprüche

1. Verfahren zum Trichromie-Färben oder -Bedrucken von cellulosehaltigen textilen Fasermaterialien, dadurch gekennzeichnet, dass man diese Fasermaterialien aus wässriger Flotte mit mindestens einem rot- oder rotbraunfärbenden Farbstoff der Formel

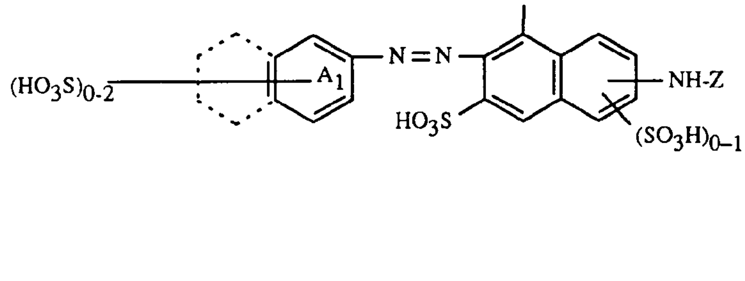

(1)

oder

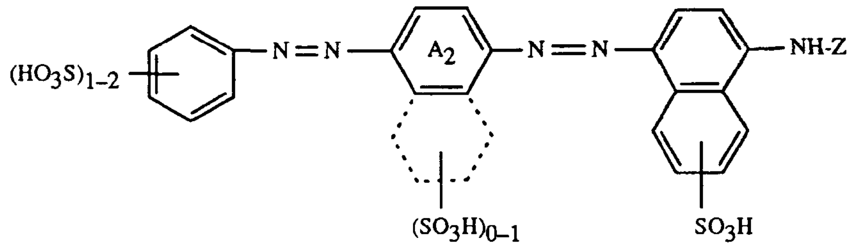

(2)

und mindestens einem gelb- oder orangefärbenden Farbstoff der Formel

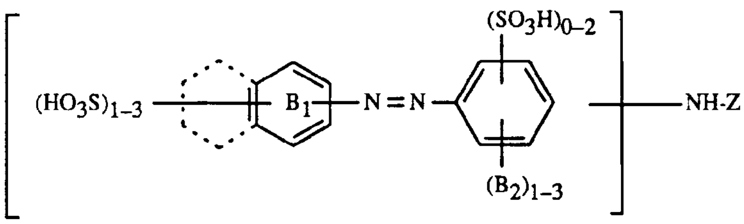

(3)

oder

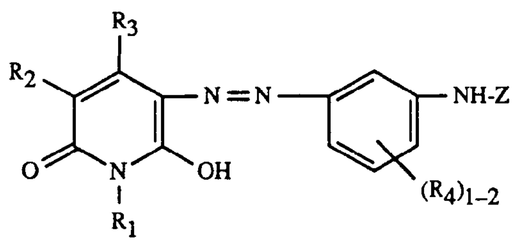

(4)

und mindestens einem blaufärbenden Farbstoff der Formel

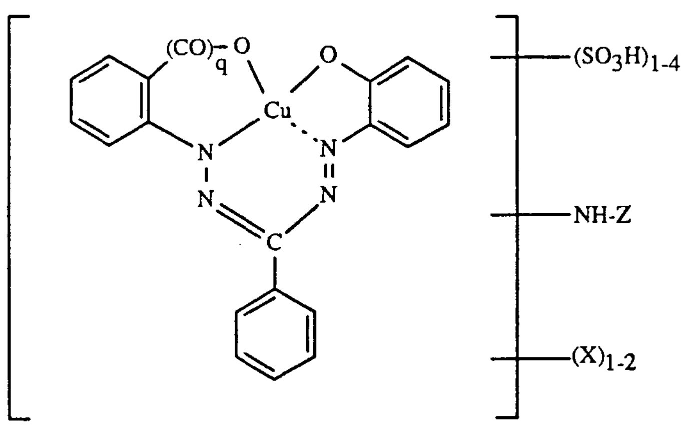

(5),

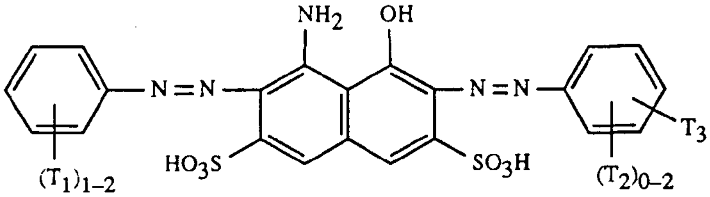

(6)

oder

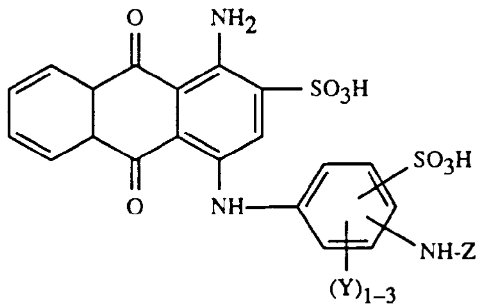

(7)

färbt oder bedruckt, worin in den Formeln (1), (2) und (3) die Benzringe $A_1$, $A_2$ und $B_1$ weitersubstituiert sein können, die Benzringe $A_1$, $A_2$ und $B_1$ zusammen mit den gestrichelt gezeichneten ankondensierten Benzringen für alternativ mögliche Naphthalinringe stehen, $(B_2)_{1-3}$ für 1 bis 3 Substituenten $B_2$, unabhängig voneinander, aus der Gruppe Wasserstoff, $C_1$-$C_4$-Alkyl, $C_1$-$C_4$-Alkoxy, $C_2$-$C_4$-Alkanoylamino, Halogen, Nitro, Cyan, Trifluormethyl, Sulfamoyl, Carbamoyl, Amino, Hydroxy, Carboxy, Sulfomethyl, Sulfo oder Ureido steht, $R_1$ und $R_3$, unabhängig voneinander, Wasserstoff, $C_1$-$C_4$-Alkyl oder Phenyl, und $R_2$ Wasserstoff, Cyan, Carbamoyl oder Sulfomethyl ist, $(R_4)_{1-2}$ für 1 bis 2 Substituenten $R_4$, unabhängig voneinander, aus der Gruppe Wasserstoff und Sulfo steht, $(X)_{1-2}$ für 1 bis 2 Substituenten X, unabhängig voneinander, aus der Gruppe Wasserstoff, $C_1$-$C_4$-Alkyl, $C_1$-$C_4$-Alkoxy, Halogen, $C_2$-$C_4$-Alkanoylamino, Hydroxy, Carboxy, Sulfo, Cyan oder Nitro steht, q die Zahl 0 oder 1 ist, $(T_1)_{1-2}$ für 1 bis 2 Substituenten $T_1$, unabhängig voneinander, aus der Gruppe Sulfo und $-SO_2$-Z' steht, wobei Z' β-Sulfatoäthyl, β-Halogenäthyl oder Vinyl ist, $(T_2)_{1-2}$ für 1 bis 2 Substituenten $T_2$, unabhängig voneinander, aus der Gruppe Wasserstoff und Sulfo steht, $T_3$ der Rest -NH-Z oder $-CONH-(CH_2)_{2-3}-SO_2$-Z' ist, und Z' die angegebene Bedeutung hat, $(Y)_{1-3}$ für 1 bis 3 Substituenten Y, unabhängig voneinander, aus der Gruppe Wasserstoff und $C_1$-$C_4$-Alkyl steht, und Z in den Formeln (1) bis (7) einen 2-Chlor-s-triazin-6-yl-Rest, der in 4-Stellung eine gegebenenfalls substituierte Aminogruppe enthält, oder einen 2,4-Difluor-5-chlor-pyrimidin-6-yl-Rest bedeutet.

2. Verfahren gemäss Anspruch 1, dadurch gekennzeichnet, dass man als Farbstoff der Formel (1) einen Farbstoff der Formel

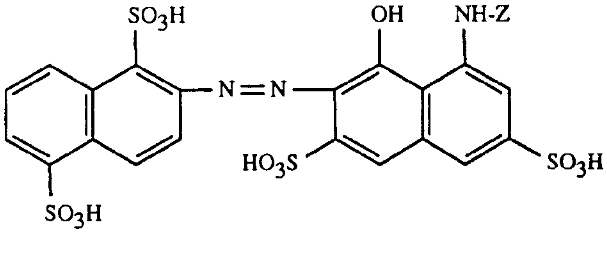

(10)

oder

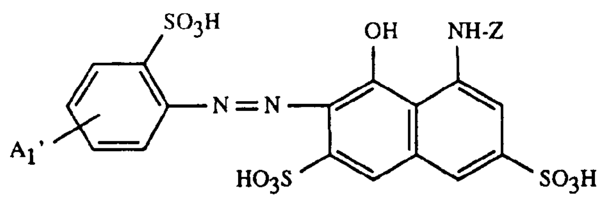

(11),

worin Z die oben angegebene Bedeutung hat, und $A_1$' Wasserstoff, $C_1$-$C_4$-Alkyl, $C_1$-$C_4$-Alkoxy, Halogen oder $C_2$-$C_4$-Alkanoylamino ist, zusammen mit einem Farbstoff der Formeln (3) oder (4) und (5), (6) oder (7) verwendet.

3. Verfahren gemäss Anspruch 1, dadurch gekennzeichnet, dass man als Farbstoff der Formel (2) einen Farbstoff der Formel

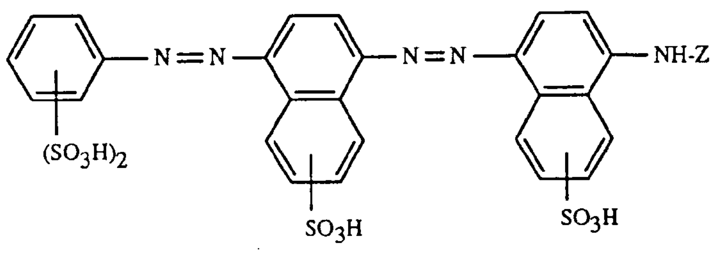

(12),

worin Z die oben angegebene Bedeutung hat, zusammen mit einem Farbstoff der Formeln (3) oder (4) und (5), (6) oder (7) verwendet.

4. Verfahren gemäss Anspruch 1, dadurch gekennzeichnet, dass man als Farbstoff der Formel (3) einen Farbstoff der Formel

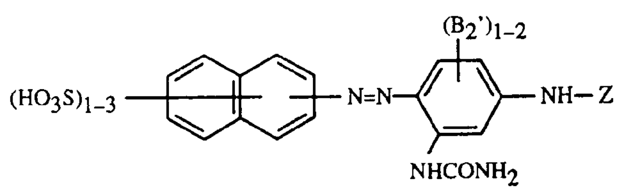

(13),

worin $(B_2')_{1-2}$ für 1 bis 2 Substituenten $B_2$' aus der Gruppe Wasserstoff, Halogen, Nitro, Cyan, Trifluormethyl, Sulfamoyl, Carbamoyl, $C_{1-4}$-Alkyl, $C_{1-4}$-Alkoxy, Amino, Acetylamino, Ureido, Hydroxy, Carboxy, Sulfomethyl und Sulfo unabhäbgig voneinander steht, und Z die oben angegebene Bedeutung hat, zusammen mit einem Farbstoff der Formel (1) oder (2) und (5), (6) oder (7) verwendet.

5. Verfahren gemäss Anspruch 1, dadurch gekennzeichnet, dass man als Farbstoff der Formel (5) einen Farbstoff der Formel

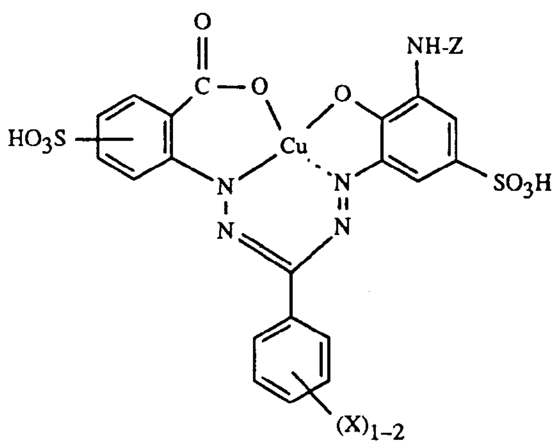

(14),

worin $(X)_{1-2}$ für 1 bis 2 Substituenten X, unabhängig voneinander, aus der Gruppe Wasserstoff, Halogen, $C_1$-$C_4$-Alkyl, $C_1$-$C_4$-Alkoxy, $C_2$-$C_4$-Alkanoylamino, Hydroxy, Carboxy und Sulfo steht, und Z die in Anspruch 1 angegebene Bedeutung hat zusammen mit einem Farbstoff der Formel (1) oder (2) und (3) oder (4) verwendet.

**6.** Verfahren gemäss Anspruch 1, dadurch gekennzeichnet, dass man als Farbstoff der Formel (5) einen Farbstoff der Formel

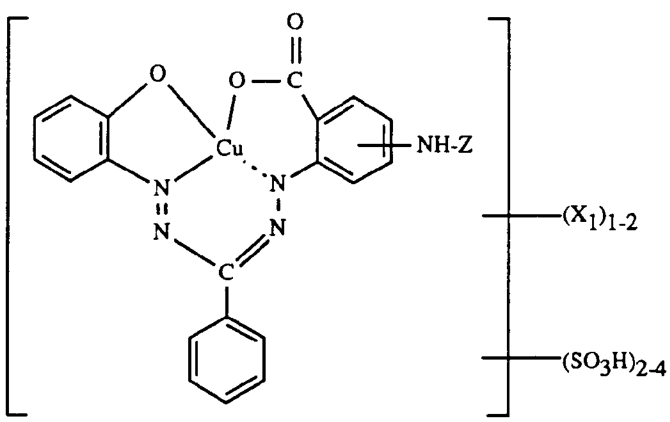

(15),

worin $(X_1)_{1-2}$ für 1 bis 2 Substituenten $X_1$, unabhängig voneinander, aus der Gruppe Wasserstoff, Halogen, $C_1$-$C_4$-Alkyl, $C_1$-$C_4$-Alkoxy, $C_2$-$C_4$-Alkanoylamino, Hydroxy und Carboxy steht, und Z die in Anspruch 1 angegebene Bedeutung hat, zusammen mit einem Farbstoff der Formel (1) oder (2) und (3) oder (4) verwendet

**7.** Verfahren gemäss Anspruch 1, dadurch gekennzeichnet, dass man als Farbstoff der Formel (6) einen Farbstoff der Formel

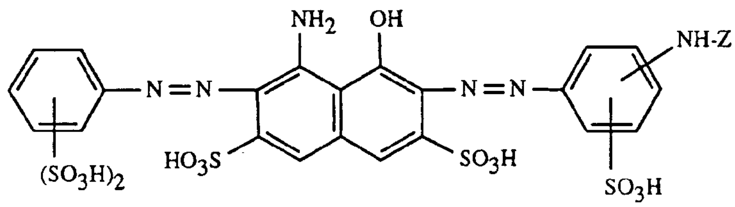

(16)

oder

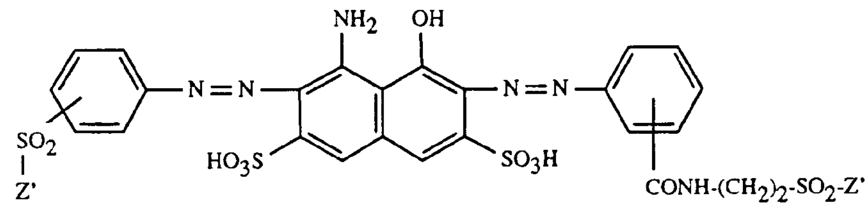

(17)

worin Z und Z' die in Anspruch 1 angegebenen Bedeutungen haben zusammen mit einem Farbstoff der Formel (1) oder (2) und (3) oder (4) verwendet.

8. Verfahren gemäss einem der Ansprüche 1 bis 7, dadurch gekennzeichnet, dass man Farbstoffe verwendet, worin Z ein Rest der Formel

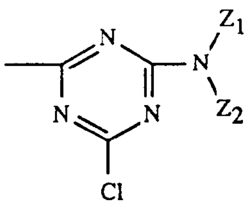

(20)

ist, und $Z_1$ und $Z_2$ unabhängig voneinander Wasserstoff, gegebenenfalls substituiertes $C_1$-$C_6$-Alkyl, gegebenenfalls substituiertes $C_5$-$C_7$-Cycloalkyl oder gegebenenfalls substituiertes Phenyl oder Naphthyl bedeuten.

9. Verfahren gemäss Anspruch 8, dadurch gekennzeichnet, dass man Farbstoffe verwendet, worin Z ein Rest der Formel (20) ist und $Z_1$ und $Z_2$ unabhängig voneinander Wasserstoff, $C_1$-$C_6$-Alkyl, das durch Hydroxy, $C_1$-$C_4$-Alkoxy, Hydroxy-$C_1$-$C_4$-alkoxy, Halogen, Sulfo, Sulfato oder einem faserreaktiven Rest substituiert sein kann, $C_5$-$C_7$-Cycloalkyl, das durch $C_1$-$C_4$-Alkyl substituiert sein kann, Phenyl oder Naphthyl, das durch $C_1$-$C_4$-Alkyl, $C_1$-$C_4$-Hydroxyalkyl, $C_1$-$C_4$-Alkoxy, Halogen, $C_2$-$C_4$-Alkanoylamino, Sulfo oder einen weiteren faserreaktiven Rest substituiert sein kann, ist, oder worin $-N(Z_1)Z_2$ einen Rest der Formel (8b) bis (8g) bedeuten, oder Morpholino, Piperidino oder Piperazino ist.

10. Verfahren gemäss Anspruch 2, dadurch gekennzeichnet, dass man als Farbstoff der Formel (10) einen Farbstoff der Formel

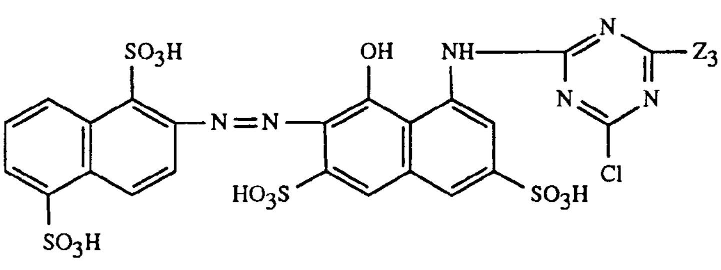

(21),

worin $Z_3$ Morpholino, N-Methylanilino, N-Aethylanilino oder $-NH-(CH_2)_2-O-(CH_2)_2-SO_2-Z'$, wobei Z' β-Sulfatoäthyl, β-Chloräthyl oder Vinyl ist, verwendet.

11. Verfahren gemäss Anspruch 2, dadurch gekennzeichnet, dass man als Farbstoff der Formel (11) den Farbstoff der Formel

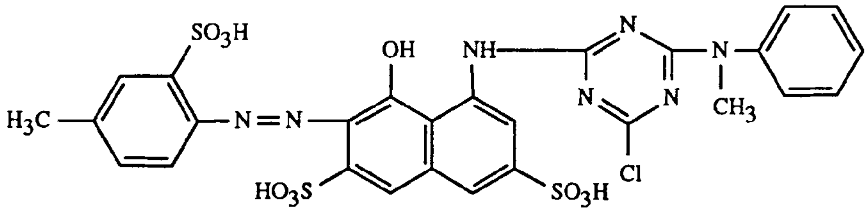

(22)

verwendet.

**12.** Verfahren gemäss Anspruch 3, dadurch gekennzeichnet, dass man als Farbstoff der Formel (12) einen Farbstoff der Formel

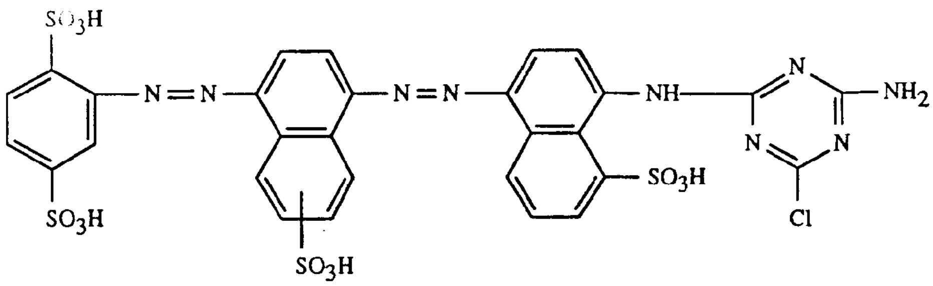

(23)

verwendet.

**13.** Verfahren gemäss Anspruch 4, dadurch gekennzeichnet, dass man als Farbstoff der Formel (13) einen Farbstoff der Formel

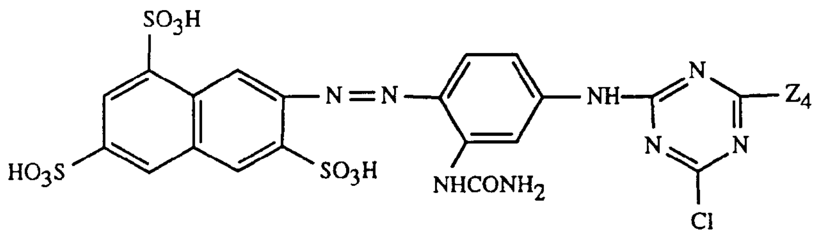

(24)

worin $Z_4$ β-Sulfoäthylamino, β-Sulfatoäthylamino, Morpholino oder $-NH-(CH_2)_2-O-(CH_2)_2-OH$ ist, verwendet.

**14.** Verfahren gemäss Anspruch 5, dadurch gekennzeichnet, dass man als Farbstoff der Formel (14) den Farbstoff der Formel

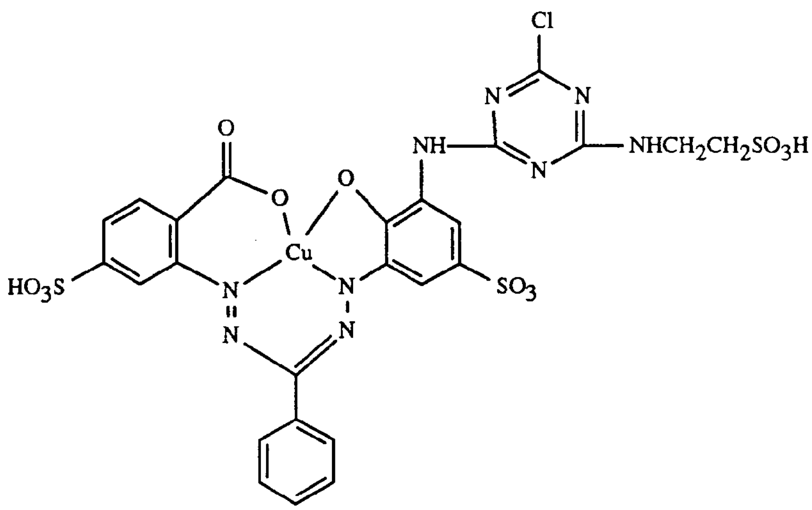

(25),

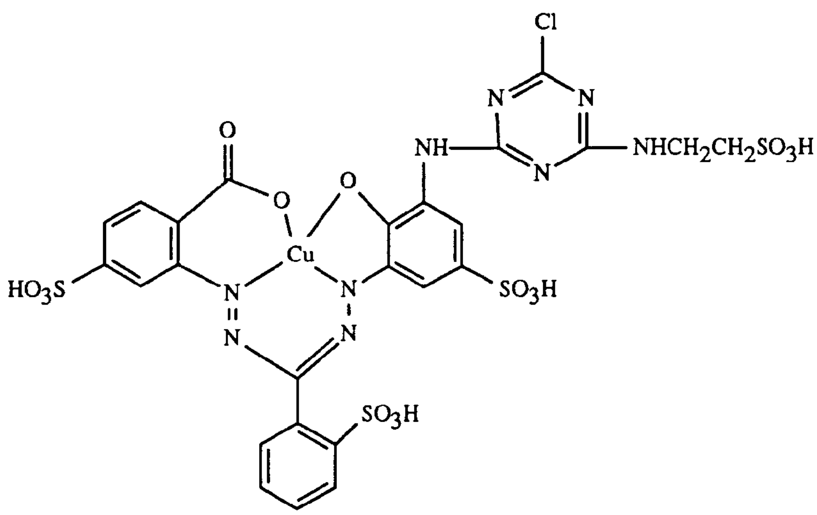

(26),

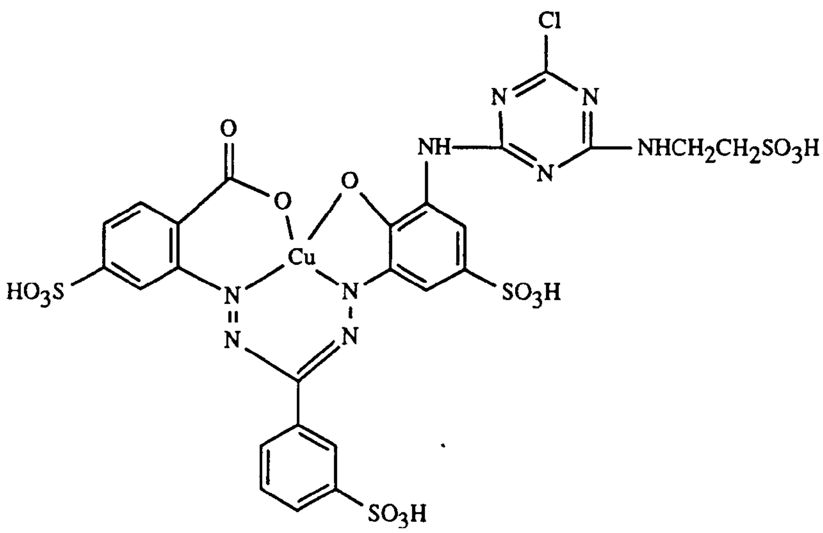

(27),

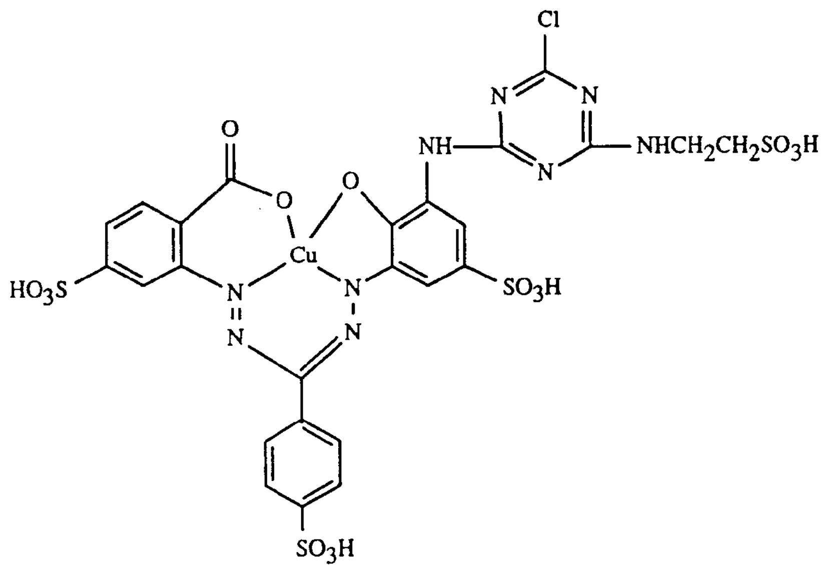

(28),

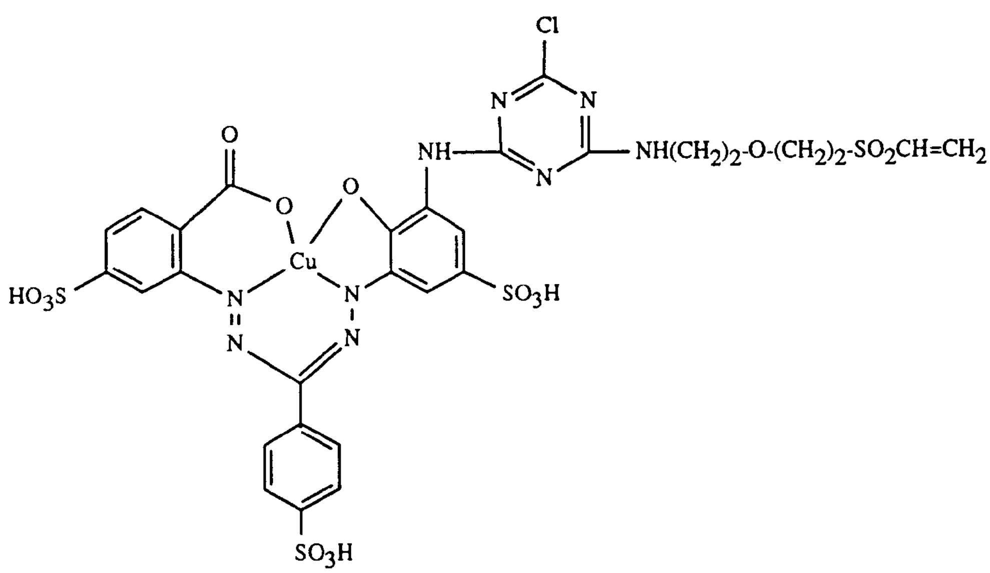

(29),

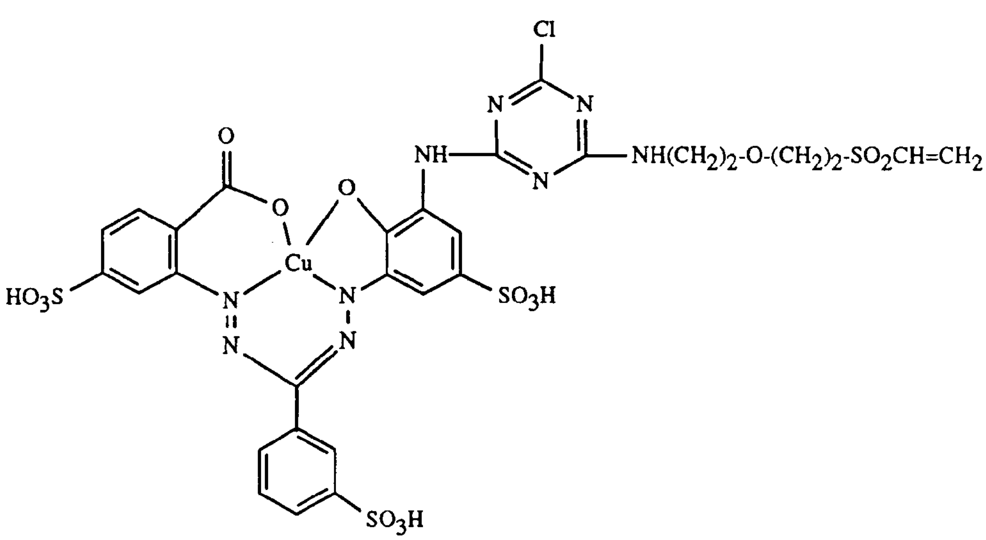

(30)

oder

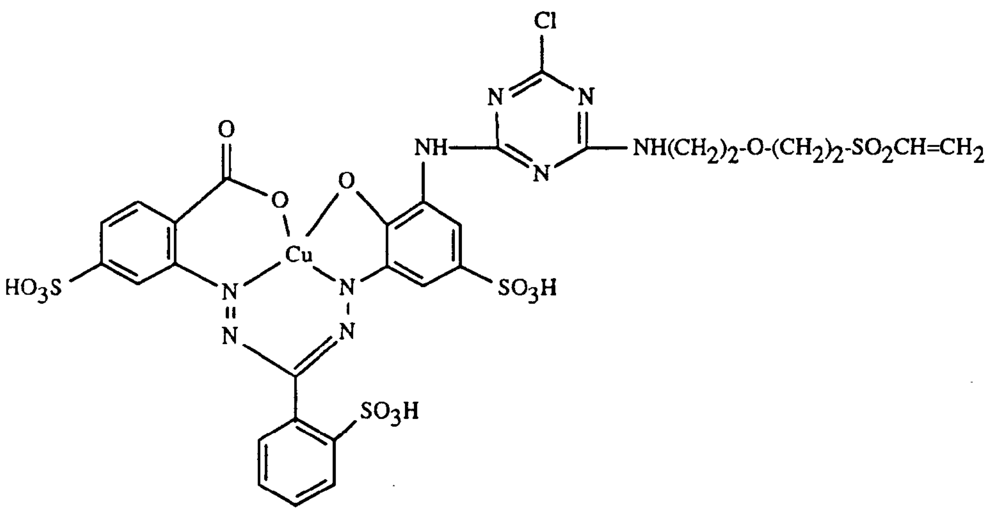

(31)

verwendet.

**15.** Verfahren gemäss Anspruch 6, dadurch gekennzeichnet, dass man als Farbstoff der Formel (15) einen Farbstoff der Formel

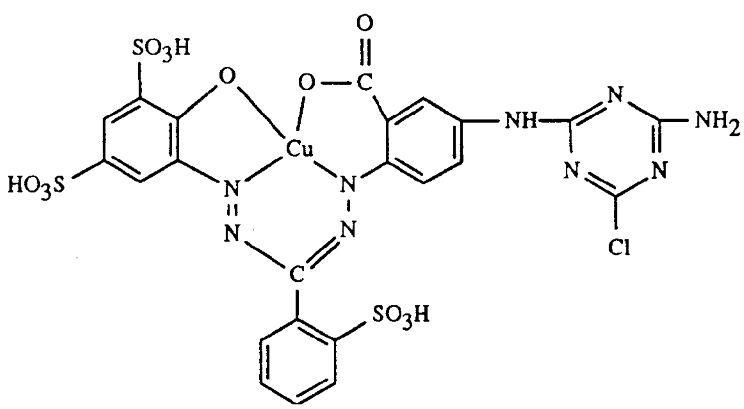

(32)

verwendet.

**16.** Verfahren gemäss Anspruch 7, dadurch gekennzeichnet, dass man als Farbstoff der Formel (16) den Farbstoff der Formel

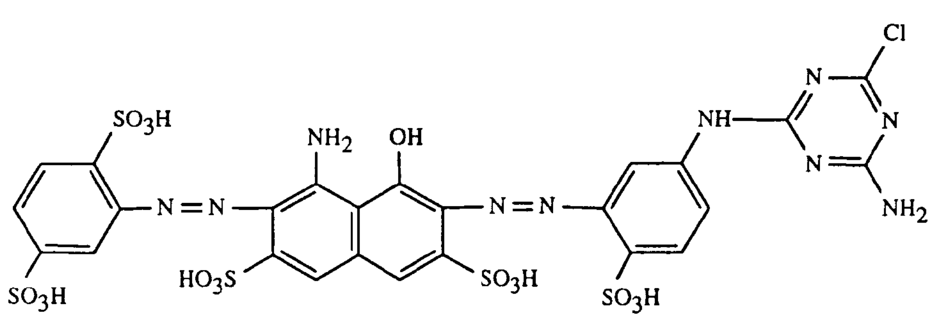

(33)

und als Farbstoff der Formel (17) einen Farbstoff der Formel

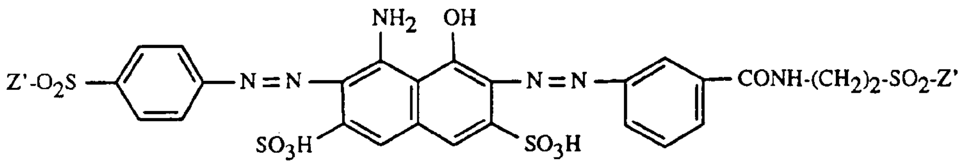
(34)

verwendet, worin Z' die in Anspruch 7 angegebene Bedeutung hat.

**17.** Verfahren gemäss einem der Ansprüche 1 bis 16, dadurch gekennzeichnet, dass man einen der Farbstoffe der Formeln (35), (36), (37) und (38)

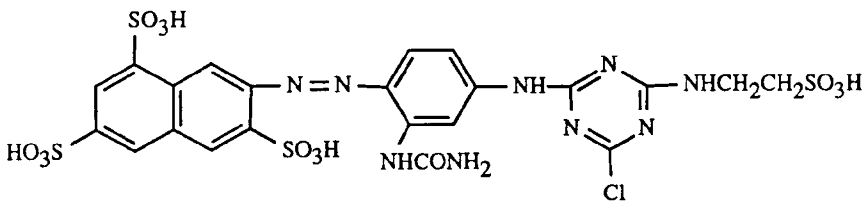
(35),

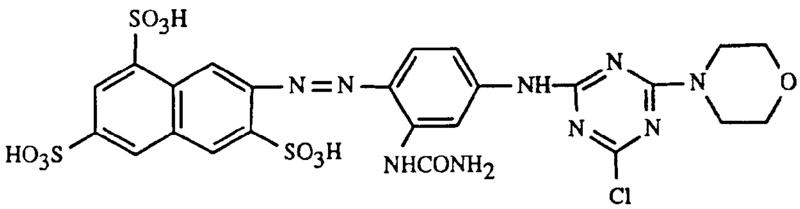
(36),

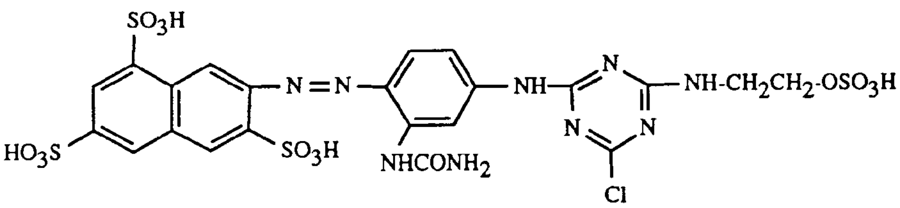
(37)

oder

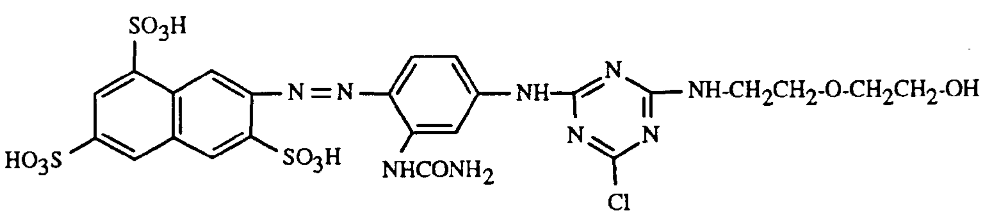
(38)

und einen der Farbstoffe der Formeln (39), (22), (40), (41) und (42)

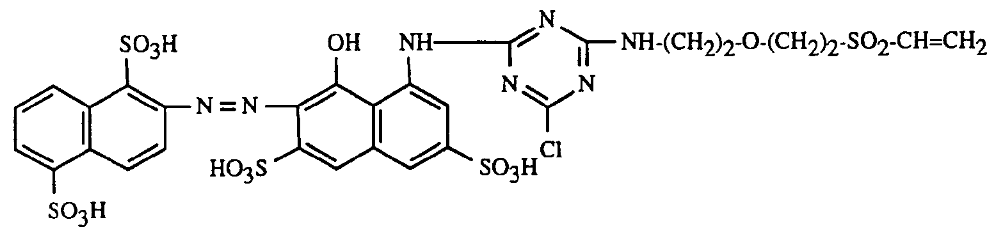

(39),

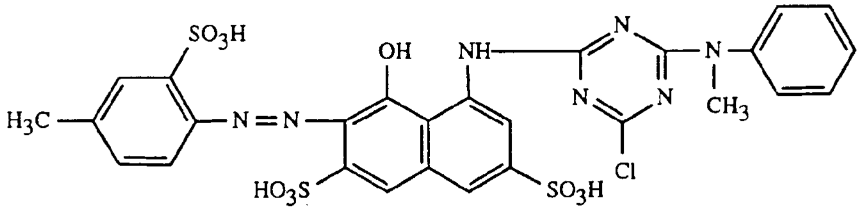

(22),

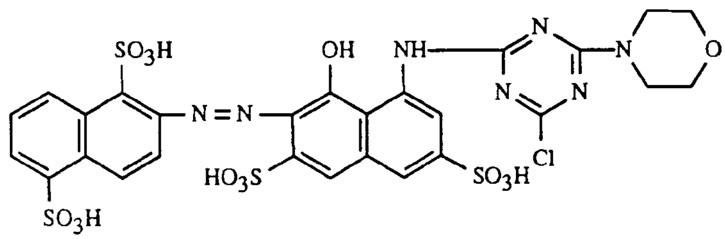

(40),

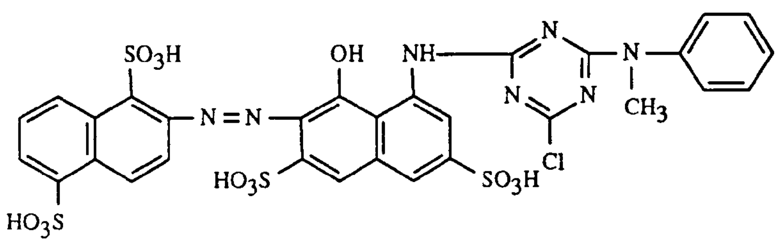

(41),

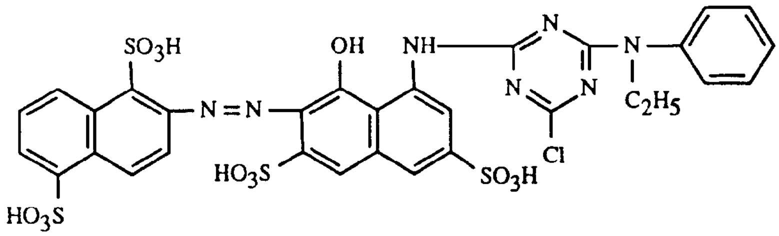

(42)

zusammen mit dem Farbstoff der Formel

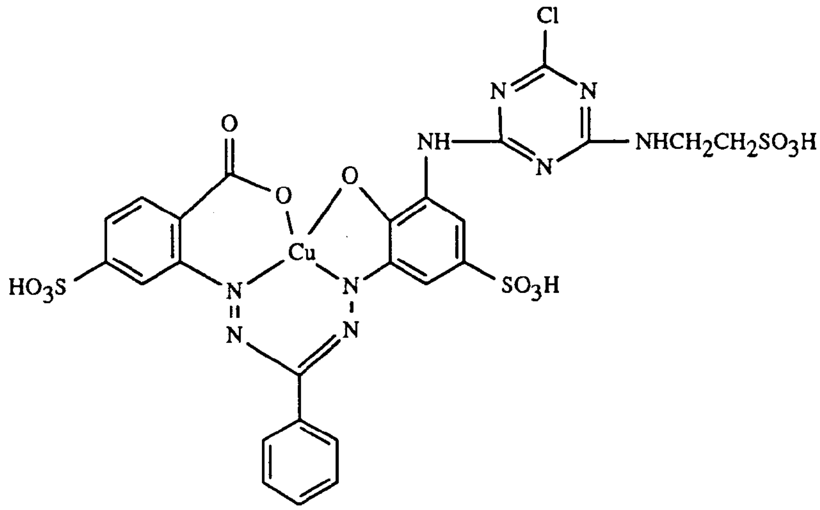

(25)

oder

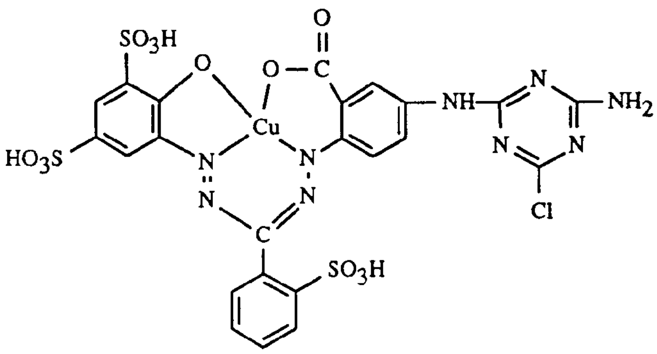

(32)

verwendet.

**18.** Verfahren gemäss einem der Ansprüche 1 bis 16, dadurch gekennzeichnet, dass man die Farbstoffe der Formeln

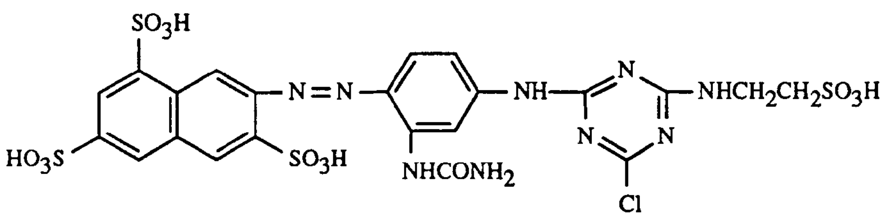

(35),

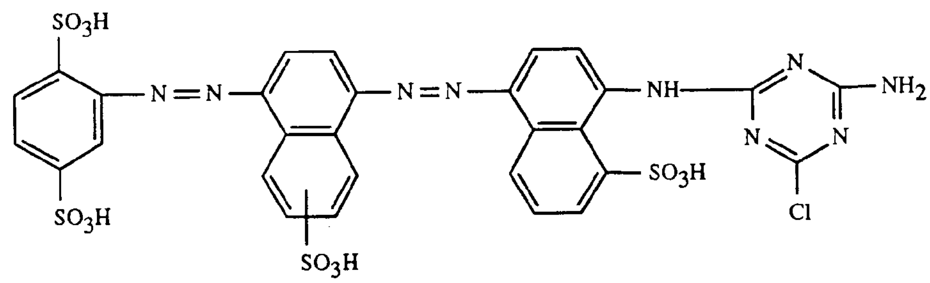

(23)

und

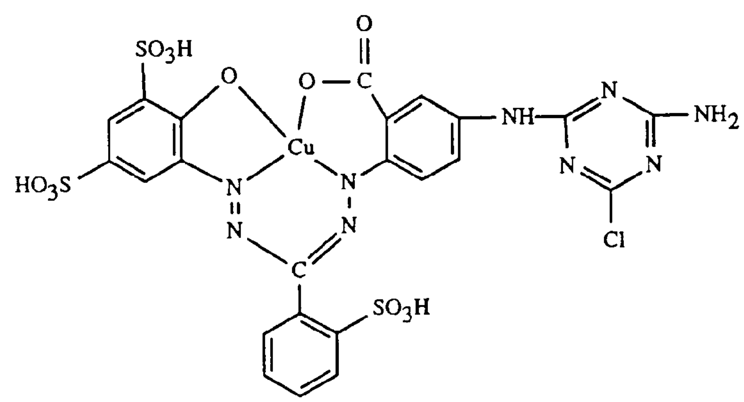

(32)

verwendet.

**19.** Verfahren gemäss einem der Ansprüche 1 bis 16, dadurch gekennzeichnet, dass man die Farbstoffe der Formeln

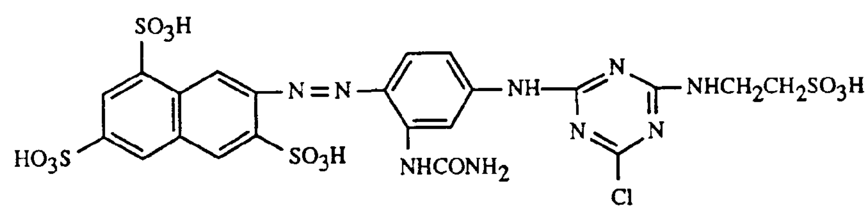

(35),

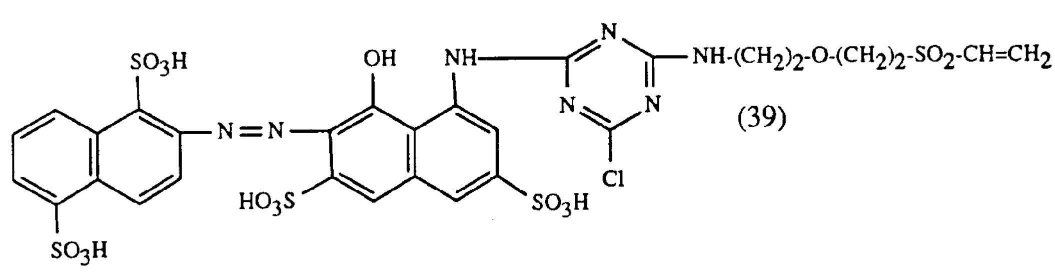

(39)

oder

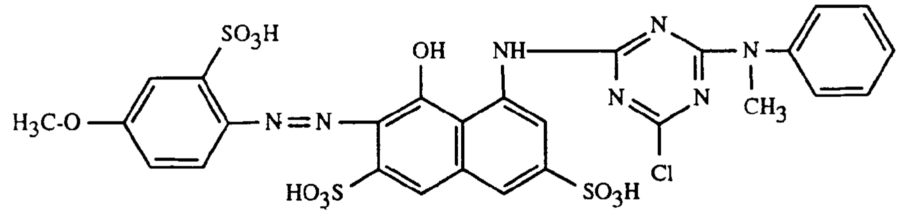

(22)

und

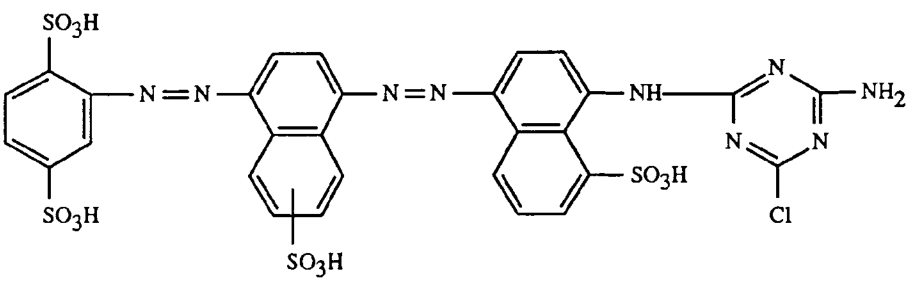

(23)

oder

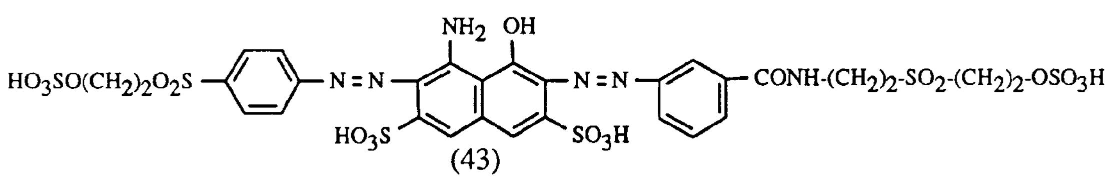

(43)

verwendet.

**20.** Verfahren gemäss einem der Ansprüche 1 bis 19, dadurch gekennzeichnet, dass man färbt.

**21.** Verfahren gemäss Anspruch 20, dadurch gekennzeichnet, dass man kontinuierlich färbt.

**22.** Verfahren gemäss einem der Ansprüche 1 bis 19, dadurch gekennzeichnet, dass man druckt.

**23.** Verfahren gemäss einem der Ansprüche 1 bis 19, dadurch gekennzeichnet, dass man cellulosehaltige textile Fasermaterialien mit Farbstoffen gemäss einem der Ansprüche 1 bis 19 imprägniert, die imprägnierte Ware gegebenenfalls nachbehandelt, und zur Fixierung der Farbstoffe auf der Faser die Ware dämpft oder thermofixiert.

**24.** Verfahren gemäss einem der Ansprüche 1 bis 21 und 23, dadurch gekennzeichnet, dass man die Reaktivfarbstoffe mit einer Foulardflotte mit einem Flottenverhältnis von 1:0,5 bis 1:1,2, insbesondere 1:0,5 bis 1:0,8, verwendet.

**25.** Verfahren gemäss einem der Ansprüche 1 bis 24, dadurch gekennzeichnet, dass man Baumwolle als Fasermaterial verwendet.

**26.** Verfahren gemäss einem der Ansprüche 1 bis 21,23 und 24, dadurch gekennzeichnet, dass man die Reaktivfarbstoffe mit einer Foulardflotte aufträgt, die Ware, insbesondere Baumwolle, trocknet, anschliessend die Ware mit einer Flotte, enthaltend das Fixieralkali, imprägniert und dann die Ware dämpft.

**27.** Verfahren gemäss einem der Ansprüche 1 bis 26, dadurch gekennzeichnet, dass man bei einer Temperatur zwischen 100 und 120°C, insbesondere zwischen 100 und 105°C, dämpft.

**28.** Verfahren gemäss einem der Ansprüche 1 bis 21,23,24 und 25, dadurch gekennzeichnet, dass man die Reaktivfarbstoffe in Gegenwart eines Fixieralkali mit einer Foulardflotte aufträgt, die Ware trocknet und anschliessend bei einer Temperatur von 110 bis 220°C thermofixiert.

**29.** Verfahren gemäss einem der Ansprüche 26 und 28, dadurch gekennzeichnet, dass man als Fixieralkali Alkalicarbonate, Alkalihydrogencarbonate oder Alkaliphosphate oder Mischungen der genannten Fixieralkali verwendet.

**30.** Verfahren gemäss Anspruch 29, dadurch gekennzeichnet, dass man das Fixieralkali zusammen mit einem Neutralsalz, insbesondere Natriumsulfat oder Natriumchlorid, verwendet.

**31.** Verfahren gemäss einem der Ansprüche 1 bis 21, dadurch gekennzeichnet, dass man das Fasermaterial mit einer Farbstofflösung oder -suspension, die bereits das Fixieralkali sowie gegebenenfalls weitere Zusätze enthält, imprägniert, dann die Ware luftdicht verpackt und bei einer Temperatur zwischen 10 und 40°C, insbesondere zwischen 20 und 30°C, während 4 bis 80 Stunden, insbesondere während 8 bis 48 Stunden lagert.

**32.** Verfahren gemäss einem der Ansprüche 1 bis 19 und 22, dadurch gekennzeichnet, dass man das Fasermaterial mit einer Druckpaste enthaltend ausser den Reaktivfarbstoffen mindestens ein alkalisch wirkendes Mittel, gegebenenfalls einen Lösungsvermittler, ein Verdickungsmittel, gegebenenfalls ein Oxydationsmittel, sowie Wasser, bedruckt, dann die Ware gegebenenfalls nach Trocknung zur Fixierung der Farbstoffe auf der Faser dämpft oder thermofixiert.

**33.** Das nach dem Verfahren gemäss Anspruch 1 gefärbte oder bedruckte Fasermaterial.

## Claims

**1.** A process for dyeing or printing cellulosic textile fibre materials by the trichromatic technique, which process comprises dyeing or printing these fibre materials from an aqueous liquor with at least one red or reddish brown dyeing dye of formula

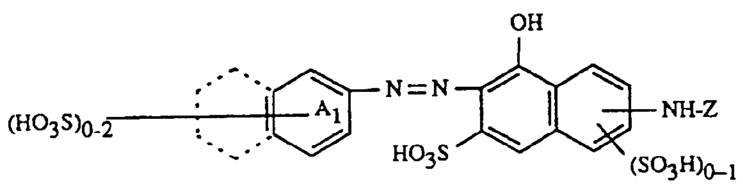

(1)

or

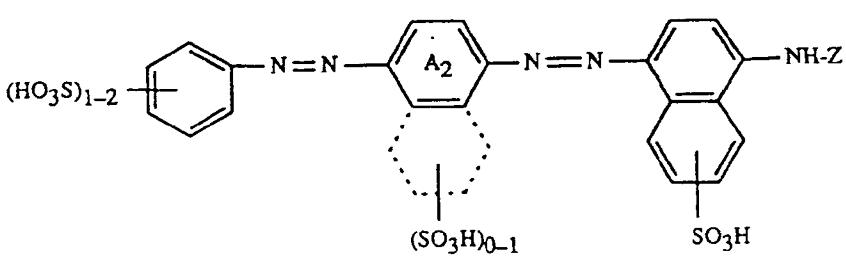

(2)

and at least one yellow or orange dyeing dye of formula

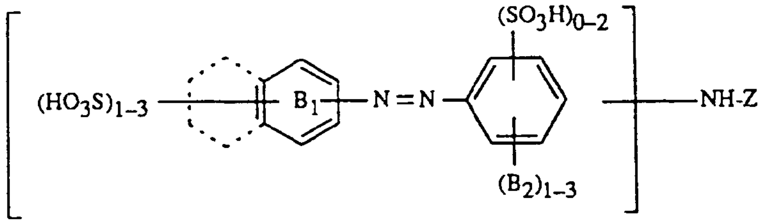

(3)

or

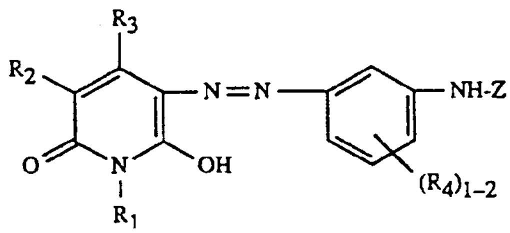

(4)

and at least one blue dyeing dye of formula

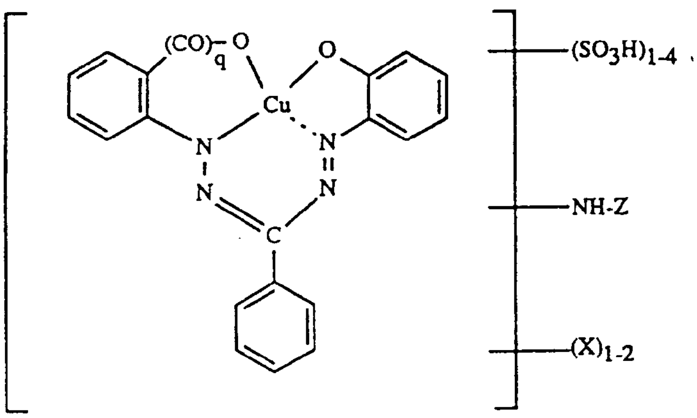

(5),

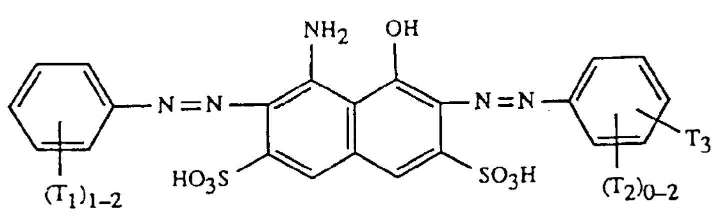

(6)

or

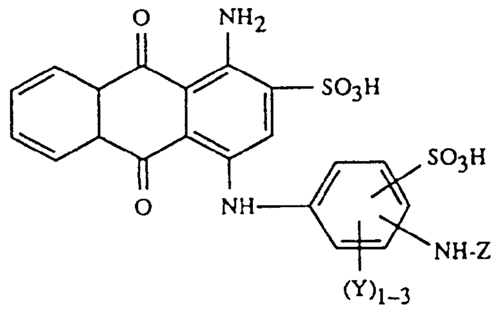

(7)

in which process, in formulae (1), (2) and (3) above, the benzene rings $A_1$, $A_2$ and $B_1$ may be further substituted, and the benzene rings $A_1$, $A_2$ and $B_1$, together with the fused benzene rings indicated in dashed outline, denote possible alternative naphthalene rings, $(B_2)_{1-3}$ denotes 1 to 3 substituents $B_2$, each independently of one another selected from the group consisting of hydrogen, $C_1$-$C_4$alkyl, $C_1$-$C_4$alkoxy, $C_2$-$C_4$alkanoylamino, halogen, nitro, cyano, trifluoromethyl, sulfamoyl, carbamoyl, amino, hydroxyl, carboxyl, sulfomethyl, sulfo or ureido, $R_1$ and $R_3$, each independently of the other, are hydrogen, $C_1$-$C_4$alkyl or phenyl, and $R_2$ is hydrogen, cyano, carbamoyl or sulfomethyl, $(R_4)_{1-2}$ denotes 1 to 2 substituents $R_4$, each independently of the other selected from the group consisting of hydrogen and sulfo, $(X)_{1-2}$ denotes 1 to 2 substituents X, each independently of the other selected from the group consisting of hydrogen, $C_1$-$C_4$alkyl, $C_1$-$C_4$alkoxy, halogen, $C_2$-$C_4$alkanoylamino, hydroxyl, carboxyl, sulfo, cyano or nitro, q is 0 or 1, $(T_1)_{1-2}$ denotes 1 to 2 substituents T1, each independently of the other selected from the group consisting of sulfo and $-SO_2$-Z', where Z' is (β-sulfatoethyl, β-haloethyl or vinyl, $(T_2)_{1-2}$ denotes 1 to 2 substituents $T_2$, each independently of the other selected from the group consisting of hydrogen and sulfo, $T_3$ is the radical -NH-Z or $-CONH-(CH_2)_{2-3}-SO_2$-Z', and Z' has the given meaning, $(Y)_{1-3}$ denotes 1 to 3 substituents Y, each independently of one another selected from the group consisting of hydrogen and $C_1$-$C_4$alkyl, and Z in formulae (1) to (7) is a 2-chloro-s-triazin-6-yl radical which contains in 4-position an unsubstituted or substituted amino group, or is a 2,4-difluoro-5-chloropyrimidin-6-yl radical.

2. A process according to claim 1, which comprises using as dye of formula (1) a dye of formula

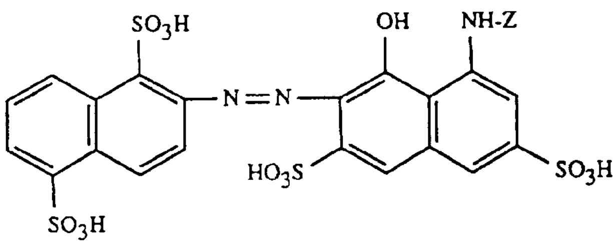

(10)

or

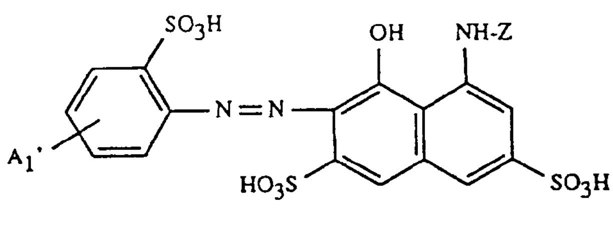

(11),

in which Z is as defined above, and $A_1$' is hydrogen, $C_1$-$C_4$alkyl, $C_1$-$C_4$alkoxy, halogen or $C_2$-$C_4$alkanoylamino, together with a dye of formulae (3) or (4) and (5), (6) or (7).

3. A process according to claim 1, which comprises using as dye of formula (2) a dye of formula

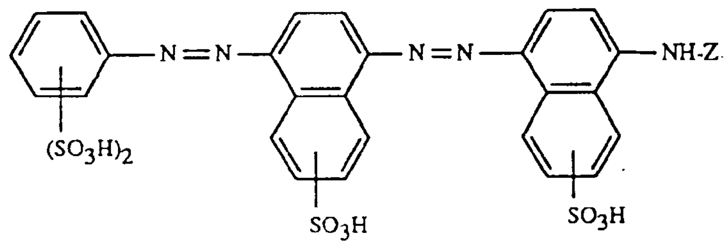

(12),

in which Z is as defined above, together with a dye of formulae (3) or (4) and (5), (6) or (7).

4. A process according to claim 1, which comprises using as dye of formula (3) a dye of formula

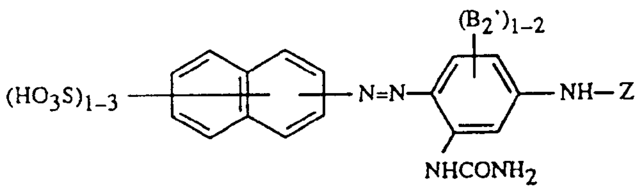

(13),

in which $(B_2')_{1-2}$ denotes 1 to 2 substituents $B_2'$, each independently of the other selected from the group consisting of hydrogen, halogen, nitro, cyano, trifluoromethyl, sulfamoyl, carbamoyl, $C_{1-4}$alkyl, $C_{1-4}$alkoxy, amino, acetylamino, ureido, hydroxyl, carboxyl, sulfomethyl and sulfo, and Z is as defined above, together with a dye of formula (1) or (2) and (5), (6) or (7).

5. A process according to claim 1, which comprises using as dye of formula (5) a dye of formula

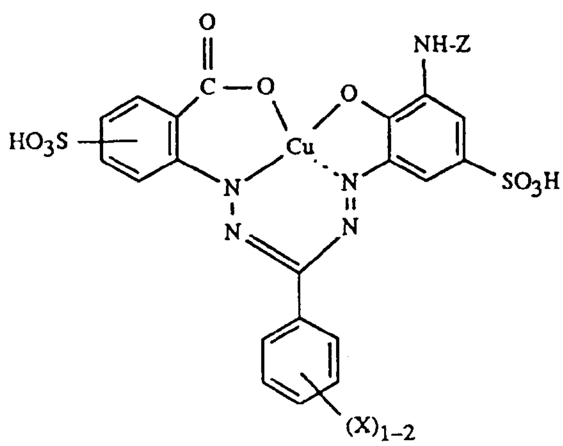

(14),

in which $(X)_{1-2}$ denotes 1 to 2 substituents X, each independently of the other selected from the group consisting of hydrogen, halogen, $C_1$-$C_4$alkyl, $C_1$-$C_4$alkoxy, $C_2$-$C_4$alkanoylamino, hydroxyl, carboxyl and sulfo, and Z is as defined in claim 1, together with a dye of formula (1) or (2) and (3) or (4).

6. A process according to claim 1, which comprises using as dye of formula (5) a dye of formula

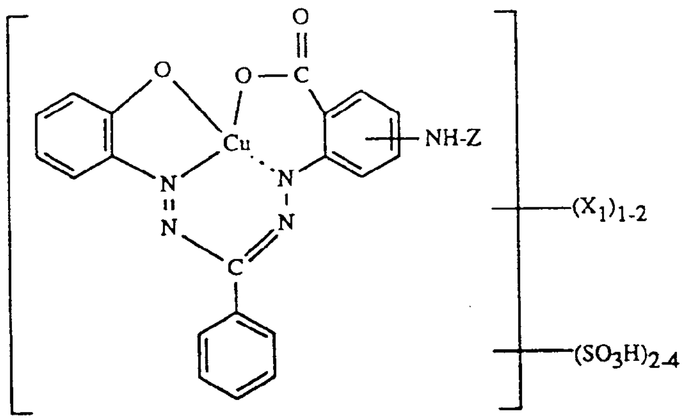

(15),

in which $(X_1)_{1-2}$ denotes 1 to 2 substituents $X_1$, each independently of the other selected from the group consisting of hydrogen, halogen, $C_1$-$C_4$alkyl, $C_1$-$C_4$alkoxy, $C_2$-$C_4$alkanoylamino, hydroxyl and carboxyl, and Z is as defined in claim 1, together with a dye of formula (1) or (2) and (3) or (4).

7. A process according to claim 1, which comprises using as dye of formula (6) a dye of formula

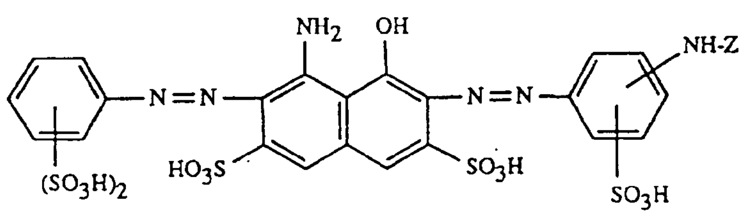

(16)

or

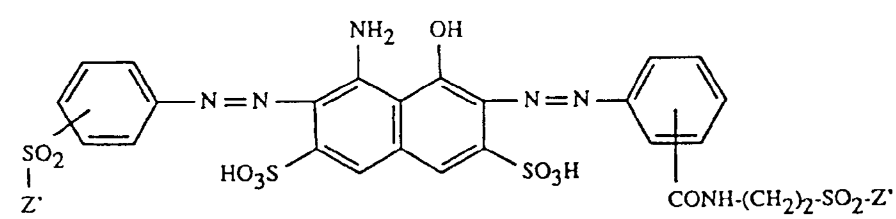

(17)

in which Z and Z' are as defined in claim 1, together with a dye of formula (1) or (2) and (3) or (4).

8. A process according to any one of claims 1 to 7, which comprises using dyes in which Z is a radical of formula

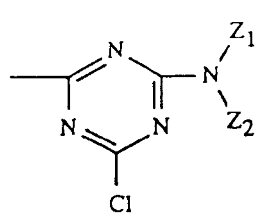

(20)

and $Z_1$ and $Z_2$, each independently of the other, are hydrogen, unsubstituted or substituted $C_1$-$C_6$alkyl, unsubstituted or substituted $C_5$-$C_7$cycloalkyl or unsubstituted or substituted phenyl or naphthyl.

9. A process according to claim 8, which comprises using dyes in which Z is a radical of formula (20) and $Z_1$ and $Z_2$, each independently of the other, are hydrogen, $C_1$-$C_6$alkyl which may be substituted by hydroxyl, $C_1$-$C_4$alkoxy, hydroxy-$C_1$-$C_4$alkoxy, halogen, sulfo, sulfato or a fibre-reactive radical, $C_5$-$C_7$cycloalkyl which may be substituted by $C_1$-$C_4$alkyl, phenyl or naphthyl which may be substituted by $C_1$-$C_4$alkyl, $C_1$-$C_4$hydroxyalkyl, $C_1$-$C_4$alkoxy, halogen, $C_2$-$C_4$alkanoylamino, sulfo or a further fibre-reactive radical, or in which $-N(Z_1)Z_2$ is a radical of formulae (8b) to (8g), or is morpholino, piperidino or piperazino.

10. A process according to claim 2, which comprises using as dye of formula (10) a dye of formula

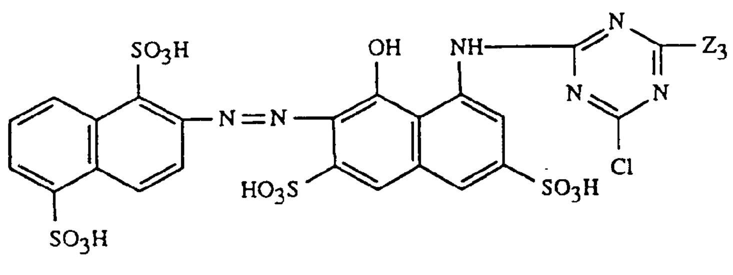

(21),

in which $Z_3$ is morpholino, N-methylanilino, N-ethylanilino or -NH- $(CH_2)_2$-O- $(CH_2)_2$-$SO_2$-Z', where Z' is β-sulfatoethyl, β-chloroethyl or vinyl.

11. A process according to claim 2, which comprises using as dye of formula (11) a dye of formula

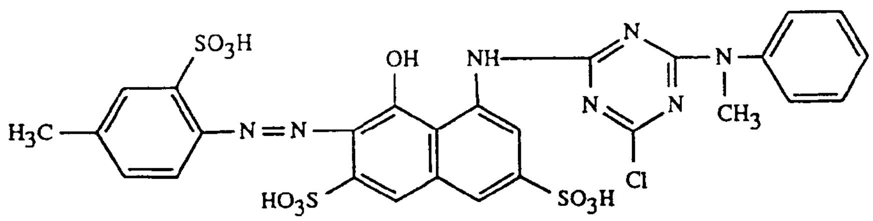

(22)

12. A process according to claim 3, which comprises using as dye of formula (12) a dye of formula

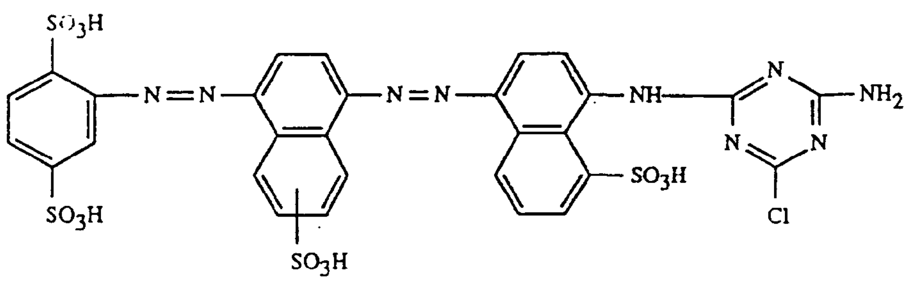

(23)

13. A process according to claim 4, which comprises using as dye of formula (13) a dye of formula

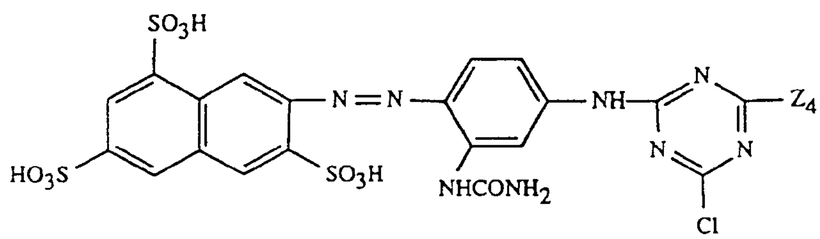

(24)

in which $Z_4$ is β-sulfoethylamino, β-sulfatoethylamino, morpholino or -NH- $(CH_2)_2$-O- $(CH_2)_2$-OH.

**14.** A process according to claim 5, which comprises using as dye of formula (14) a dye of formula

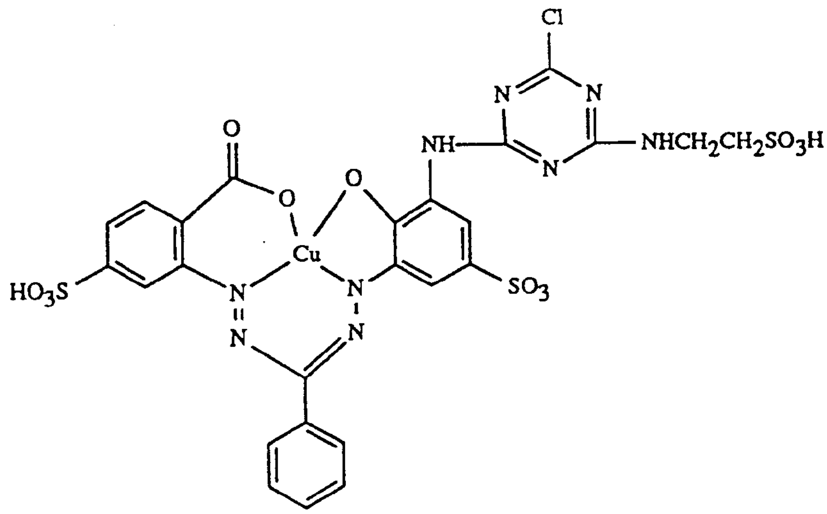

(25),

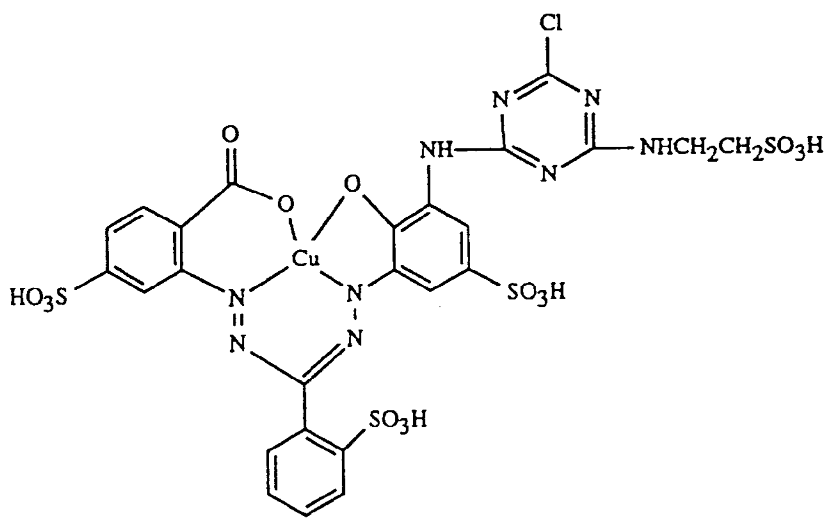

(26),

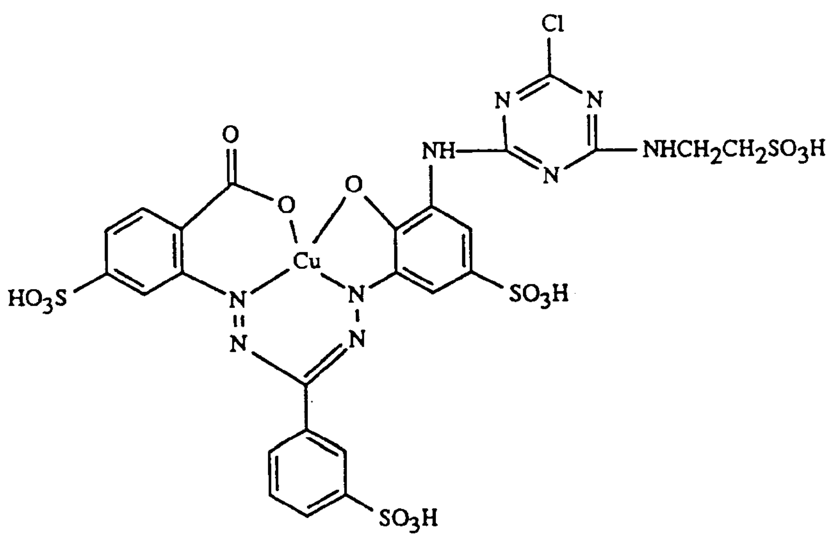

(27),

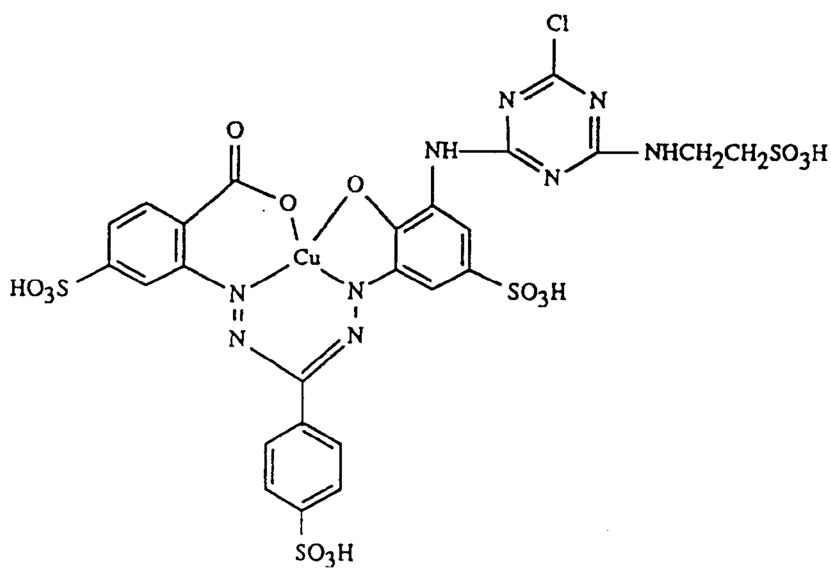

(28),

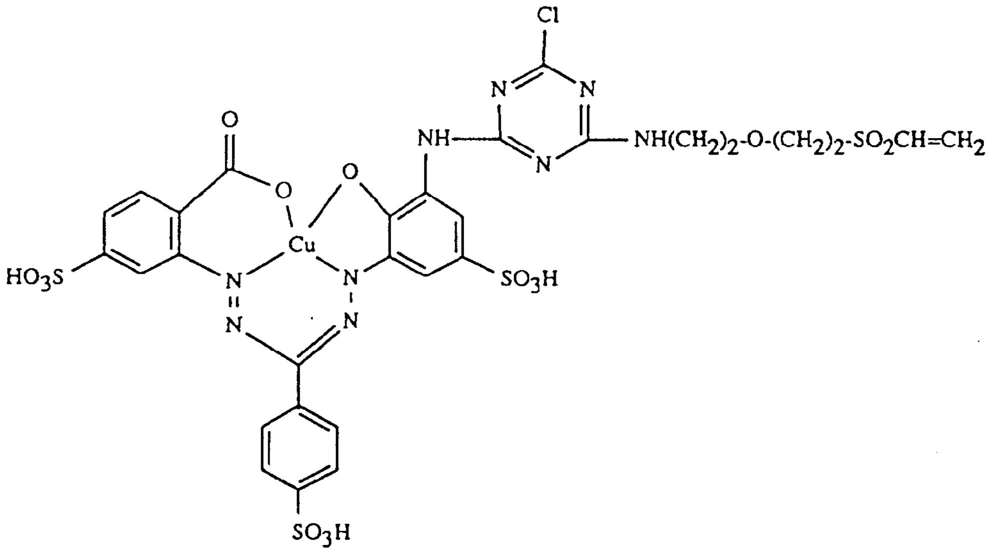

(29),

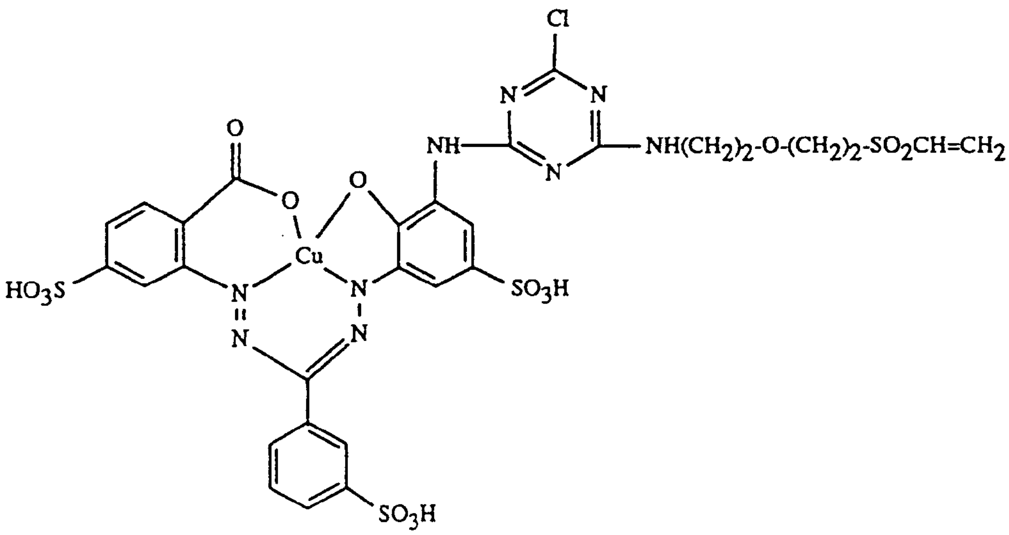

(30)

or

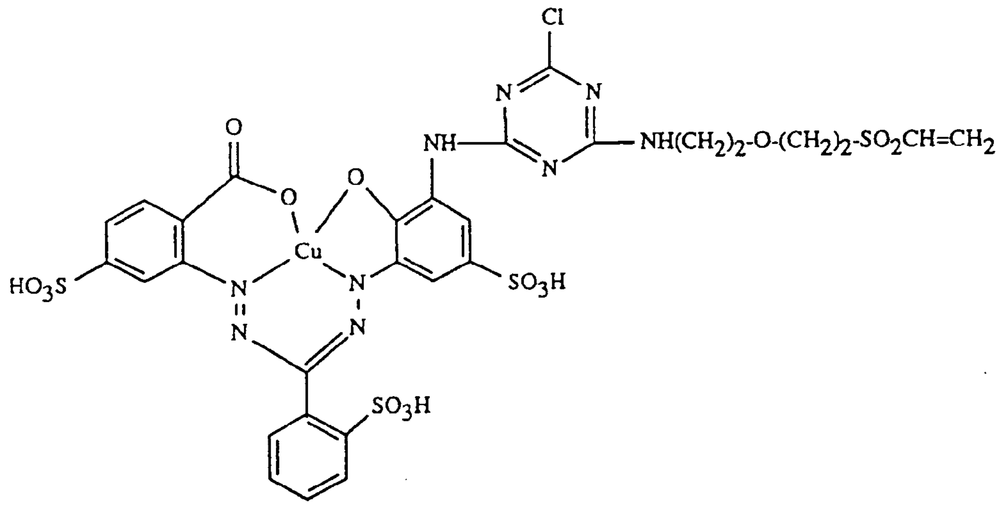

(31)

15. A process according to claim 6, which comprises using as dye of formula (15) a dye of formula

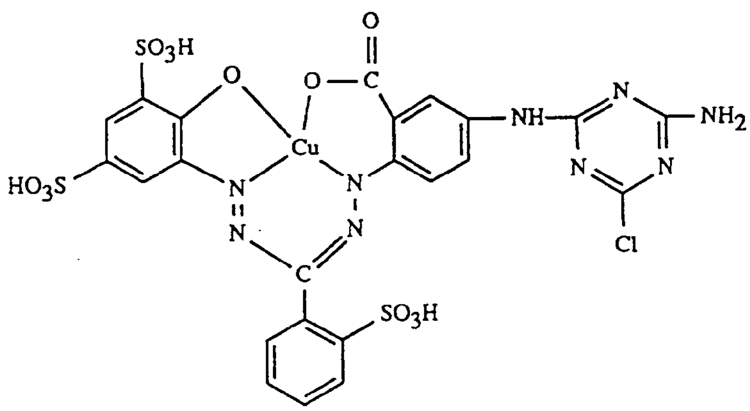

(32)

16. A process according to claim 7, which comprises using as dye of formula (16) a dye of formula

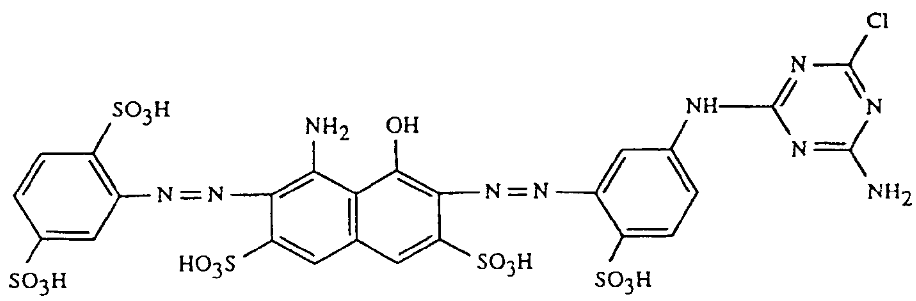

(33)

and as dye of formula (17) a dye of formula

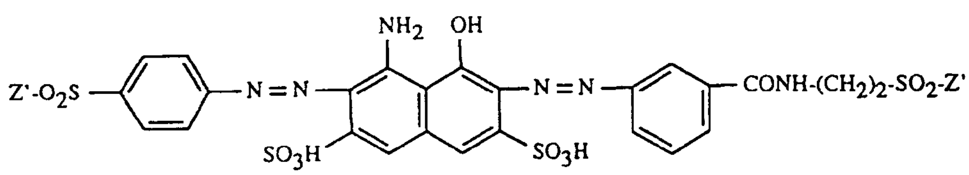

(34)

in which Z' is as defined in claim 7.

17. A process according to any one of claims 1 to 16, which comprises using one of the dyes of formulae (35), (36), (37) and (38)

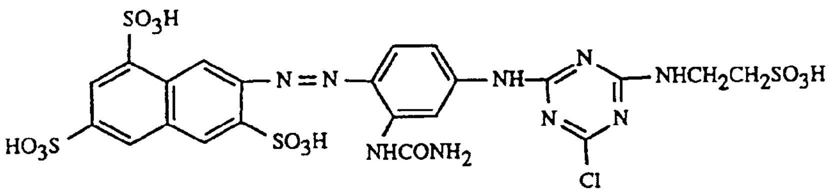

(35),

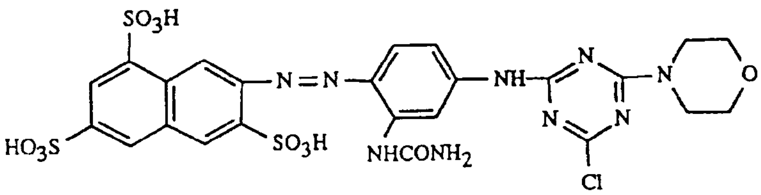

(36),

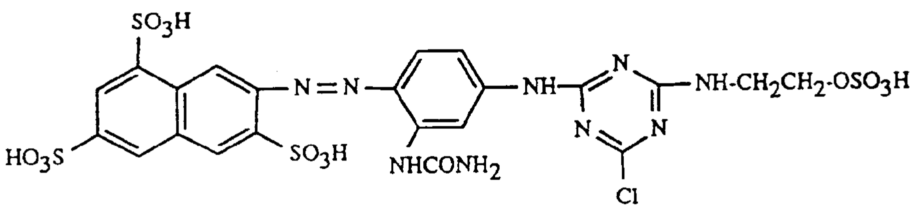

(37)

or

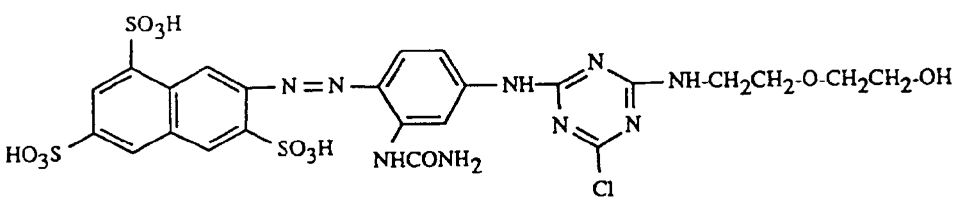

(38)

and one of the dyes of formulae (39), (22), (40), (41) and (42)

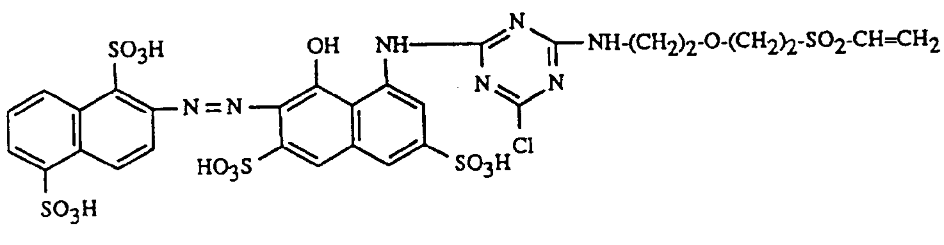

(39), .

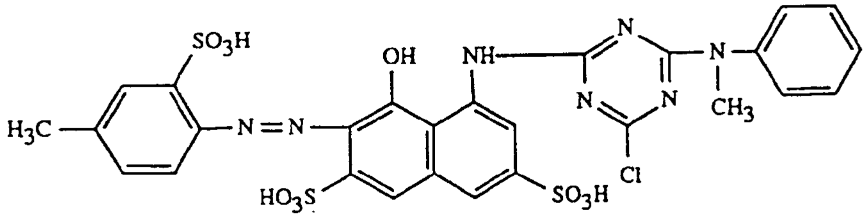

(22),

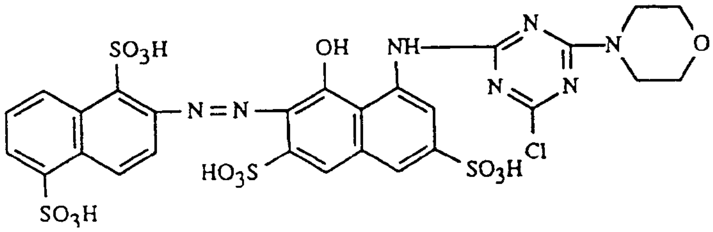

(40),

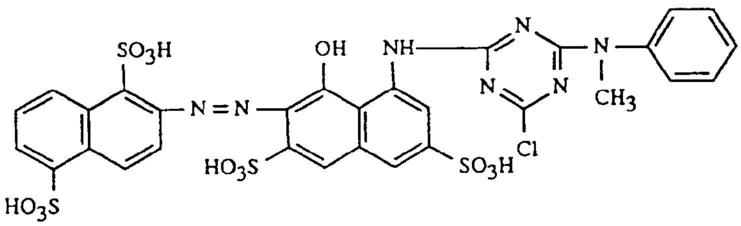

(41),

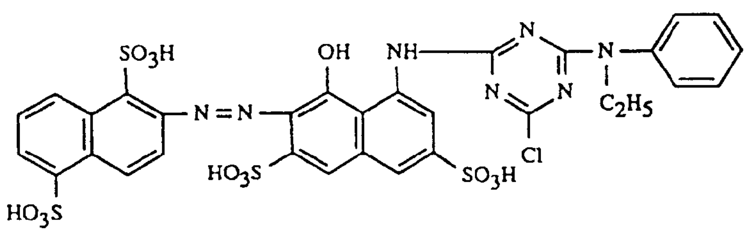

(42).

together with the dye of formula

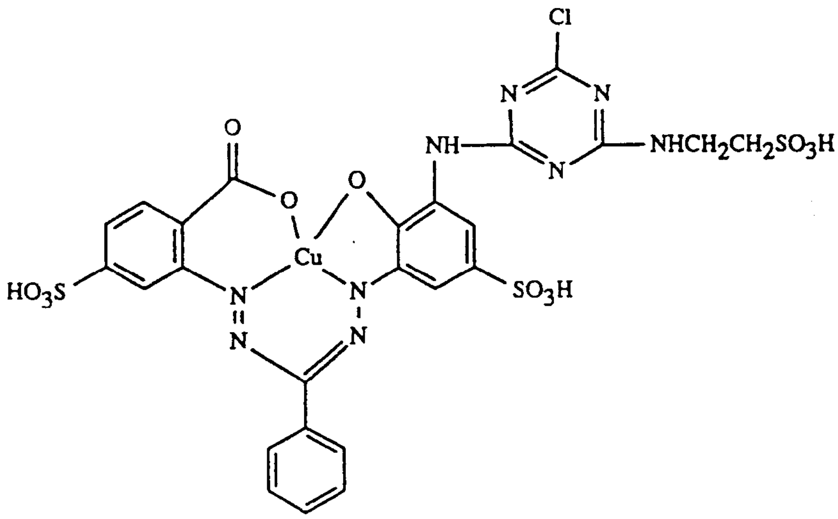

(25)

or

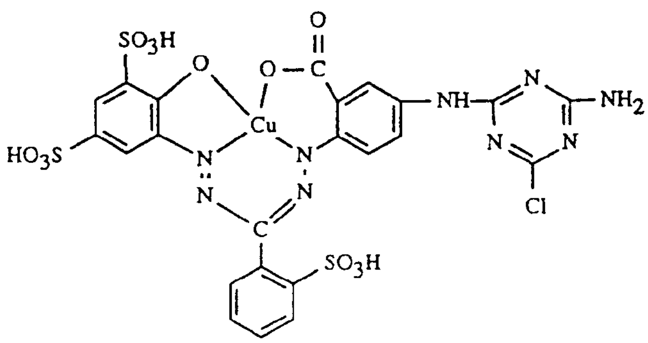

(32)

**18.** A process according to any one of claims 1 to 16, which comprises using the dyes of formulae

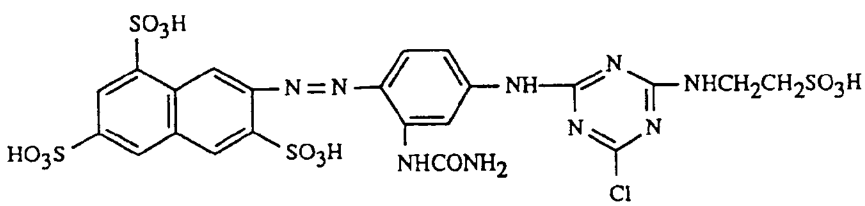

(35),

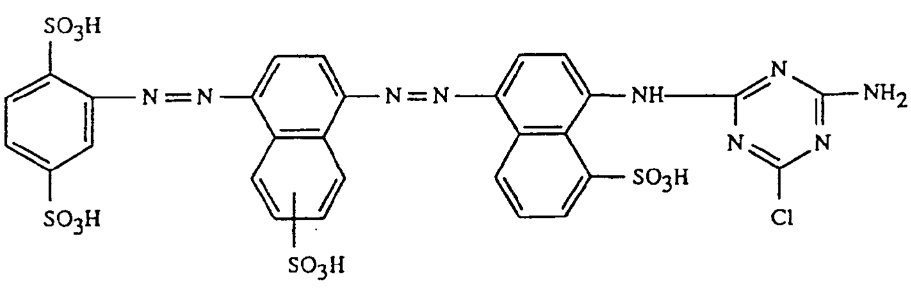

(23)

and

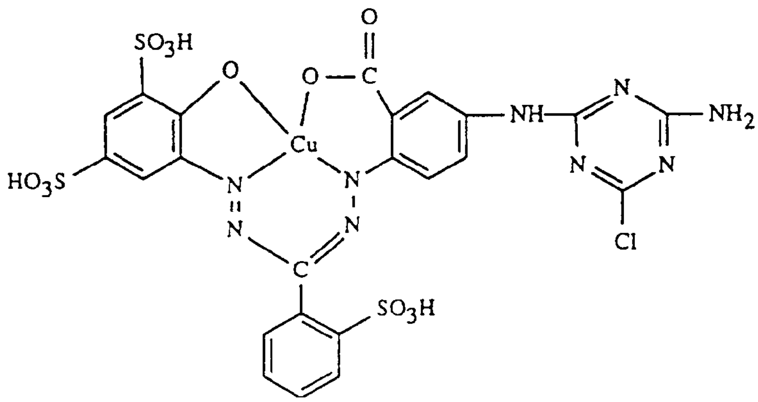

(32)

**19.** A process according to any one of claims 1 to 16, which comprises using the dyes of formulae

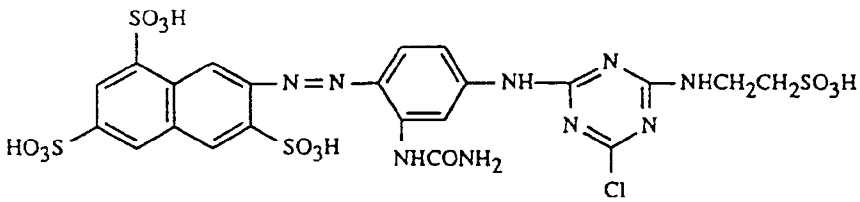

(35),

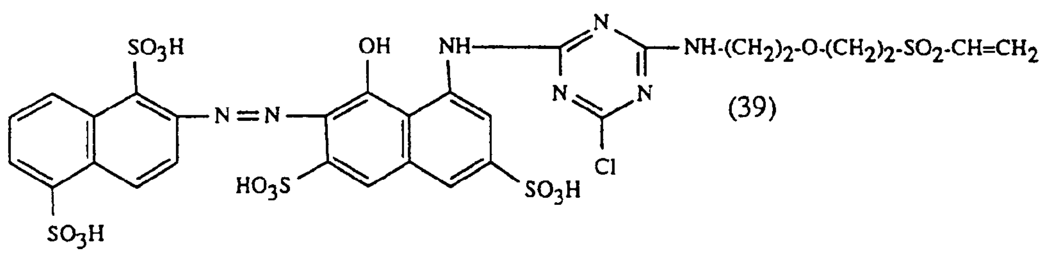

(39)

or

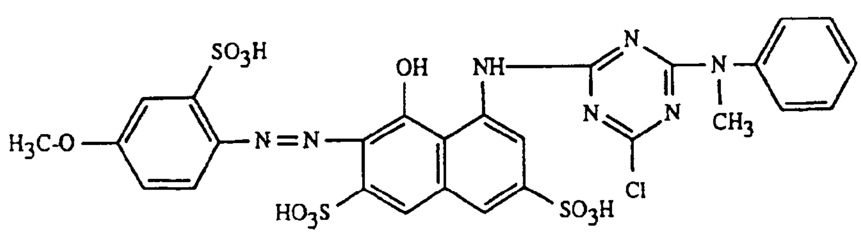

(22)

and

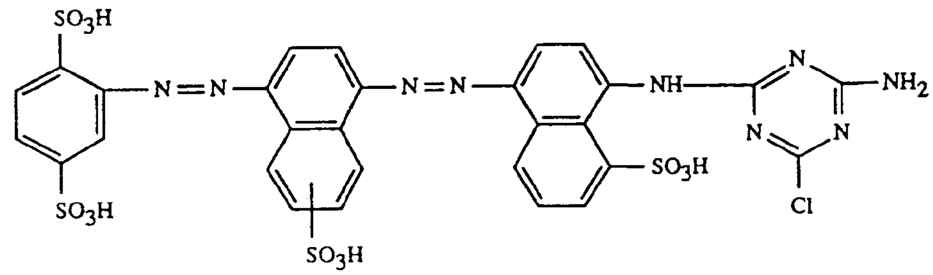

(23)

or

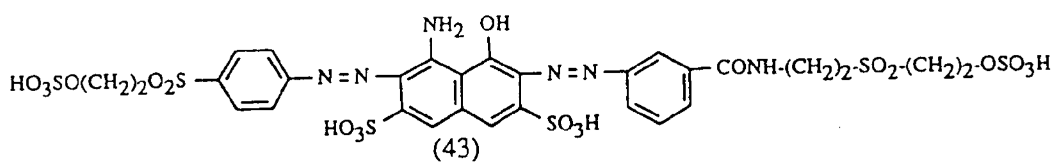

(43)

**20.** A process according to any one of claims 1 to 19 for dyeing.

**21.** A process according to claim 20, wherein dyeing is carried out continuously.

**22.** A process according to any one of claims 1 to 19 for printing.

**23.** A process according to any one of claims 1 to 19, which comprises impregnating cellulosic textile fibre material with dyes according to any one of claims 1 to 19, subjecting the impregnated material to an optional aftertreatment, and steaming or thermofixing said material to fix the dyes on the fibre.

**24.** A process according to any one of claims 1 to 21 and 23, which comprises applying the reactive dyes from a padding liquor in a liquor to goods ratio of 1:0.5 to 1:1.2, especially of 1:0.5 to 1:0.8.

**25.** A process according to any one of claims 1 to 24, wherein the fibre material is cotton.

**26.** A process according to any one of claims 1 to 21, 23 and 24, which comprises applying the reactive dyes with a padding liquor, drying the goods, especially cotton, thereafter impregnating the goods with a liquor which contains the fixing alkali, and subsequently steaming the goods.

**27.** A process according to any one of claims 1 to 26, wherein steaming is carried out in the temperature range from 100 to 120°C, especially from 100 to 105°C.

**28.** A process according to any one of claims 1 to 21, 23, 24 and 25, which comprises applying the reactive dyes with a padding liquor in the presence of a fixing alkali, drying the goods and thereafter thermofixing them in the temperature range from 110 to 220°C.

**29.** A process according to either claim 26 or claim 28, wherein the fixing alkali is selected from alkali metal carbonates, alkali metal hydrogencarbonates or alkali metal phosphates or mixtures of said fixing alkalies.

**30.** A process according to claim 29, wherein the fixing alkali is used. together with a neutral salt, especially sodium sulfate or sodium chloride.

**31.** A process according to any one of claims 1 to 21, which comprises impregnating the fibre material with a dye solution or suspension which already contains the fixing alkali and further optional additives, then packing the goods airtight and storing them in the temperature range from 10 to 40°C, especially from 20 to 30°C, for 4 to 80 hours, especially for 8 to 48 hours.

**32.** A process according to any one of claims 1 to 19 and 22, which comprises printing the fibre material with a print paste comprising, in addition to the reactive dyes, at least one alkaline agent, optionally a solubiliser,

a thickener, optionally an oxidising agent, as well as water, then, if appropriate after drying the goods, steaming or thermofixing the printed material to fix the dyes on the fibre.

**33.** The fibre material dyed or printed by the process according to claim 1.

## Revendications

**1.** Procédé de teinture ou d'impression en trichromie de matériaux fibreux textiles contenant de la cellulose, caractérisé en ce que l'on teint ou imprime ces matériaux fibreux, en bain aqueux, avec au moins un colorant donnant une couleur rouge ou rouge-brun, de formule :

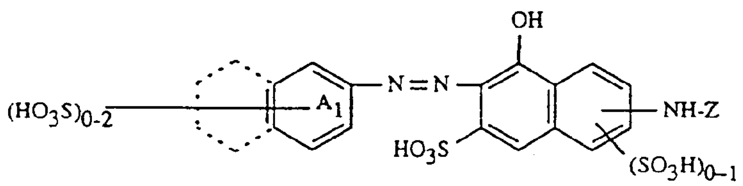

(1)

ou

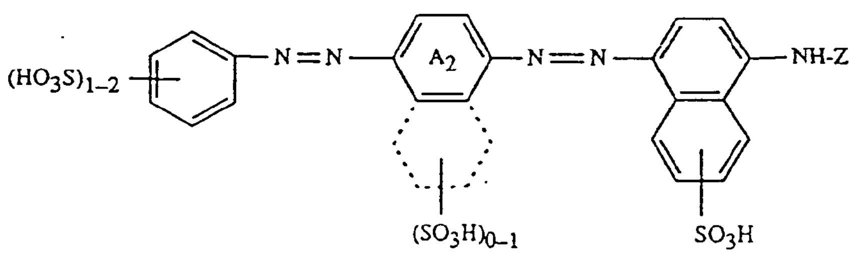

(2)

et au moins un colorant donnant une couleur jaune ou orangée, de formule :

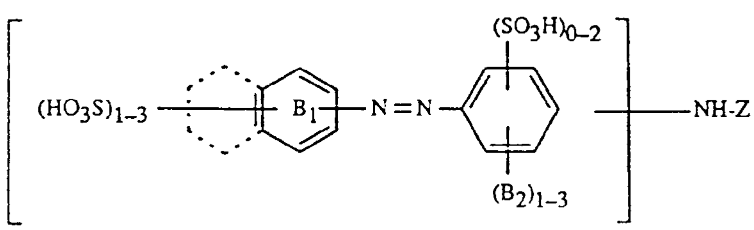

(3)

ou

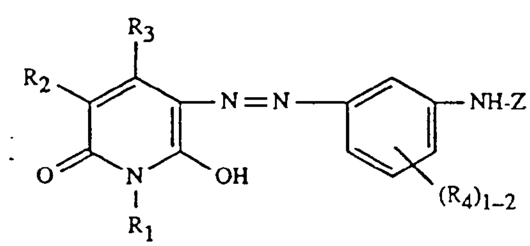

(4)

et au moins un colorant donnant une couleur bleue, de formule :

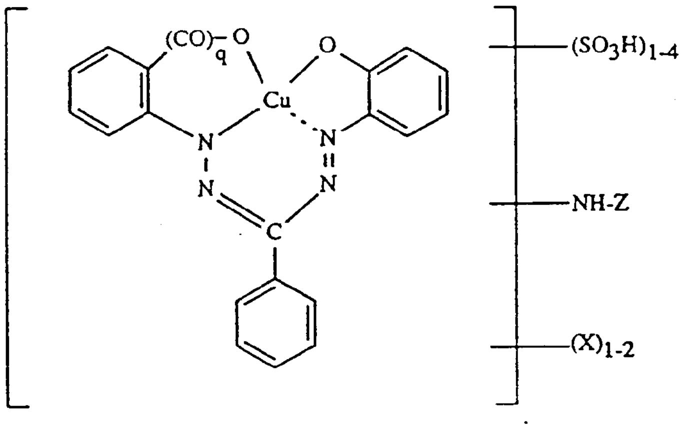

(5)

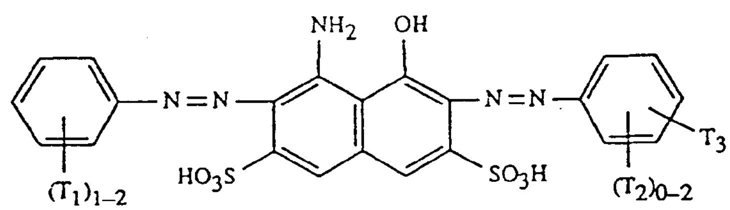

(6)

ou

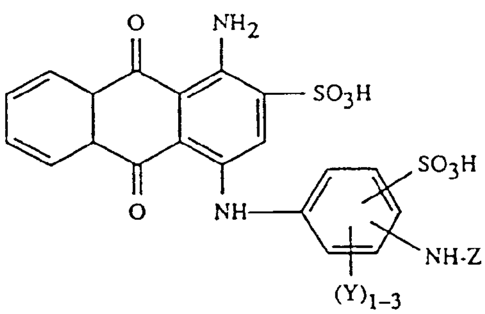

(7)

formules dans lesquelles les noyaux benzéniques $A_1$, $A_2$ et $B_1$ des formules (1), (2) et (3) peuvent porter d'autres substituants, ces noyaux benzéniques $A_1$, $A_2$ et $B_1$ pouvant également représenter, conjointement avec les noyaux benzéniques condensés dessinés en pointillés, d'éventuels noyaux naphtaléniques, $(B_2)_{1-3}$ représente de 1 à 3 substituants $B_2$, choisis indépendamment les uns des autres dans l'ensemble constitué par les atomes d'hydrogène et d'halogène et par les groupes alkyle en $C_1$-$C_4$, alcoxy en $C_1$-$C_4$, alcanoylamino en $C_2$-$C_4$, nitro, cyano, trifluorométhyle, sulfamyle, carbamyle, amino, hydroxy, carboxy, sulfométhyle, sulfo et uréido, $R_1$ et $R_3$ représentent, indépendamment l'un de l'autre, un atome d'hydrogène ou un groupe alkyle en $C_1$-$C_4$ ou phényle et $R_2$ représente un atome d'hydrogène ou un groupe cyano, carbamyle ou sulfométhyle, $(R_4)_{1-2}$ représente de 1 à 2 substituants $R_4$, choisis indépendamment l'un de l'autre dans l'ensemble constitué par un atome d'hydrogène et un groupe sulfo, $(X)_{1-2}$ représente de 1 à 2 substituants X, choisis indépendamment l'un de l'autre dans l'ensemble constitué par les atomes d'hydrogène et d'halogène et par les groupes alkyle en $C_1$-$C_4$, alcoxy en $C_1$-$C_4$, alcanoylamino en $C_2$-$C_4$, hydroxy, carboxy, sulfo, cyano et nitro, q représente le nombre 0 ou 1, $(T_1)_{1-2}$ représente de 1 à 2 substituants $T_1$, choisis indépendamment l'un de l'autre dans l'ensemble constitué par le groupe sulfo et les groupes $-SO_2$-Z' où Z' représente un groupe β-sulfatoéthyle, β-halogénoéthyle ou vinyle, $(T_2)_{1-2}$ représente de 1 à 2 substituants $T_2$, choisis indépendamment l'un de l'autre dans l'ensemble constitué par un atome d'hydrogène et un groupe sulfo, $T_3$ représente le groupe -NH-Z ou $-CONH-(CH_2)_{2-3}-SO_2$-Z', Z' ayant la signification déjà indiquée, $(Y)_{1-3}$ représente de 1 à 3 substituants Y, choisis indépendamment l'un de l'autre dans l'ensemble constitué par l'atome d'hydrogène et les groupes alkyle en $C_1$-$C_4$, et Z, dans les formules (1) à (7) représente un reste 2-chloro-s-triazine-6-yle, portant en position 4 un groupe amino éventuellement substitué, ou un reste 2,4-difluoro-5-chloro-pyrimidine-6-yle.

2. Procédé conforme à la revendication 1, caractérisé en ce que l'on utilise, comme colorant de formule (1), un colorant de formule :

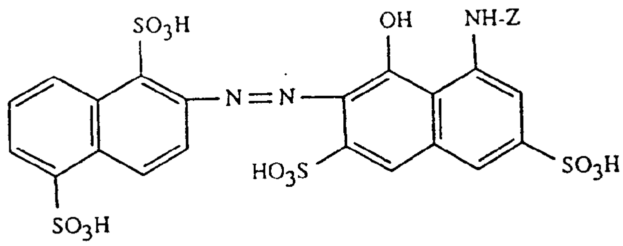

(10)

ou

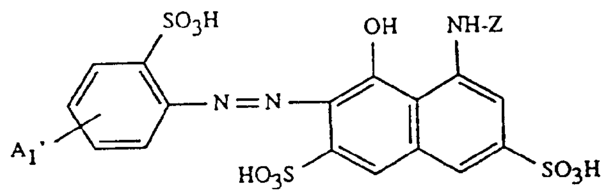

(11)

formules dans lesquelles Z a la signification- déjà indiquée et $A_1$' représente un atome d'hydrogène ou d'halogène ou un groupe alkyle en $C_1$-$C_4$, alcoxy en $C_1$-$C_4$ ou alcanoylamino en $C_2$-$C_4$, conjointement avec un colorant de formule (3) ou (4) et un colorant de formule (5), (6) ou (7).

3. Procédé conforme à la revendication 1, caractérisé en ce que l'on utilise, comme colorant de formule (2), un colorant de formule :

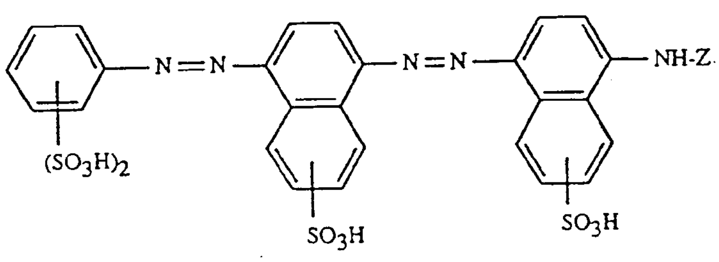

(12)

dans laquelle Z a la signification déjà indiquée, conjointement avec un colorant de formule (3) ou (4) et un colorant de formule (5), (6), ou (7).

4. Procédé conforme à la revendication 1, caractérisé en ce que l'on utilise, comme colorant de formule (3), un colorant de formule :

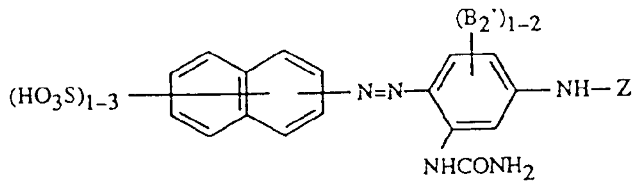

(13)

dans laquelle $(B_2')_{1-2}$ représente 1 à 2 substituants $B_2$' choisis indépendamment l'un de l'autre dans l'ensemble constitué par les atomes d'hydrogène et d'halogène et les groupes nitro, cyano, trifluorométhyle, sulfamyle, carbamyle, alkyle en $C_1$-$C_4$, alcoxy en $C_1$-$C_4$, amino, acétylamino, uréido, hydroxy, carboxy,

sulfométhyle et sulfo, et Z a la signification déjà indiquée,
conjointement avec un colorant de formule (1) ou (2) et un colorant de formule (5), (6) ou (7).

5. Procédé conforme à la revendication 1, caractérisé en ce que l'on utilise, comme colorant de formule (5), un colorant de formule :

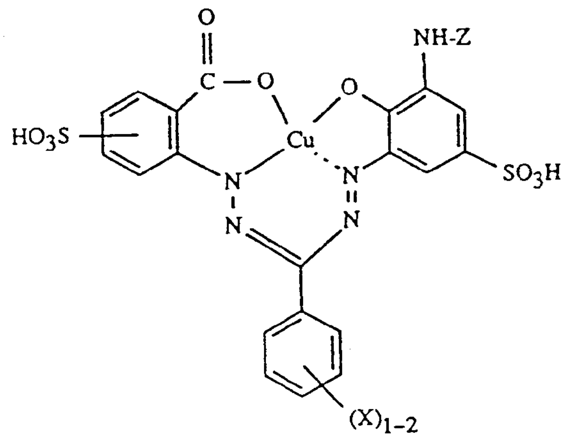

(14)

dans laquelle $(X)_{1-2}$ représente 1 à 2 substituants X, choisis indépendamment l'un de l'autre dans l'ensemble constitué par les atomes d'hydrogène et d'halogène et par les groupes alkyle en $C_1$-$C_4$, alcoxy en $C_1$-$C_4$, alcanoylamino en $C_2$-$C_4$, hydroxy, carboxy et sulfo, et Z a la signification indiquée dans la revendication 1,
conjointement avec un colorant de formule (1) ou (2) et avec un colorant de formule (3) ou (4).

6. Procédé conforme à la revendication 1, caractérisé en ce que l'on utilise, comme colorant de formule (5), un colorant de formule :

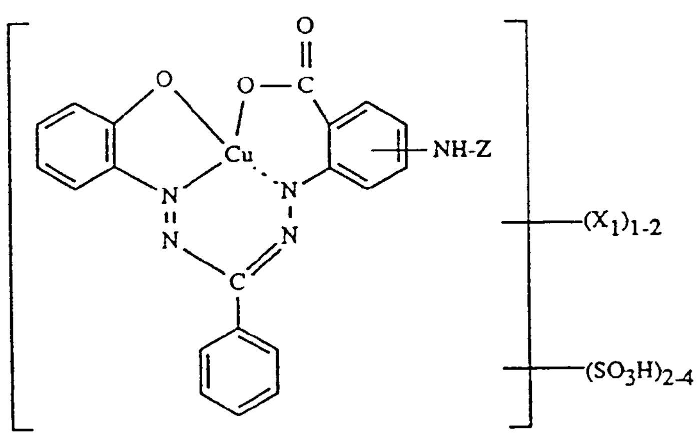

(15)

dans laquelle $(X)_{1-2}$ représente 1 à 2 substituants X, choisis indépendamment l'un de l'autre dans l'ensemble constitué par les atomes d'hydrogène et d'halogène et par les groupes alkyle en $C_1$-$C_4$, alcoxy en $C_1$-$C_4$, alcanoylamino en $C_2$-$C_4$, hydroxy et carboxy, et Z a la signification indiquée dans la revendication 1,
conjointement avec un colorant de formule (1) ou (2) et avec un colorant de formule (3) ou (4).

7. Procédé conforme à la revendication 1, caractérisé en ce que l'on utilise, comme colorant de formule (6), un colorant de formule :

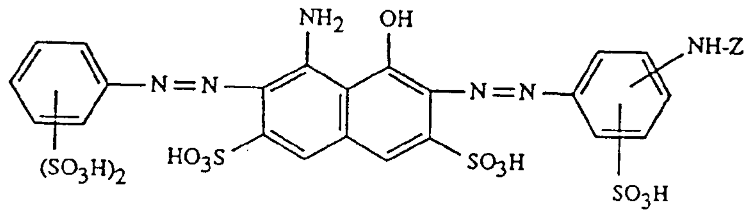

(16)

ou

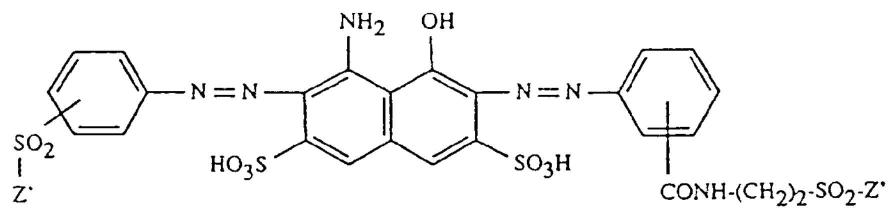

(17)

formules dans lesquelles Z et Z' ont les significations indiquées dans la revendication 1, conjointement avec un colorant de formule (1) ou (2) et avec un colorant de formule (3) ou (4).

**8.** Procédé conforme à l'une des revendications 1 à 7, caractérisé en ce que l'on utilise des colorants dans lesquels Z représente un reste de formule :

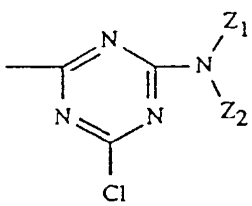

(20)

dans laquelle $Z_1$ et $Z_2$ représentent chacun, indépendamment l'un de l'autre, un atome d'hydrogène, un groupe alkyle en $C_1$-$C_6$ éventuellement substitué, un groupe cycloalkyle en $C_5$-$C_7$ éventuellement substitué, ou un groupe phényle ou naphtyle éventuellement substitué.

**9.** Procédé conforme à la revendication 8, caractérisé en ce que l'on utilise des colorants dans lesquels Z représente un reste de formule (20) et $Z_1$ et $Z_2$ représentent chacun, indépendamment l'un de l'autre, un atome d'hydrogène, un groupe alkyle en $C_1$-$C_6$ qui peut être substitué par un groupe hydroxy, alcoxy en $C_1$-$C_4$, hydroxyalcoxy en $C_1$-$C_4$, sulfo ou sulfato, ou par un atome d'halogène, ou encore par un reste réactif vis-à-vis des fibres, un groupe cycloalkyle en $C_5$-$C_7$ qui peut être substitué par un groupe alkyle en $C_1$-$C_4$, ou un groupe phényle ou naphtyle qui peut être substitué par un atome d'halogène ou par un groupe alkyle en $C_1$-$C_4$, hydroxy- alkyle en $C_1$-$C_4$, alcoxy en $C_1$-$C_4$, alcanoylamino en $C_2$-$C_4$ ou sulfo, ou par un autre reste réactif vis-à-vis des fibres, ou bien dans laquelle $-NZ_1Z_2$ représente un reste de formule (8b) à (8g), ou encore un reste morpholino, pipéridino ou pipérazino.

**10.** Procédé conforme à la revendication 2, caractérisé en ce que l'on utilise, comme colorant de formule (10), un colorant de formule :

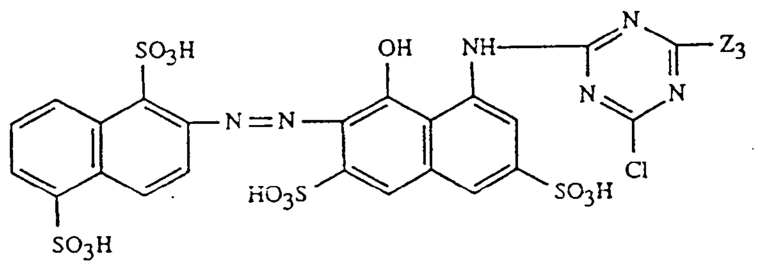

(21)

dans laquelle $Z_3$ représente un groupe morpholino, N-méthylanilino, N-éthylanilino ou

$-NH-(CH_2)_2-O-(CH_2)-SO_2-Z'$

où Z' représente un groupe β-sulfatoéthyle, β-chloroéthyle ou vinyle.

**11.** Procédé conforme à la revendication 2, caractérisé en ce que l'on utilise, comme colorant de formule (11), le colorant de formule :

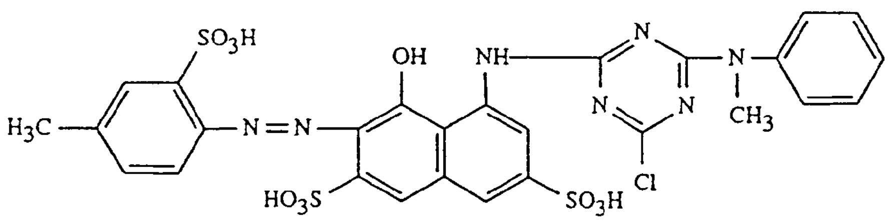

(22)

**12.** Procédé conforme à la revendication 3, caractérisé en ce que l'on utilise, comme colorant de formule (12), un colorant de formule :

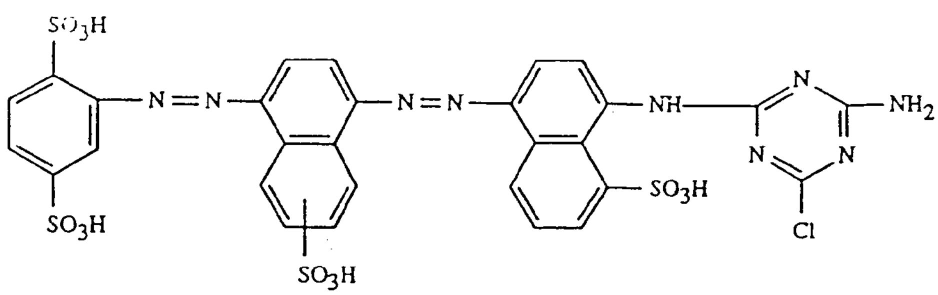

(23)

**13.** Procédé conforme à la revendication 4, caractérisé en ce que l'on utilise, comme colorant de formule (13), un colorant de formule :

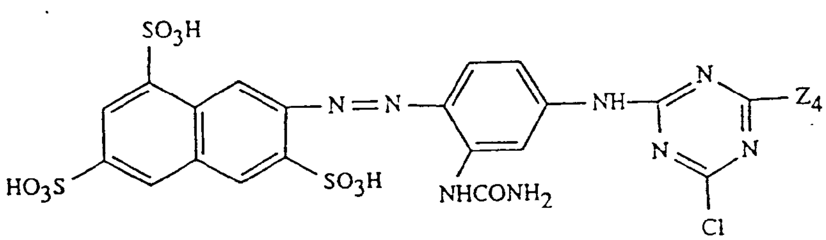

(24)

dans laquelle $Z_4$ représente un groupe β-sulfoethylamino, β-sulfatoéthylamino, morpholino ou $-NH-(CH_2)_2-O-(CH_2)_2-OH$.

**14.** Procédé conforme à la revendication 5, caractérisé en ce que l'on utilise, comme colorant de formule (14), le colorant de formule :

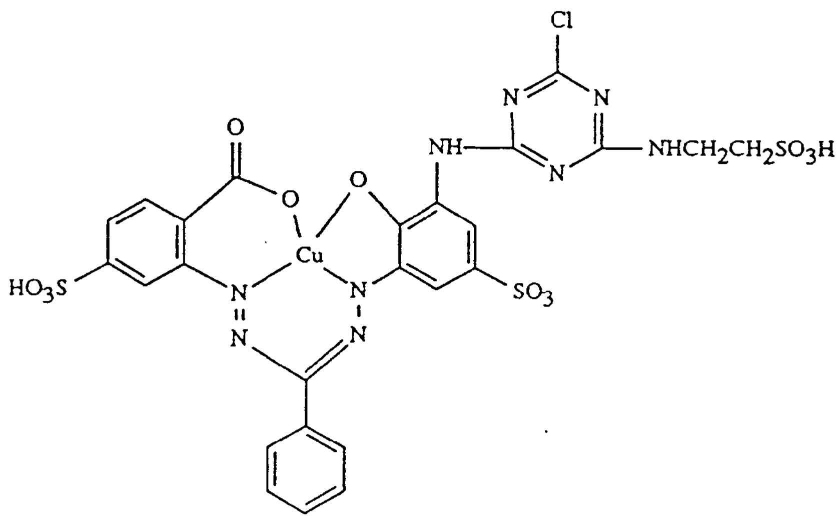

(25)

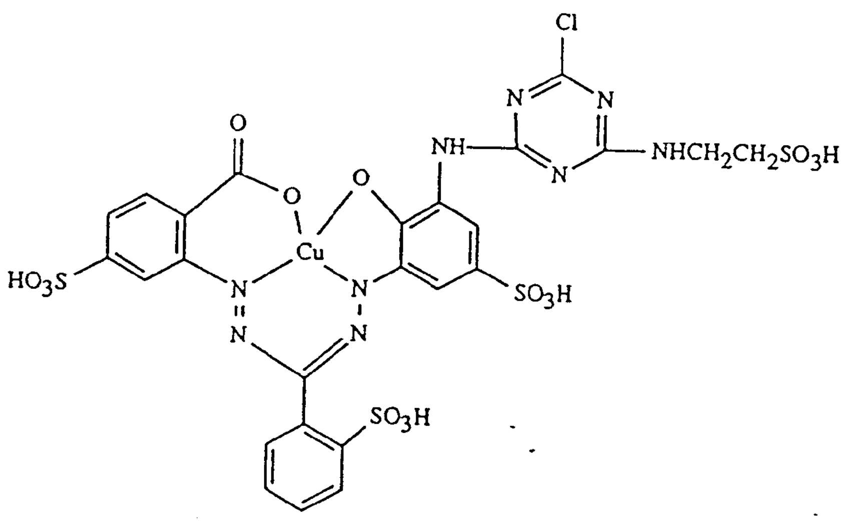

(26)

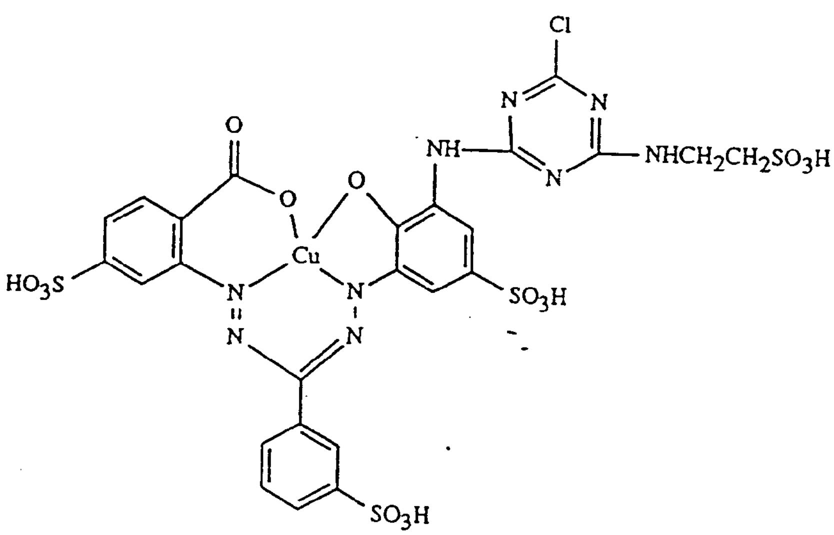

(27)

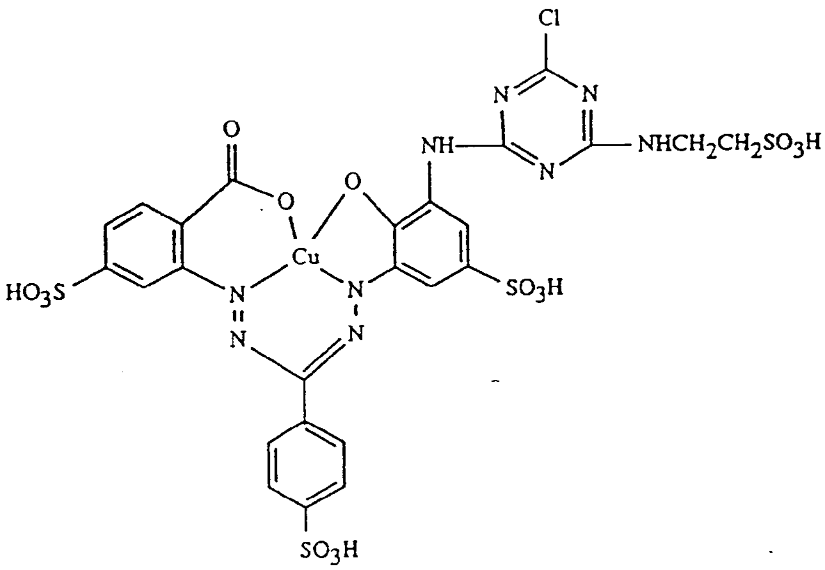

(28),

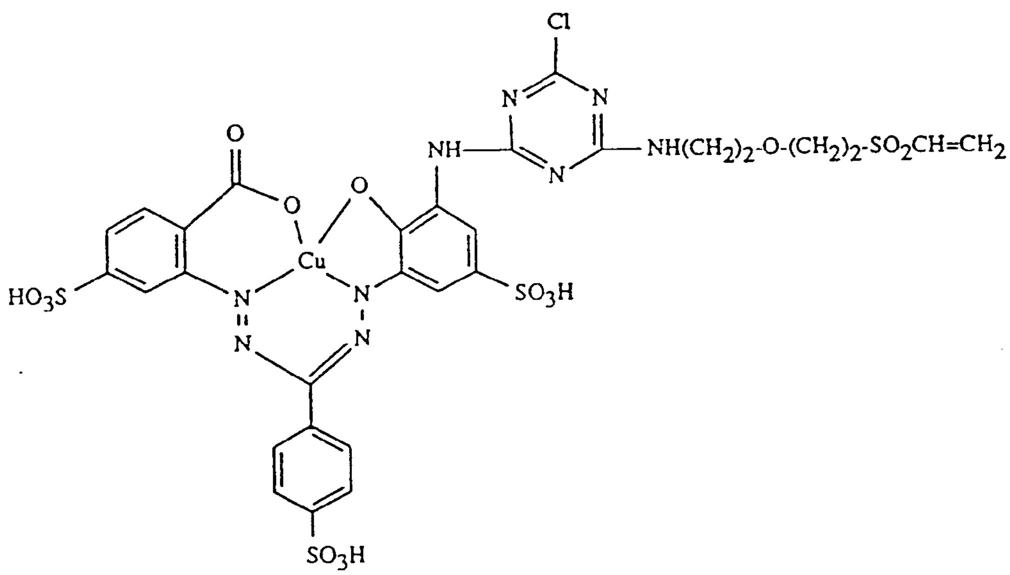

(29),

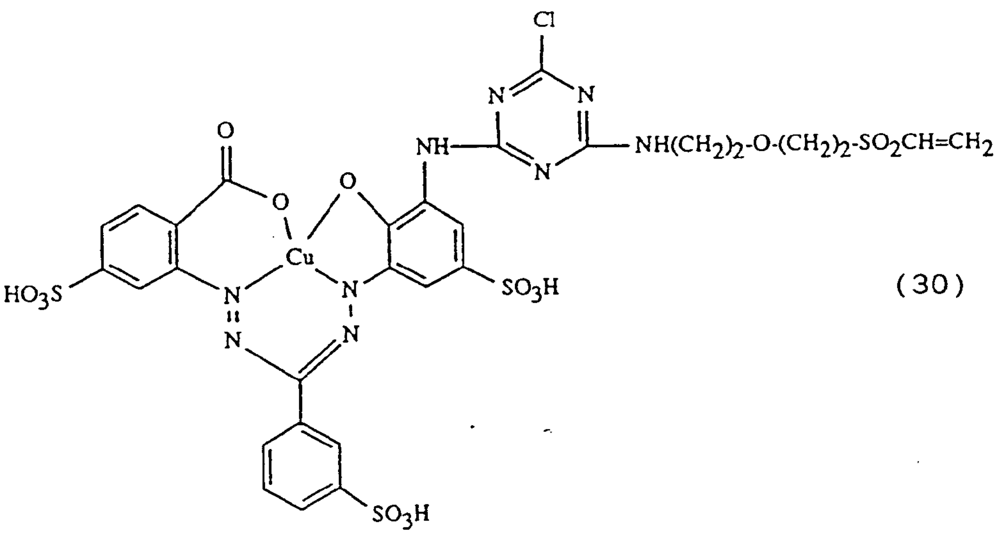

(30)

ou

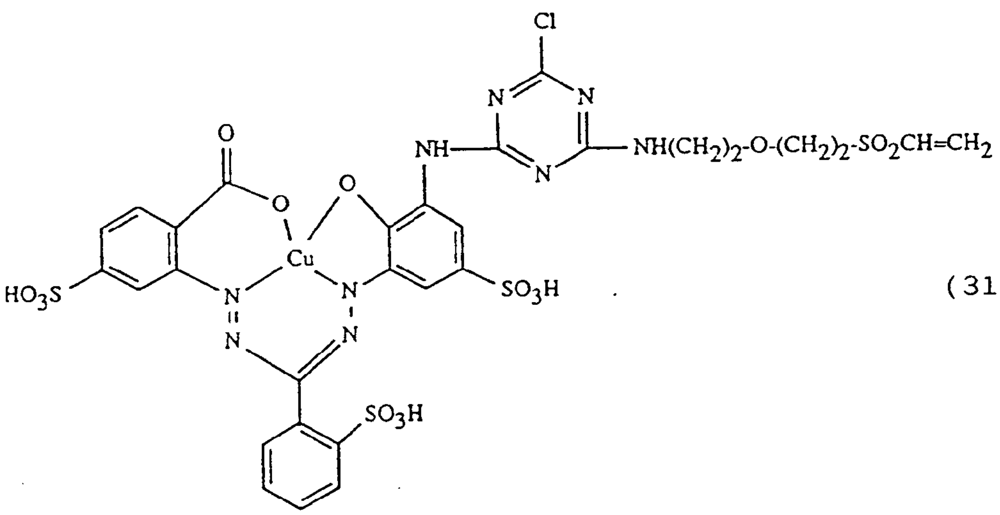

(31)

15. Procédé conforme à la revendication 6, caractérisé en ce que l'on utilise, comme colorant de formule (15), le colorant de formule :

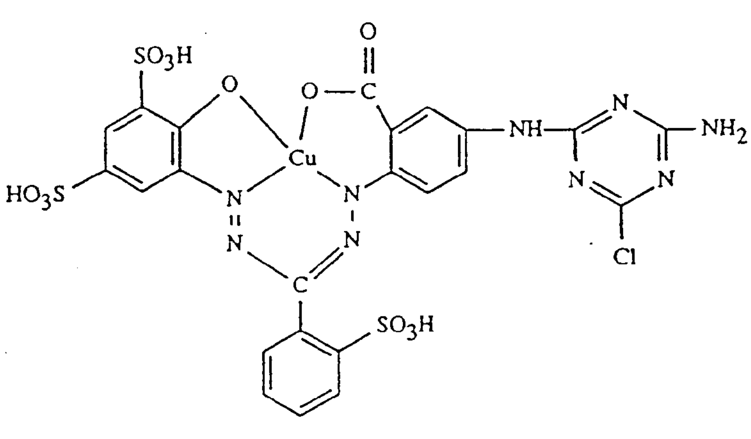

(32)

16. Procédé conforme à la revendication 7, caractérisé en ce que l'on utilise, comme colorant de formule (16), le colorant de formule :

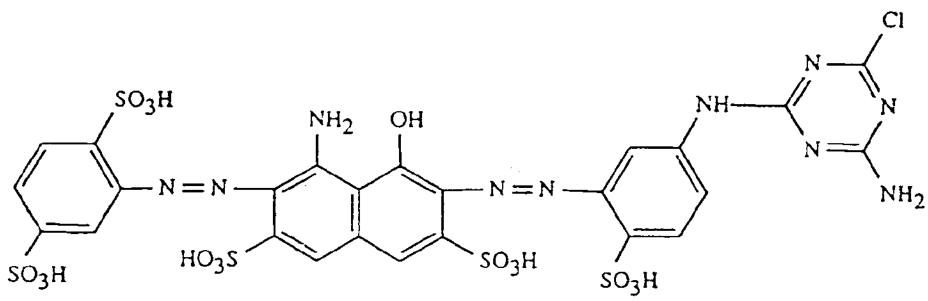
(33)

et, comme colorant de formule (17), un colorant de formule :

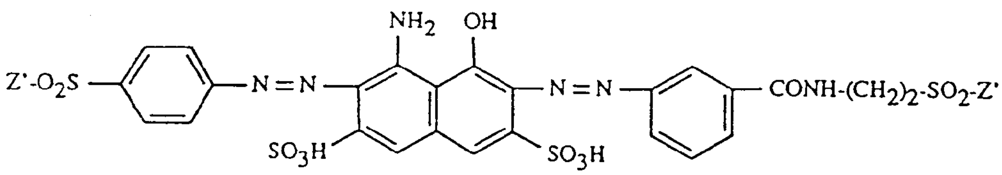
(34)

dans laquelle Z' a la signification indiquée dans la revendication 7.

**17.** Procédé conforme à l'une des revendications 1 à 16, caractérisé en ce que l'on utilise l'un des colorants de formules (35), (36), (37) et (38) :

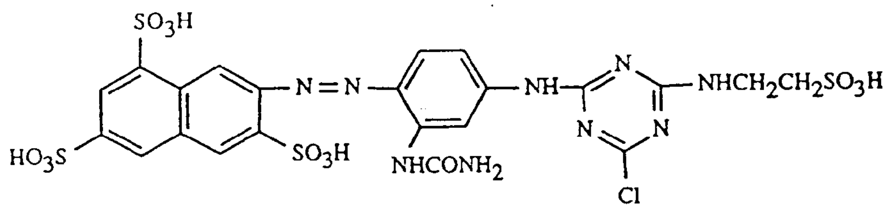
(35)

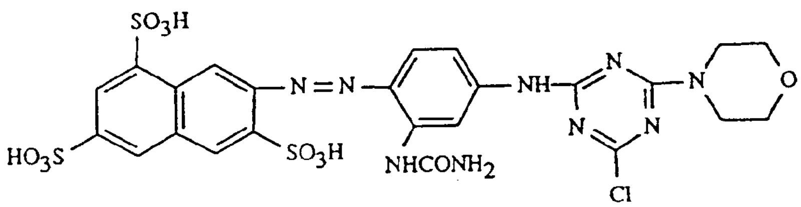
(36)

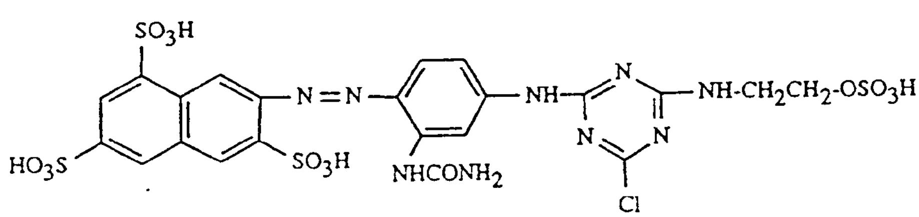
(37)

ou

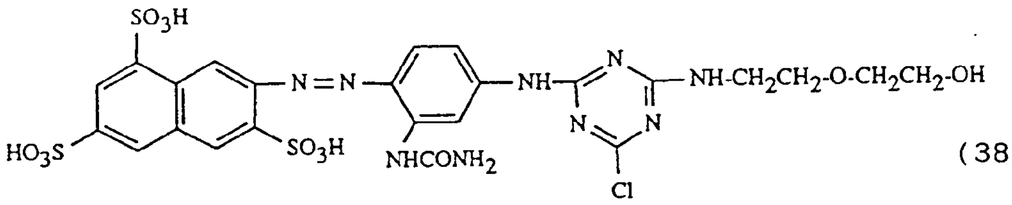

(38)

et l'un des colorants de formules (39), (22), (40), (41) et (42) :

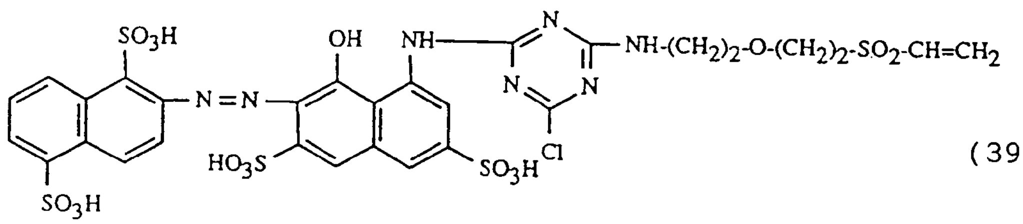

(39)

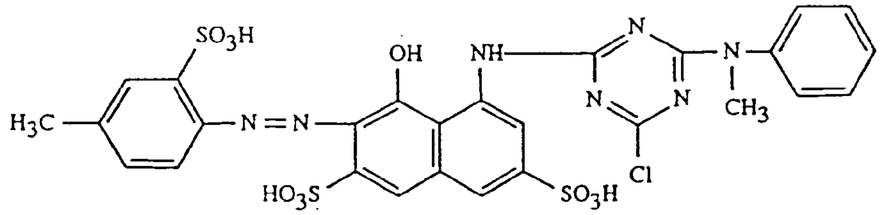

(22)

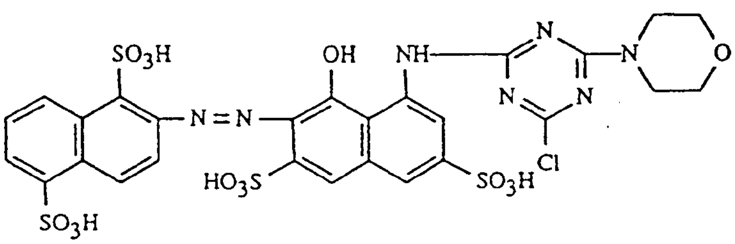

(40)

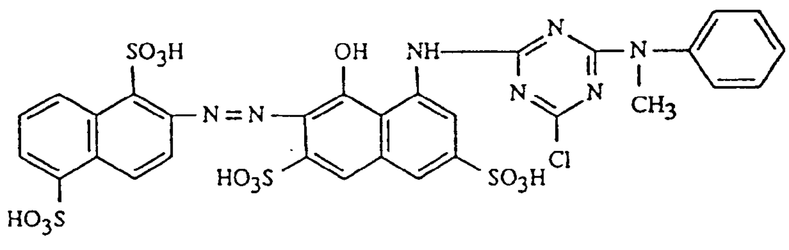

(41)

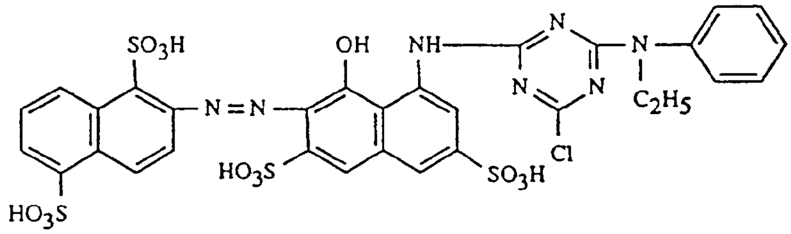

(42)

conjointement avec le colorant de formule :

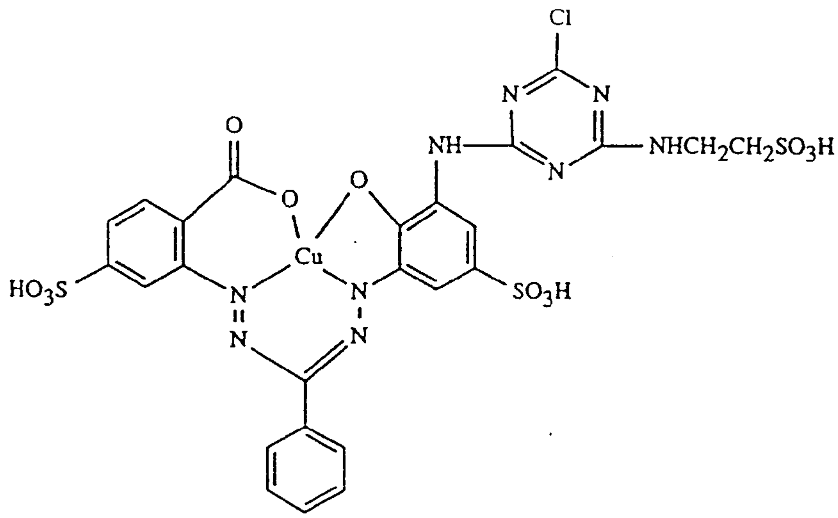

(25)

ou

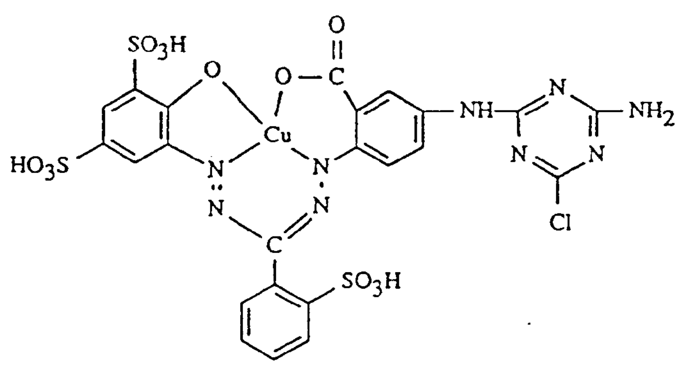

(32)

18. Procédé conforme à l'une des revendications 1 à 16, caractérisé en ce que l'on utilise les colorants de formules :

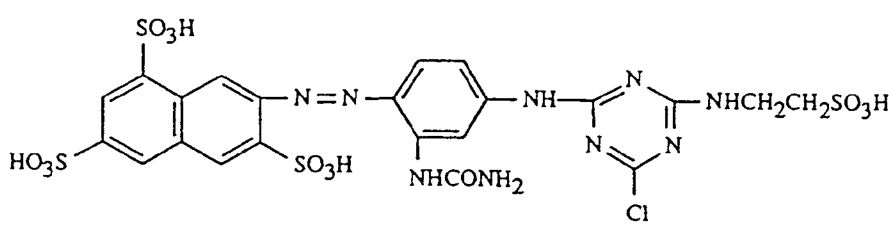

(35)

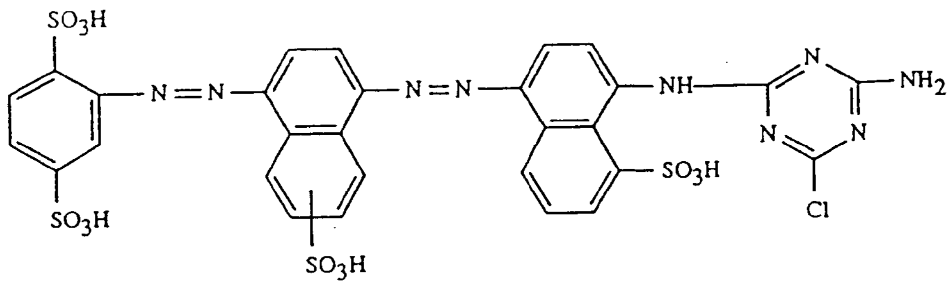

(23)

et

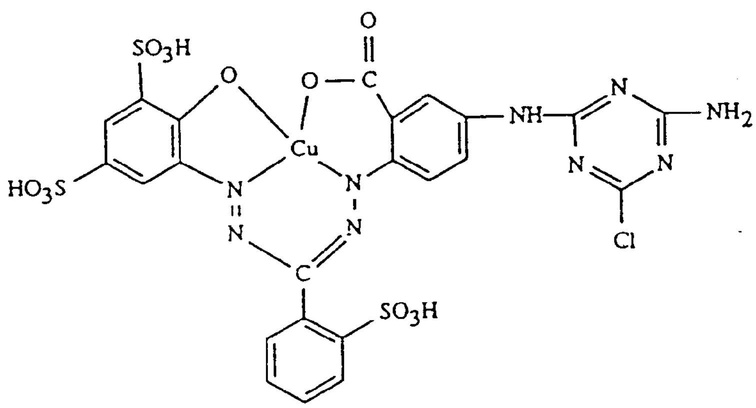

(32)

19. Procédé conforme à l'une des revendications 1 à 16, caractérisé en ce que l'on utilise les colorants de formules :

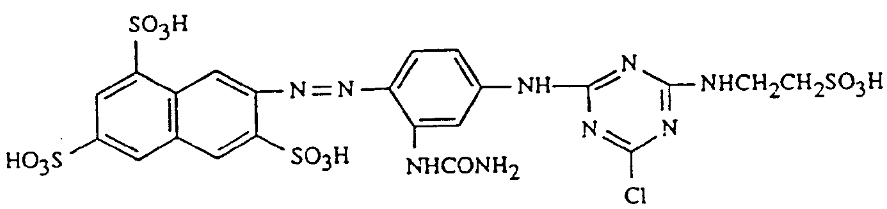

(35)

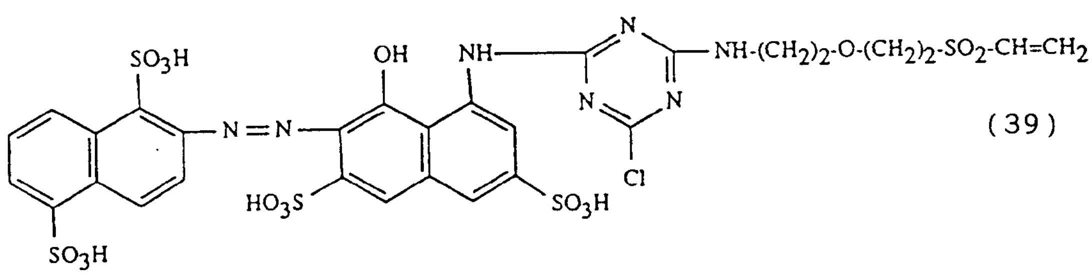

(39)

ou

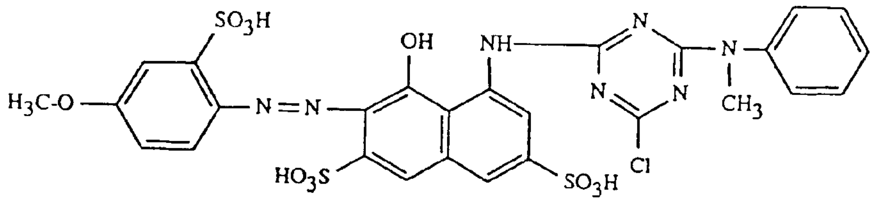

(22)

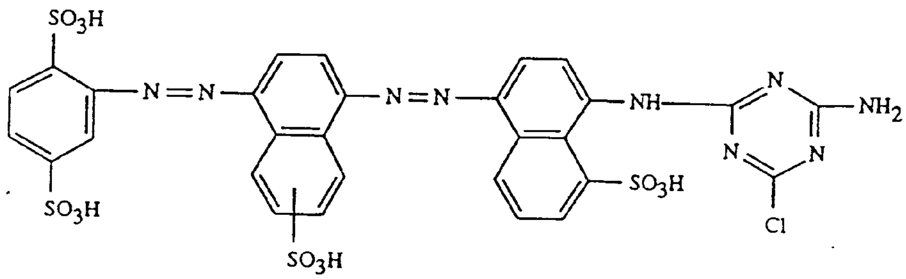

(23)

ou

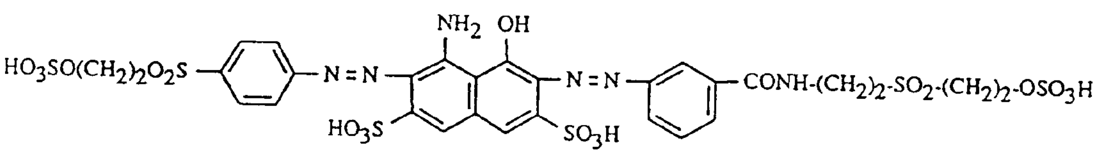

(43)

**20.** Procédé conforme à l'une des revendications 1 à 19, caractérisé en ce que l'on effectue une teinture.

**21.** Procédé conforme à la revendication 20, caractérisé en ce que l'on effectue une teinture en continu.

**22.** Procédé conforme à l'une des revendications 1 à 19, caractérisé en ce que l'on effectue une impression.

**23.** Procédé conforme à l'une des revendications 1 à 19, caractérisé en ce que l'on imprègne des matières fibreuses textiles contenant de la cellulose avec les colorants indiqués dans l'une des revendications 1 à 19, on fait éventuellement subir un post-traitement à la matière imprégnée, et l'on soumet cette matière à un vaporisage ou à une thermofixation, pour fixer les colorants sur les fibres.

**24.** Procédé conforme à l'une des revendications 1 à 21 et 23, caractérisé en ce que l'on utilise les colorants réactifs dans un bain de foulardage pour un rapport de bain valant de 1:0,5 à 1:2 et en particulier de 1:0,5 à 1:0,8.

**25.** Procédé conforme à l'une des revendications 1 à 24, caractérisé en ce que l'on utilise du coton en tant que matière fibreuse.

**26.** Procédé conforme à l'une des revendications 1 à 21, 23 et 24, caractérisé en ce que l'on dépose les colorants réactifs à l'aide d'un bain de foulardage, on fait sécher la matière, en particulier du coton, puis on imprègne la matière avec un bain contenant un alcali de fixage, et on soumet ensuite la matière à un vaporisage.

**27.** Procédé conforme à l'une des revendications 1 à 26, caractérisé en ce que l'on effectue le vaporisage à une température située entre 100°C et 120°C, et en particulier entre 100°C et 105°C.

**28.** Procédé conforme à l'une des revendications 1 à 21, 23, 24 et 25, caractérisé en ce que l'on dépose les colorants réactifs, en présence d'un alcali de fixage, à l'aide d'un bain de foulardage, on fait sécher la matière et on la soumet ensuite à un thermofixage à une température valant de 110°C à 220°C.

**29.** Procédé conforme à l'une des revendications 26 et 28, caractérisé en ce que l'on utilise, comme alcali de fixage, un carbonate alcalin, un hydrogénocarbonate alcalin ou un phosphate alcalin, ou un mélange de ces alcalis de fixage.

**30.** Procédé conforme à la revendication 29, caractérisé en ce que l'on utilise l'alcali de fixage conjointement avec un sel neutre, en particulier du sulfate de sodium ou du chlorure de sodium.

**31.** Procédé conforme à l'une des revendications 1 à 21, caractérisé en ce que l'on imprègne la matière fibreuse avec une solution ou une suspension de colorant qui contient déjà l'alcali de fixage, ainsi qu'éventuellement d'autres adjuvants, puis on emballe la matière de façon étanche à l'air et on la laisse reposer à une température située entre 10°C et 40°C, et en particulier entre 20°C et 30°C, pendant 4 à 80 heures et en particulier pendant 8 à 48 heures.

**32.** Procédé conforme à l'une des revendications 1 à 19 et 22, caractérisé en ce que l'on imprime la matière fibreuse avec une pâte d'impression contenant, outre les colorants réactifs, au moins un agent à action alcaline, éventuellement un solvant, un épaississant, éventuellement un oxydant, ainsi que de l'eau, puis on soumet la matière, éventuellement après séchage, à un vaporisage ou à un thermofixage pour fixer les colorants sur les fibres.

**33.** Matière fibreuse teinte ou imprimée selon le procédé conforme à la revendication 1.